# EUROPEAN PATENT APPLICATION

(11) **EP 2 711 077 A1**
(43) Date of publication of application: **26.03.2014**
(21) Application number: 12786081.5
(22) Date of filing: 16.05.2012
(51) Int. Cl.: B01J 20/22, B01D 53/14, C08K 5/00, C08L 101/00, A23L 3/3436

(54) **OXYGEN ABSORBER**

(30) Priority: 18.05.2011 JP 2011111144; 23.05.2011 JP 2011114563; 16.06.2011 JP 2011134574; 21.06.2011 JP 2011137350; 21.06.2011 JP 2011137355; 21.06.2011 JP 2011137369
(71) Applicant: Mitsubishi Gas Chemical Company, Inc., Tokyo 100-8324 (JP)
(72) Inventor: ISHII, Kentaro, Hiratsuka-shi, Kanagawa 254-0016 (JP); OTAKI, Ryoji, Hiratsuka-shi, Kanagawa 254-0016 (JP); ODA, Takafumi, Hiratsuka-shi, Kanagawa 254-0016 (JP); ARAKAWA, Shota, Hiratsuka-shi, Kanagawa 254-0016 (JP)
(74) Representative: Vossius & Partner
(86) International application number: PCT/JP2012/062450
(87) International publication number: WO 2012/157656

(57) **Abstract**

An oxygen absorber is provided that contains at least one of compounds each having a particular structure, and the oxygen absorber exhibits an oxygen absorbing capability without a metal contained, and is suitable for removing oxygen inside a packaging material packaging foods or the like.

## Description

### TECHNICAL FIELD

The present invention relates to an oxygen absorber that removes oxygen inside a packaging material packaging foods or the like, and more specifically an oxygen absorber that contains a particular compound.

### BACKGROUND ART

Known examples of an oxygen absorber that removes oxygen inside a packaging material packaging foods or the like include one containing iron powder as a major component, one containing ascorbic acid or a salt thereof as a major component, one containing an ethylenic unsaturated compound, such as polybutadiene, and a transition metal catalyst, such as cobalt, one containing a m-xylylenebisphthalimide compound or a m-xylylenebis(1-oxo-2-isoindoline) compound and a transition metal catalyst, such as cobalt, and one containing a hexamethylenebisbenzylamide compound or a m-xylylenebisformamide compound and a transition metal catalyst, such as cobalt (see, for example, PTLs 1 to 5).

The iron based oxygen absorber absorbs oxygen through oxidation reaction of iron and has advantages including inexpensiveness and good handleability.

However, the iron based oxygen absorber requires water on absorbing oxygen, and thus the interior necessarily has high humidity, which restricts an article to be stored. There are other problems that the use of iron powder inhibits the use of a metal detector for inspecting foreign matters, or the iron oxygen absorber cannot be placed in a packaging material before inspecting foreign matters. Furthermore, the use of iron powder causes a further problem that a packaging material containing the oxygen absorber cannot be heated as it is with a microwave oven. Moreover, when the oxygen absorbent is dispersed in a resin, the resin is colored and opaque, and thus the iron oxygen absorbent has a restriction in application, i.e., it cannot be applied to a packaging that requires transparency.

The ascorbic acid based oxygen absorber absorbs oxygen through decomposition reaction of ascorbic acid. Ascorbic acid has been widely used as an antioxidant as a food additive, and the ascorbic acid based oxygen absorber advantageously has high hygiene and safety as compared to the iron based oxygen absorber. Furthermore, the ascorbic acid oxygen absorber is free of the aforementioned problems on the use of a metal detector and a microwave oven, due to the absence of iron powder.

The ascorbic acid based oxygen absorber has a problem of a small oxygen absorption rate as compared to the iron based oxygen absorber. The small oxygen absorption rate may provide a problem that a stored article that is very sensitive to oxygen may be oxidized or decomposed before the oxygen absorber absorbs oxygen. For solving the problem, such an ascorbic acid based oxygen absorber has been known that contains a transition metal for increasing the oxygen absorption rate.

The ethylenic unsaturated compound, such as polybutadiene, the m-xylylenebisphthalimide compound or m-xylylenebis(1-oxo-2-isoindoline) compound, and the hexamethylenebisbenzylamide compound or m-xylylenebismethylamide compound absorb oxygen through oxidation of the compounds themselves, but a transition metal is necessarily used as an oxidation reaction accelerator in order that the compounds absorb oxygen.

### CITATION LIST

### PATENT LITERATURE

PTL 1: JP-A-54-35189
PTL 2: JP-A-54-98348
PTL 3: JP-A-9-291120
PTL 4: JP-A-2010-527389
PTL 5: JP-A-2008-530345

### SUMMARY OF THE INVENTION

### TECHNICAL PROBLEM

However, the ascorbic acid based oxygen absorber may form in some cases an offensive odor in the packaging material due to the decomposition product formed by the mechanism that oxygen is absorbed through decomposition reaction of ascorbic acid. Furthermore, a transition metal may have an adverse affect on the human body and the environment, and therefore an oxygen absorber that is free of a transition metal is demanded from the standpoint of safety. The ethylenic unsaturated compound, such as polybutadiene, has a problem that on mixing the compound with a resin, the resin may suffer coloration or reduction in transparency, and deterioration in moldability due to decrease of the melt viscosity.

An object of the present invention is to provide an oxygen absorber that exhibits a sufficient oxygen absorption capability without a metal contained.

### SOLUTION TO PROBLEM

The present invention provides an oxygen absorber described in the item (1) below.
(1) An oxygen absorber containing: at least one of an amide compound represented by the following general formula (A-I); at least one of an amide compound represented by the following general formula (B-I); at least one of an imide compound represented by the following general formula (C-I); at least one of an ester compound represented by the following general formula (D-I); at least one of a compound represented by the following general formula (E-I); or at least one of a compound represented by any one of the following general formulae (F-I) to (F-III): 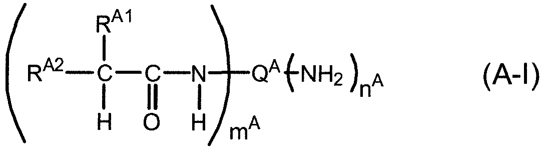 wherein R^{A1} represents a substituent; R^{A2} represents an electron donating group; m^{A} represents an integer of from 1 to 4; n^{A} represents an integer of from 0 to 3, provided that m^{A} + n^{A} is an integer of from 1 to 4; and Q^{A} represents an (m^{A} + n^{A})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, provided that Q^{A} does not contain a carboxy group, 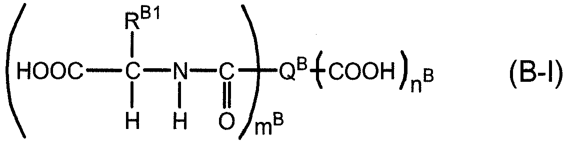 wherein R^{B1} represents a substituent; m^{B} represents an integer of from 1 to 4; n^{B} represents an integer of from 0 to 3, provided that m^{B} + n^{B} is an integer of from 1 to 4; and Q^{B} represents an (m^{B} + n^{B})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, provided that Q^{B} does not contain an amino group, 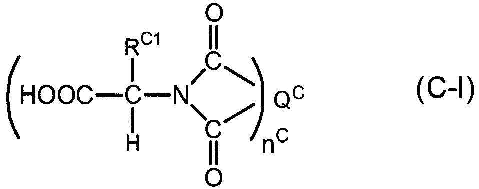 wherein R^{C1} represents a substituent; n^{C} represents an integer of 1 or 2; and Q^{C} represents a 2n^{C}-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, 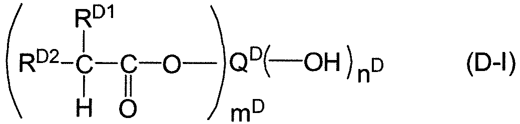 wherein R^{D1} represents a substituent; R^{D2} represents an electron donating group; m^{D} represents an integer of from 1 to 4; n^{D} represents an integer of from 0 to 3, provided that m^{D} + n^{D} is an integer of from 1 to 4; and Q^{D} represents an (m^{D} + n^{D})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, 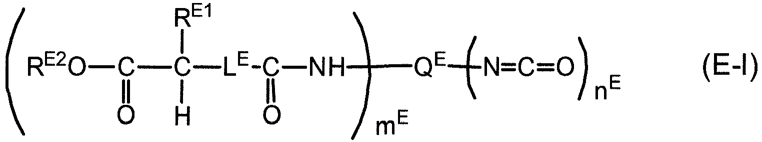 wherein R^{E1} represents a substituent; R^{E2} represents a hydrogen atom or a substituent; L^{E} represents an imino group, an ether group or a sulfide group; m^{E} represents an integer of from 1 to 4; n^{E} represents an integer of from 0 to 3, provided that m^{E} + n^{E} is from 1 to 4; and Q^{E} represents a hydrogen atom or an (m^{E} + n^{E})-valent group, 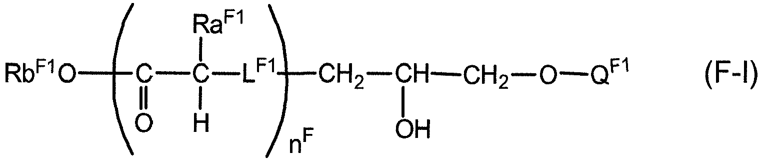 wherein Ra^{F1} represents a substituent; Rb^{F1} represents a hydrogen atom or a substituent; Q^{F1} represents a hydrogen atom or a substituent; L^{F1} represents an imino group, an ether group or a sulfide group; and n^{F} represents an integer of from 1 to 2, 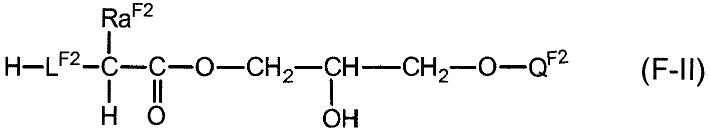 wherein Ra^{F2} represents a substituent; Q^{F2} represents a hydrogen atom or a substituent; and L^{F2} represents an imino group, an ether group, a sulfide group or a substituted or unsubstituted alkylene group, 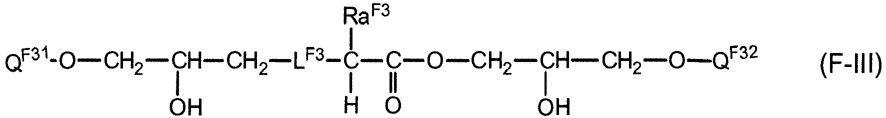 wherein Ra^{F3} represents a substituent; Q^{F31} and Q^{F32} each represent a hydrogen atom or a substituent; and L^{F3} represents an imino group, an ether group or a sulfide group.
   The present invention includes preferred embodiments described in the items (2) to (32) below.
(2) The oxygen absorber according to the item (1), wherein the oxygen absorber contains at least one of an amide compound represented by the general formula (A-I).
(3) The oxygen absorber according to the item (2), wherein in the general formula (A-I), R^{A1} represents a substituted or unsubstituted alkyl group having from 1 to 6 carbon atoms, or a substituted or unsubstituted aryl group having from 6 to 10 carbon atoms; and R^{A2} represents an amino group, a hydroxyl group or a substituted or unsubstituted alkyl group having from 1 to 6 carbon atoms.
(4) The oxygen absorber according to the item (2) or (3), wherein in the general formula (A-I), Q^{A} represents a m-xylylene group.
(5) The oxygen absorber according to the item (3) or (4), wherein in the general formula (A-I), R^{A1} represents a substituted or unsubstituted alkyl group having from 1 to 6 carbon atoms, or a substituted or unsubstituted aryl group having from 6 to 10 carbon atoms; and R^{A2} represents an amino group.
(6) The oxygen absorber according to the item (3) or (4), wherein in the general formula (A-I), R^{A1} represents a substituted or unsubstituted alkyl group having from 1 to 6 carbon atoms; and R^{A2} represents a hydroxyl group.
(7) The oxygen absorber according to the item (3) or (4), wherein in the general formula (A-I), R^{A1} and R^{A2} each independently represent a substituted or unsubstituted alkyl group having from 1 to 6 carbon atoms.
(8) A resin composition containing the oxygen absorber according to any one of the items (2) to (7) in an amount of from 1 to 30% by mass.
(9) The oxygen absorber according to the item (1), wherein the oxygen absorber contains at least one of an amide compound represented by the general formula (B-I).
(10) The oxygen absorber according to the item (9), wherein in the general formula (B-I), R^{B1} represents a substituted or unsubstituted alkyl group having from 1 to 6 carbon atoms, or a substituted or unsubstituted aryl group having from 6 to 10 carbon atoms.
(11) The oxygen absorber according to the item (9) or (10), wherein in the general formula (B-I), Q^{B} represents a linear or branched and saturated or unsaturated aliphatic hydrocarbon group having from 6 to 12 carbon atoms.
(12) A resin composition containing the oxygen absorber according to any one of the items (9) to (11) in an amount of from 1 to 30% by mass.
(13) The oxygen absorber according to the item (1), wherein the oxygen absorber contains at least one of an imide compound represented by the general formula (C-I).
(14) The oxygen absorber according to the item (13), wherein in the general formula (C-I), R^{C1} represents a substituted or unsubstituted alkyl group having from 1 to 6 carbon atoms, or a substituted or unsubstituted aryl group having from 6 to 10 carbon atoms.
(15) The oxygen absorber according to the item (13) or (14), wherein in the general formula (C-I), Q^{C} represents an ethylene group.
(16) A resin composition containing the oxygen absorber according to any one of the items (13) to (15) in an amount of from 1 to 30% by mass.
(17) The oxygen absorber according to the item (1), wherein the oxygen absorber contains at least one of an ester compound represented by the general formula (D-I).
(18) The oxygen absorber according to the item (17), wherein in the general formula (D-I), R^{D1} represents a substituted or unsubstituted alkyl group having from 1 to 6 carbon atoms, or a substituted or unsubstituted aryl group having from 6 to 10 carbon atoms.
(19) The oxygen absorber according to the item (17) or (18), wherein in the general formula (D-I), R^{D2} represents an amino group.
(20) The oxygen absorber according to any one of the items (17) to (19), wherein in the general formula (D-I), Q^{D} represents a linear or branched and saturated or unsaturated aliphatic hydrocarbon group having from 2 to 6 carbon atoms.
(21) A resin composition containing the oxygen absorber according to any one of the items (17) to (20) in an amount of from 1 to 30% by mass.
(21) The oxygen absorber according to the item (1), wherein the oxygen absorber contains at least one of a compound represented by the general formula (E-I).
(22) The oxygen absorber according to the item (21), wherein L^{E} represents an imino group.
(23) The oxygen absorber according to the item (21) or (22), wherein Q^{E} represents a m-xylylene group.
(24) The oxygen absorber according to any one of the items (21) to (23), wherein R^{E1} represents a substituted or unsubstituted alkyl group having from 1 to 6 carbon atoms, or a substituted or unsubstituted aryl group having from 6 to 10 carbon atoms.
(25) The oxygen absorber according to any one of the items (21) to (24), wherein R^{E2} represents a hydrogen atom or a substituted or unsubstituted alkyl group having from 1 to 4 carbon atoms.
(26) A resin composition containing the oxygen absorber according to any one of the items (21) to (25) in an amount of from 1 to 30% by mass.
(27) The oxygen absorber according to the item (1), wherein the oxygen absorber contains at least one of a compound represented by any one of the general formulae (F-I) to (F-III).
(28) The oxygen absorber according to the item (27), wherein L^{F1}, L^{F2} and L^{F3} each represent an imino group.
(29) The oxygen absorber according to the item (27) or (28), wherein Ra^{F1}, Ra^{F2} and Ra^{F3} each represent a substituted or unsubstituted alkyl group having from 1 to 6 carbon atoms, or a substituted or unsubstituted aryl group having from 6 to 10 carbon atoms.
(30) The oxygen absorber according to any one of the items (27) to (29), wherein Rb^{F1} represents a hydrogen atom or a substituted or unsubstituted alkyl group having from 1 to 4 carbon atoms.
(31) The oxygen absorber according to any one of the items (27) to (30), wherein Q^{F1}, Q^{F2}, Q^{F31} and Q^{F32} each represent a hydrogen atom, a substituted or unsubstituted alkyl group having from 1 to 24 carbon atoms, a substituted or unsubstituted alkenyl group having from 1 to 6 carbon atoms, or a substituted or unsubstituted aryl group having from 6 to 10 carbon atoms.
(32) A resin composition containing the oxygen absorber according to any one of the items (27) to (31) in an amount of from 1 to 30% by mass.

### ADVANTAGEOUS EFFECTS OF THE INVENTION

The oxygen absorber of the present invention exhibits a sufficient oxygen absorption capability without a metal contained. A stored article in a packaging material may be kept in a favorable state by mixing the oxygen absorber of the present invention in the packaging material or by placing the oxygen absorber, which has been filled in a small bag or the like, inside the packaging material.

### BRIEF DESCRIPTION OF DRAWINGS

[Fig. 1]

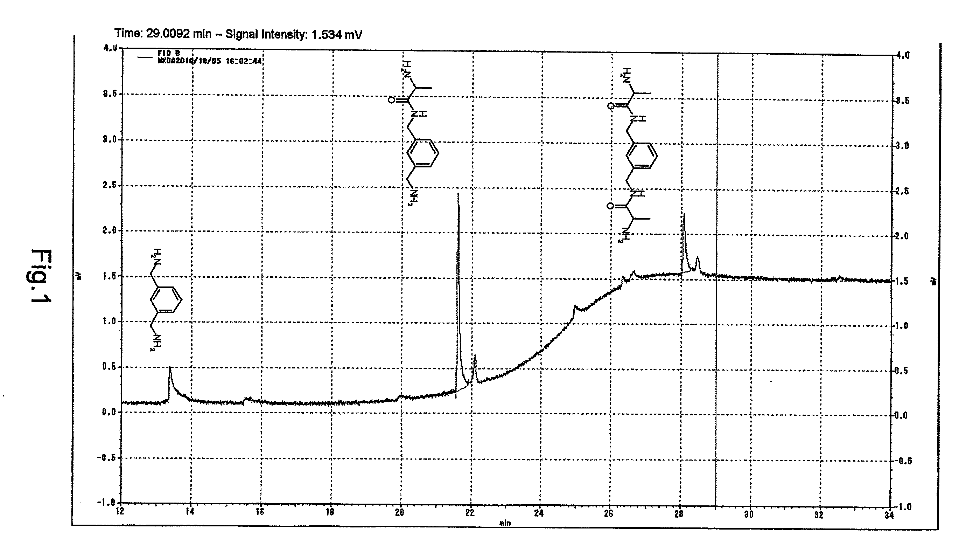

   Fig. 1 is a GC chart of the amide compound A-1 obtained in Example A-1.
[Fig. 2]

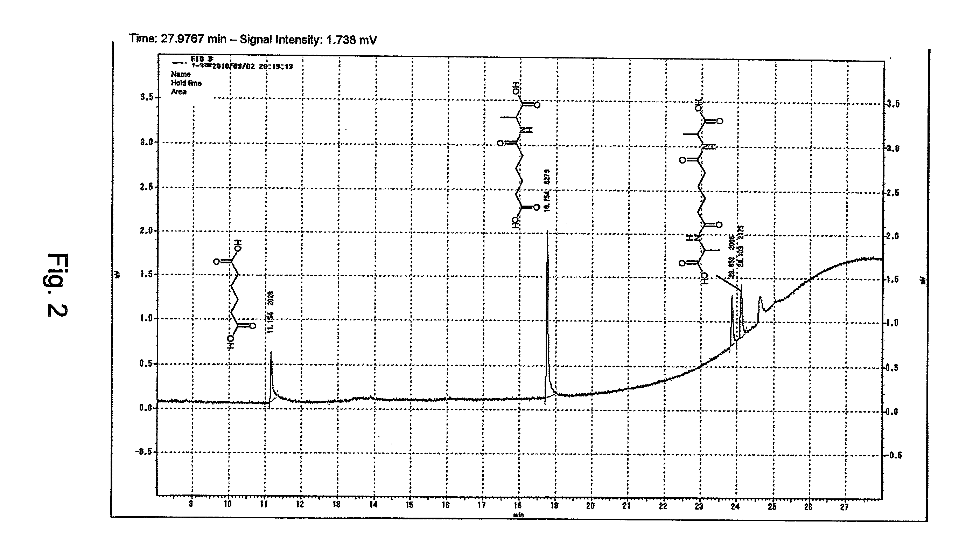

   Fig. 2 is a GC chart of the amide compound B-1 obtained in Example B-1.
[Fig. 3]

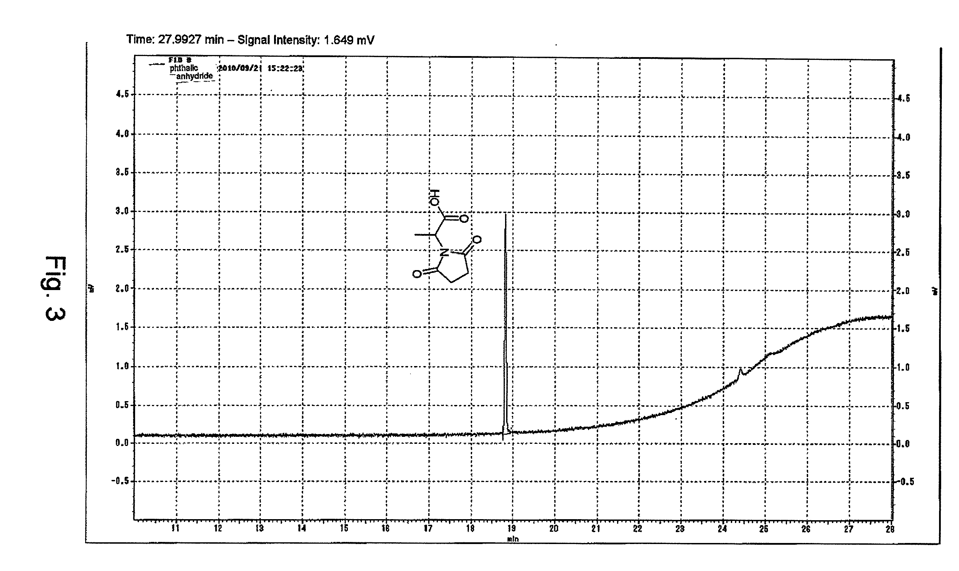

   Fig. 3 is a GC chart of the imide compound C-1 obtained in Example C-1.
[Fig. 4]

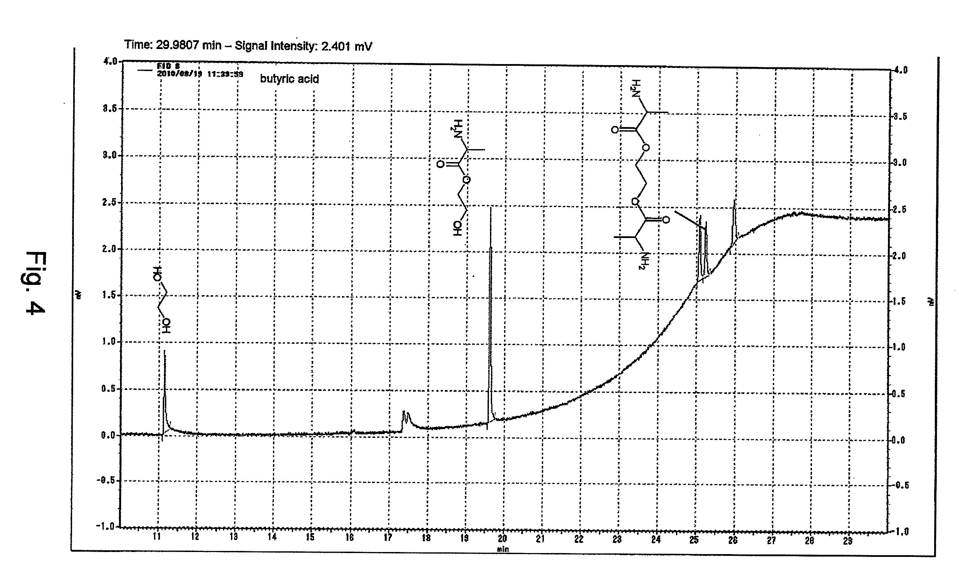

   Fig. 4 is a GC chart of the ester compound D-1 obtained in Example D-1.
[Fig. 5]

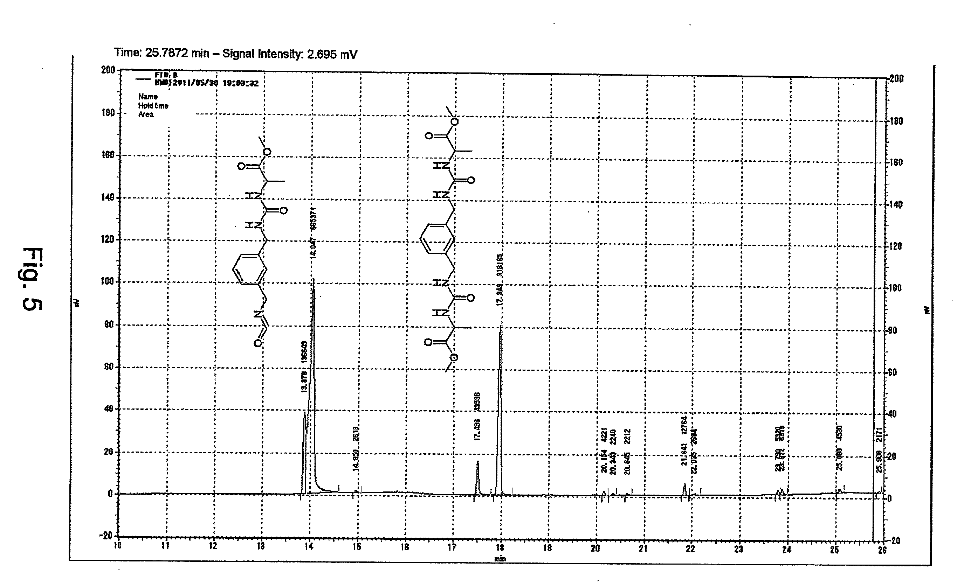

   Fig. 5 is a GC chart of the compound E-1 obtained in Example E-1.
[Fig. 6]

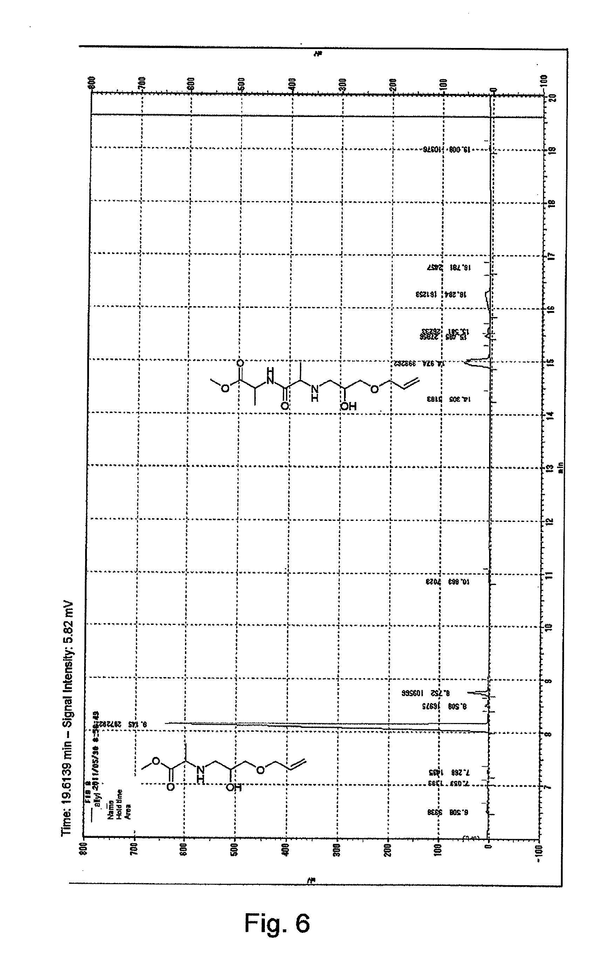

   Fig. 6 is a GC chart of the compound F-1 obtained in Example F-1.

### DESCRIPTION OF EMBODIMENTS

The oxygen absorber of the present invention contains: at least one of an amide compound represented by the general formula (A-I); at least one of an amide compound represented by the general formula (B-I); at least one of an imide compound represented by the general formula (C-I); at least one of an ester compound represented by the general formula (D-I); at least one of a compound represented by the general formula (E-I); or at least one of a compound represented by any one of the general formulae (F-I) to (F-III).

The oxygen absorber containing at least one of an amide compound represented by the general formula (A-I) (which will be hereinafter referred to as an oxygen absorber (A)); the oxygen absorber containing at least one of an amide compound represented by the general formula (B-I) (which will be hereinafter referred to as an oxygen absorber (B)); the oxygen absorber containing at least one of an imide compound represented by the general formula (C-I) (which will be hereinafter referred to as an oxygen absorber (C)); the oxygen absorber containing at least one of an ester compound represented by the general formula (D-I) (which will be hereinafter referred to as an oxygen absorber (D)); the oxygen absorber containing at least one of a compound represented by the general formula (E-I) (which will be hereinafter referred to as an oxygen absorber (E)); and the oxygen absorber containing at least one of a compound represented by any one of the general formulae (F-I) to (F-III) (which will be hereinafter referred to as an oxygen absorber (F)) will be described in detail below.

### Oxygen Absorber (A)

The oxygen absorber (A) contains at least one of an amide compound represented by the following general formula (A-I): 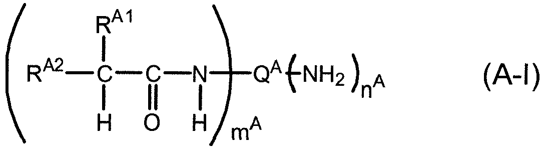 wherein R^{A1} represents a substituent; R^{A2} represents an electron donating group; m^{A} represents an integer of from 1 to 4; n^{A} represents an integer of from 0 to 3, provided that m^{A} + n^{A} is an integer of from 1 to 4; and Q^{A} represents an (m^{A} + n^{A})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, provided that Q^{A} does not contain a carboxyl group.

R^{A1} represents a substituent, and examples of the substituent include a halogen atom (such as a chlorine atom, a bromine atom and an iodine atom), an alkyl group (such as a linear, branched or cyclic alkyl group having from 1 to 15 carbon atoms, and preferably having from 1 to 6 carbon atoms, e.g., a methyl group, an ethyl group, a n-propyl group, an isopropyl group, a t-butyl group, a n-octyl group, a 2-ethylhexyl group, a cyclopropyl group and a cyclopentyl group), an alkenyl group (such as a linear, branched or cyclic alkenyl group having from 2 to 10 carbon atoms, and preferably having from 2 to 6 carbon atoms, e.g., a vinyl group and an allyl group), an alkynyl group (such as an alkynyl group having from 2 to 10 carbon atoms, and preferably having from 2 to 6 carbon atoms, e.g., an ethynyl group and a propargyl group), an aryl group (such as an aryl group having from 6 to 16 carbon atoms, and preferably having from 6 to 10 carbon atoms, e.g., a phenyl group and a naphthyl group), a heterocyclic group (such as a monovalent group having from 1 to 12 carbon atoms, and preferably having from 2 to 6 carbon atoms, which is obtained by removing one hydrogen atom from a 5-membered or 6-membered aromatic or non-aromatic heterocyclic compound, e.g., a 1-pyrazolyl group, a 1-imidazolyl group and a 2-furyl group), a cyano group, a hydroxyl group, a nitro group, an alkoxy group (such as a linear, branched or cyclic alkoxy group having from 1 to 10 carbon atoms, and preferably having from 1 to 6 carbon atoms, e.g., a methoxy group and an ethoxy group), an aryloxy group (such as an aryloxy group having from 6 to 12 carbon atoms, and preferably having from 6 to 8 carbon atoms, e.g., a phenoxy group), an acyl group (such as a formyl group, an alkylcarbonyl group having from 2 to 10 carbon atoms, and preferably having from 2 to 6 carbon atoms, and an arylcarbonyl group having from 7 to 12 carbon atoms, and preferably having from 7 to 9 carbon atoms, e.g., an acetyl group, a pivaloyl group and a benzoyl group), an amino group (such as an amino group, an alkylamino group having from 1 to 10 carbon atoms, and preferably having from 1 to 6 carbon atoms, an anilino group having from 6 to 12 carbon atoms, and preferably having from 6 to 8 carbon atoms, and a heterocyclic amino group having from 1 to 12 carbon atoms, and preferably having from 2 to 6 carbon atoms, e.g., an amino group, a methylamino group and an anilino group), a mercapto group, an alkylthio group (such as an alkylthio group having from 1 to 10 carbon atoms, and preferably having from 1 to 6 carbon atoms, e.g., a methylthio group and an ethylthio group), an arylthio group (such as an arylthio group having from 6 to 12 carbon atoms, and preferably having from 6 to 8 carbon atoms, e.g., a phenylthio group), a heterocyclic thio group (such as a heterocyclic thio group having from 2 to 10 carbon atoms, and preferably having from 1 to 6 carbon atoms, e.g., a 2-benzothiazolylthio group), and an imide group (such as an imide group having from 2 to 10 carbon atoms, and preferably having from 4 to 8 carbon atoms, e.g., an N-succinimide group and an N-phthalimide group).

R^{A2} represents an electron donating group, and examples thereof include an amino group (such as an amino group, an alkylamino group having from 1 to 10 carbon atoms, and preferably having from 1 to 6 carbon atoms, an anilino group having from 6 to 12 carbon atoms, and preferably having from 6 to 8 carbon atoms, and a heterocyclic amino group having from 1 to 12 carbon atoms, and preferably having from 2 to 6 carbon atoms, e.g., an amino group, a methylamino group and an anilino group), a hydroxyl group, an alkoxy group (such as a linear, branched or cyclic alkoxy group having from 1 to 10 carbon atoms, and preferably having from 1 to 6 carbon atoms, e.g., a methoxy group and an ethoxy group), and an alkyl group (such as a linear, branched or cyclic alkyl group having from 1 to 15 carbon atoms, and preferably having from 1 to 6 carbon atoms, e.g., a methyl group, an ethyl group, a n-propyl group, an isopropyl group, a t-butyl group, a n-octyl group, a 2-ethylhexyl group, a cyclopropyl group and a cyclopentyl group).

The aforementioned functional groups that has a hydrogen atom may be further substituted by the aforementioned groups, and examples thereof include an alkyl group substituted by a hydroxyl group (such as a hydroxyethyl group), an alkyl group substituted by an alkoxy group (such as a methoxyethyl group), an alkyl group substituted by an aryl group (such as a benzyl group), an aryl group substituted by an alkyl group (such as a p-tolyl group), and an aryloxy group substituted by an alkyl group (such as a 2-methylphenoxy group), but the groups are not limited to these examples.

In the case where the functional group is further substituted, the numbers of carbon atoms for the aforementioned groups do not contain the carbon atoms of the substituent that is further substituted. For example, a benzyl group is regarded as an alkyl group having one carbon atom substituted by a phenyl group, but is not regarded as an alkyl group substituted by a phenyl group having 7 carbon atoms. The descriptions for the number of carbon atoms hereinafter should be construed similarly unless otherwise indicated.

R^{A1} is preferably a substituted or unsubstituted alkyl group or a substituted or unsubstituted aryl group, more preferably a substituted or unsubstituted alkyl group having from 1 to 6 carbon atoms or a substituted or unsubstituted aryl group having from 6 to 10 carbon atoms, and further preferably a substituted or unsubstituted alkyl group having from 1 to 4 carbon atoms or a substituted or unsubstituted phenyl group.

Preferred specific examples of R^{A1} include a methyl group, an ethyl group, a n-propyl group, an isopropyl group, a n-butyl group, a t-butyl group, a 1-methylpropyl group, a 2-methylpropyl group, a hydroxymethyl group, a 1-hydroxyethyl group, a mercaptomethyl group, a methylsulfanylethyl group, a phenyl group, a naphthyl group, a benzyl group and a 4-hydroxybenzyl group, but are not limited to these groups. Among these, a methyl group, an ethyl group, an isopropyl group, a t-butyl group, a 2-methylpropyl group and a benzyl group are more preferred.

R^{A2} is preferably an amino group, a hydroxyl group or an alkyl group, more preferably an amino group, a hydroxyl group or a substituted or unsubstituted alkyl group having from 1 to 6 carbon atoms, and further preferably an amino group, from the standpoint of the oxygen absorbability.

Q^{A} represents a group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, and is an (m^{A} + n^{A})-valent group that is formed by removing (m^{A} + n^{A}) hydrogen atoms from a mother compound containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group. The aromatic hydrocarbon group, the saturated or unsaturated alicyclic hydrocarbon group, the linear or branched and saturated or unsaturated aliphatic hydrocarbon group and the heterocyclic group each may be substituted or unsubstituted. Q^{A} may contain a hetero atom, and may contain an ether group, a sulfide group, a carbonyl group, a hydroxy group, an amino group, a sulfoxide group, a sulfone group or the like, but Q^{A} does not contain a carboxy group.

Examples of the mother compound that contains an aromatic hydrocarbon group include benzene, naphthalene, anthracene, phenanthrene, pyrene, biphenyl, diphenyl ether, diphenyl sulfide, diphenyl sulfoxide, diphenyl sulfone, a diphenylalkane, (such as diphenylmethane, diphenylethane and diphenylpropane), diphenylmethanone and anthraquinone. Examples of the group that contains an aromatic hydrocarbon group include a phenyl group, a benzyl group, an o-phenylene group, a m-phenylene group, a p-phenylene group, an o-xylylene group, a m-xylylene group, a p-xylylene group, a naphthyl group, a naphthylene group, an anthracenyl group, an anthracenylene group, a phenanthrenyl group, a phenanthrenylene group, a pyrenyl group, a pyrenylene group, a biphenylyl group, a biphenylylene group, a phenoxyphenyl group, an oxydiphenylene group, a phenylthiophenyl group, a thiodiphenylene group, a phenylsulfinylphenyl group, a sulfinyldiphenylene group, a phenylsulfonylphenyl group, a sulfonyldiphenylene group, an alkylenediphenyl group (such as a methylenediphenylene group, an ethylenediphenylene group and a propylenediphenylene group), a phenylcarbonylphenyl group, a carbonyldiphenylene group, an anthraquinonyl group and an anthraquinonylene group.

Examples of the mother compound that contains a saturated or unsaturated alicyclic hydrocarbon group include a compound containing a 3-membered to 6-membered ring, for example, cyclopropane, cyclobutane, cyclopentane, cyclohexane and a dicyclohexylalkane (such as dicyclohexylmethane, dicyclohexylethane and dicyclohexylpropane). Examples thereof also include a compound containing a condensed ring, such as decahydronaphthalene, and a compound containing a crosslinked structure, such as norbomane and adamantane. Examples of the group that contains a saturated or unsaturated alicyclic hydrocarbon group include a cyclopropyl group, a cyclobutyl group, a cyclopentyl group, a cyclohexyl group, a cyclohexylene group, a cyclohexylenemethylene group, a methylcyclohexyl group, an alkylenedicyclohexylene group (such as a methylenedicyclohexylene group, an ethylenedicyclohexylene group and a propylenedicyclohexylene group), a decahydronaphthalenyl group, a decahydronaphthalenylene group, a norbomyl group and an adamantanyl group.

Examples of the mother compound that contains a linear or branched and saturated or unsaturated aliphatic hydrocarbon group include a linear or branched alkane having from 1 to 12 carbon atoms (such as methane, ethane, propane, n-butane, n-hexane, n-octane, n-nonane, n-decane, n-dodecane, 2-methylpentane and 2,2,4-trimethylhexane, 2,4,4-trimethylhexane), an alkane containing an ether group (such as dipropyl ether, 1,4-butanediol dipropyl ether, polyethylene oxide and polypropylene oxide), an alkane containing an amino group (such as diethylamine, dihexylamine, triethylamine and polyethyleneamine), and an alkane containing a sulfide group (such as methyl propyl sulfide). Examples of the group that contains a linear or branched and saturated or unsaturated aliphatic hydrocarbon group include a linear or branched alkyl group having from 1 to 12 carbon atoms (such as a methyl group, an ethyl group, a n-propyl group, a n-butyl group, a n-hexyl group and a n-octyl group), a linear or branched alkylene group having from 1 to 12 carbon atoms (such as a methylene group, an ethylene group, a n-propylene group, a n-butylene group, a n-hexylene group, a n-octylene group, a n-nonylene group, a n-decylene group, a n-dodecylene group, a 2-methyl-1,5-penthylene group, a 2,2,4-trimethylhexylene group and a 2,4,4-trimethylhexylene group), an alkylene group containing an ether group (such as an oxydipropylene group, a tetramethylenebis(oxytrimethylene) group, a polyoxyethylene group and a polyoxypropylene group), an alkylene group containing an amino group (such as an aminodiethylene group, an aminodihexylene group, an aminotriethylene group and a polyethyleneamine group), and an alkylene group containing a sulfide group (such as a methylthiopropylene group).

Examples of the mother compound that contains a heterocyclic group include a 5- or 6-membered heterocyclic compound, such as pyrrolidine, piperidine, pyridine, pyrimidine and triazine, and a condensed heterocyclic compound, such as quinoline and isoquinoline. Examples of the group that contains a heterocyclic group include a pyrrolidinyl group, a piperidinyl group, a pyridinyl group, a pyridinylene group, a pyrimidinyl group, a pyrimidinylene group, a triazinyl group, a triazinylene group, a quinolinyl group, a quinolinylene group and an isoquinolinyl group.

m^{A} represents an integer of from 1 to 4, and n^{A} represents an integer of from 0 to 3. m^{A} + n^{A} represents the valency of Q^{A}, and represents an integer of from 1 to 4. Preferably, m^{A} represents an integer of from 2 to 4, and n^{A} is 0.

Preferred examples of the amide compound represented by the general formula (A-I) are shown below, but the present invention is not limited to these examples.

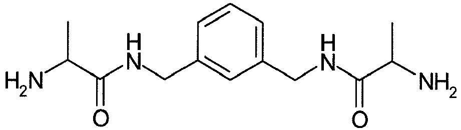

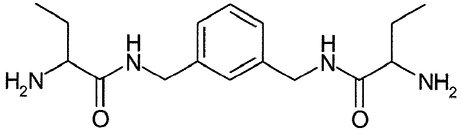

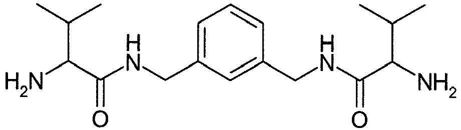

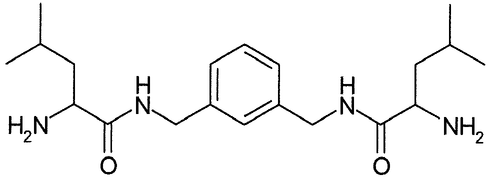

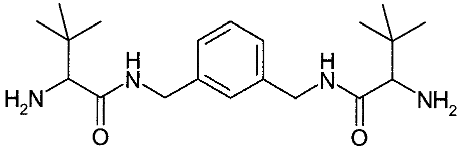

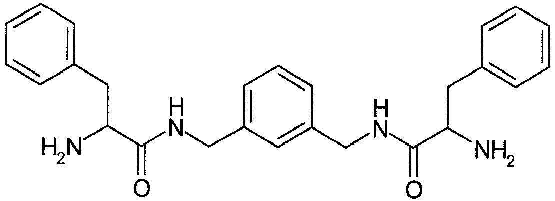

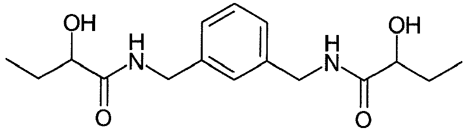

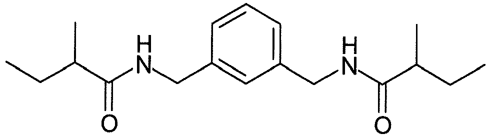

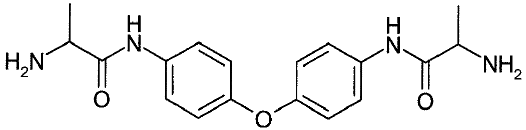

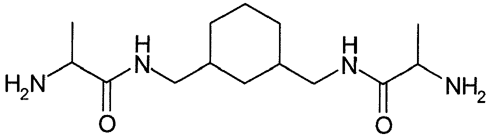

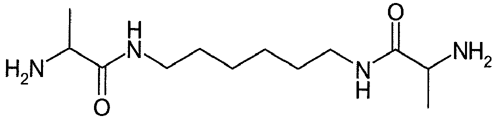

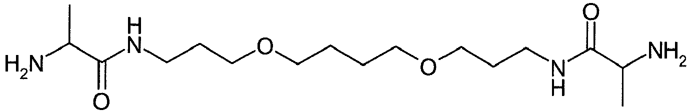

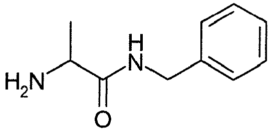

The production method of the amide compound represented by the general formula (A-I) will be described.

The production method of the amide compound represented by the general formula (A-I) is not particularly limited, and is preferably a method of producing the compound through dehydration condensation reaction of a compound represented by the following general formula (A-1) and an amine compound represented by the following general formula (A-2).

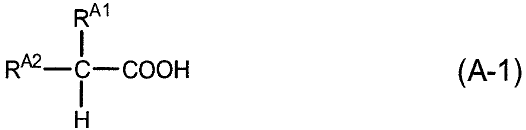

Q^{A}(̵NH₂) _{m^{A}}+_{n^{A}} (A-2)

In the general formula (A-1), R^{A1} and R^{A2} have the same meanings as R^{A1} and R^{A2} in the general formula (A-I), and the preferred ranges thereof are also the same. In the general formula (A-2), m^{A} + n^{A} and Q^{A} have the same meanings as m^{A} + n^{A} and Q^{A} in the general formula (A-I), and the preferred ranges thereof are also the same.

Examples of the compound represented by the general formula (A-1) include an α-amino acid having tertiary hydrogen on the α-carbon, such as alanine, 2-aminobutxic acid, valine, norvaline, leucine, norleucine, tert-leucine, isoleucine, serine, threonine, cysteine, methionine, 2-phenylglycine, phenylalanine, tyrosine, histidine, tryptophan and proline, an α-hydroxyacid, such as 2-hydroxybutyric acid, malic acid and tartaric acid, and a carboxylic acid having an alkyl group at the α-position, such as 2-methylbutyric acid, methylmalonic acid and methylsuccinic acid, but the compound is not limited to these examples. These compounds may be used solely or as a combination of two or more thereof.

In the case where the compound represented by the general formula (A-1) has an asymmetric carbon atom, the compound may be any of a D-isomer, an L-isomer and a racemic body, and may be an alloisomer.

Among these, an α-amino acid having tertiary hydrogen on the α-carbon is particularly preferred from the standpoint of the availability of the raw material, the enhancement of the oxygen absorption capability, and the like. In the α-amino acid having tertiary hydrogen on the α-carbon, alanine is most preferred from the standpoint of the availability of the raw material and the inexpensiveness thereof.

Preferred examples of the amino compound represented by the general formula (A-2) include an amino compound containing an aromatic hydrocarbon group, an amino compound containing a saturated or unsaturated alicyclic hydrocarbon group, an amino compound containing a linear or branched and saturated or unsaturated aliphatic hydrocarbon group, and an amino compound containing a heterocyclic group.

Examples of the amino compound containing an aromatic hydrocarbon group include o-xylylenediamine, m-xylylenediamine, p-xylylenediamine and p-phenylenediamine. Examples of the amino compound containing a saturated or unsaturated alicyclic hydrocarbon group include 1,3-bis(aminomethyl)cyclohexane, 1,4-bis(aminomethyl)cyclohexane, 1,3-diaminocyclohexane and 1,4-diaminocyclohexane. Examples of the amino compound containing a linear or branched and saturated or unsaturated aliphatic hydrocarbon group include ethylenediamine, trimethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, 2-methyl-1,5-pentanediamine, 2,2,4-trimethylhexamethylenediamine and 2,4,4-trimethylhexamethylenediamine. Examples of the amino compound containing a heterocyclic group include diaminopyridine and diaminotriazine. Among these, m-xylylenediamine is preferred from the standpoint of the oxygen absorbability.

The reaction condition in the dehydration condensation reaction of the compound represented by the general formula (A-1) and the amine compound represented by the general formula (A-2) is not particularly limited and may be determined appropriately. The reaction temperature is generally from 170 to 250°C, and preferably from 200 to 220°C. For accelerating the dehydration condensation reaction, a phosphorus atom-containing compound, such as sodium hypophosphite, potassium hypophosphite and lithium hypophosphite, may be used as a catalyst.

The oxygen absorber (A) contains at least one of an amide compound represented by the general formula (A-I). That is, the oxygen absorber (A) may be a mixture of two or more of the amide compounds represented by the general formula (A-I). For example, in the case where the amine compound represented by the general formula (A-2) is a diamine, the dehydration condensation reaction of the compound represented by the general formula (A-1) and the amine compound represented by the general formula (A-2) may result in an amide compound in the form of a dimer formed through reaction of one molecule of the compound represented by the general formula (A-1) and one molecule of the amine compound represented by the general formula (A-2), and an amide compound in the form of a trimer formed through reaction of two molecules of the compound represented by the general formula (A-1) and one molecule of the amine compound represented by the general formula (A-2). The oxygen absorber (A) may be the mixture of these compounds.

The amide compound constituting the oxygen absorber (A) has excellent oxygen absorbability. The oxygen absorption amount per 1 g of the amide compound constituting the oxygen absorber (A) is preferably 3 cc/g or more, and more preferably 10 cc/g or more. The upper limit of the oxygen absorption amount is not limited and is preferably as high as possible, but the upper limit is preferably 20 cc/g or less for providing a favorable oxygen absorber. The oxygen absorption amount may be measured according to the method shown in the examples described later.

The mechanism that the amide compound constituting the oxygen absorber (A) exhibits an oxygen absorption capability has not yet been clear, but is presumed as follows. The amide compound constituting the oxygen absorber (A) forms a radical through dissociation of the tertiary hydrogen, which is bonded to the carbon atom adjacent to the amide bond, as a proton. Specifically, it is considered that the carbonyl group as an electron attracting group and the electron donating group R^{A2} are bonded to the carbon atom bonded to the tertiary hydrogen, and therefore, a considerably stable radical is formed through the phenomenon referred to as a captodative effect, in which the unpaired electron present on the carbon atom is energetically stabilized on the dissociation of the tertiary hydrogen as a proton. It is considered that when oxygen and water are present therein, oxygen is reacted with the radical to exhibit the oxygen absorption capability. It has been found that higher reactivity may be obtained under an environment with a higher humidity and a higher temperature.

The use form of the oxygen absorber (A) is preferably such a form that the amide compound represented by the general formula (A-I) is supported on a carrier, from the standpoint of the easiness on handling and the enhancement of the oxygen absorption rate. Examples of the carrier for supporting include diatom earth, activated carbon, zeolite, alumina, silica, titania, zirconia and ceria.

The oxygen absorber (A) is preferably used after filling in a small bag or the like. By disposing a small bag or the like having the oxygen absorber (A) filled therein in a packaging material, the oxygen concentration in the packaging material may be decreased, and thus an article in the packaging material may be stored in a favorable condition.

The oxygen absorber (A) may also be mixed in a resin material. A packaging material and a packaging container, which are obtained by molding a resin composition containing the oxygen absorber (A) mixed with a resin material, may maintain a low oxygen concentration in the packaging material, and thus may store an article in the packaging material in a favorable condition.

In the case where the oxygen absorber (A) is mixed in a resin material, the content of the oxygen absorber in the resin composition is preferably from 1 to 30% by mass, more preferably from 3 to 20% by mass, and further preferably from 5 to 10% by mass, from the standpoint of the oxygen absorption capability and the moldability and the appearance of the resin.

### Oxygen Absorber (B)

The oxygen absorber (B) contains at least one of an amide compound represented by the following general formula (B-I): 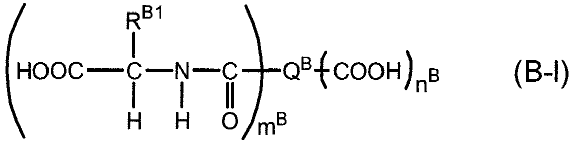 wherein R^{B1} represents a substituent; m^{B} represents an integer of from 1 to 4; n^{B} represents an integer of from 0 to 3, provided that m^{B} + n^{B} is an integer of from 1 to 4; and Q^{B} represents an (m^{B} + n^{B})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, provided that Q^{B} does not contain an amino group.

R^{B1} represents a substituent, and examples of the substituent include those exemplified in the substituent of R^{A1}. Preferred examples of R^{B1} are also the same as those of R^{A1}.

Q^{B} represents a group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, and is an (m^{B} + n^{B})-valent group that is formed by removing (m^{B} + n^{B}) hydrogen atoms from a mother compound containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group. The aromatic hydrocarbon group, the saturated or unsaturated alicyclic hydrocarbon group, the linear or branched and saturated or unsaturated aliphatic hydrocarbon group and the heterocyclic group each may be substituted or unsubstituted. Q^{B} may contain a hetero atom, and may contain an ether group, a sulfide group, a carbonyl group, a hydroxyl group, a sulfoxide group, a sulfone group or the like, but Q^{B} does not contain an amino group.

Examples of the mother compound that contains an aromatic hydrocarbon group include benzene, naphthalene, anthracene, phenanthrene, pyrene, biphenyl, diphenyl ether, diphenyl sulfide, diphenyl sulfoxide, diphenyl sulfone, a diphenylalkane, (such as diphenylmethane, diphenylethane and diphenylpropane), diphenylmethanone and anthraquinone. Examples of the group that contains an aromatic hydrocarbon group include a phenyl group, a hydroxyphenyl group, a benzyl group, an o-phenylene group, a m-phenylene group, a p-phenylene group, a hydroxy-o-phenylene group, a hydroxy-m-phenylene group, a hydroxy-p-phenylene group, a naphthyl group, a naphthylene group, an anthracenyl group, an anthracenylene group, a phenanthrenyl group, a phenanthrenylene group, a pyrenyl group, a pyrenylene group, a biphenylyl group, a biphenylylene group, a phenoxyphenyl group, an oxydiphenylene group, a phenylthiophenyl group, a thiodiphenylene group, a phenylsulfinylphenyl group, a sulfinyldiphenylene group, a phenylsulfonylphenyl group, a sulfonyldiphenylene group, an alkylenediphenylene group (such as a methylenediphenylene group, an ethylenediphenylene group and a propylenediphenylene group), a phenylcarbonylphenyl group, a carbonyldiphenylene group, an anthraquinonyl group and an anthraquinonylene group.

Examples of the mother compound that contains a saturated or unsaturated alicyclic hydrocarbon group include a compound containing a 3-membered to 6-membered ring, for example, cyclopropane, cyclobutane, cyclopentane, cyclohexane, a dicyclohexylalkane (such as dicyclohexylmethane, dicyclohexylethane and dicyclohexylpropane), cyclopropene, cyclobutene, cyclopentene, cyclohexene and cyclohexadiene. Examples thereof also include a compound containing a condensed ring, such as decahydronaphthalene, and a compound containing a crosslinked structure, such as norbomane, norbornene, norbomadiene and adamantane. Examples of the group that contains a saturated or unsaturated alicyclic hydrocarbon group include a cyclopropyl group, a cyclobutyl group, a cyclopentyl group, a cyclohexyl group, a hydroxycyclohexyl group, a cyclohexylene group, a methylcyclohexyl group, an alkylenedicyclohexylene group (such as a methylenedicyclohexylene group, an ethylenedicyclohexylene group and a propylenedicyclohexylene group), a cyclopropenyl group, a cyclobutenyl group, a cyclopentenyl group, a cyclohexenyl group, a cyclohexenylene group, a cyclohexadienyl group, a decahydronaphthalenyl group, a decahydronaphthalenylene group, a norbomyl group, a norbomenyl group, a norbomadienyl group and an adamantanyl group.

Examples of the mother compound that contains a linear or branched and saturated or unsaturated aliphatic hydrocarbon group include a linear or branched alkane having from 1 to 24 carbon atoms (such as methane, ethane, propane, 2-methylpropane, n-butane, 2-methylbutane, n-hexane, n-octane, n-nonane, n-decane, n-dodecane, n-tetradecane, n-hexadecane and n-octadecane), and a linear or branched alkene having from 2 to 24 carbon atoms (such as ethylene, propylene, n-butene, n-heptene, n-hexene, n-hexadiene, n-octene, n-octadiene, n-decene, n-decadiene, n-dodecene, n-dodecadiene, n-tetradecene, n-tetradecadiene, n-hexadecene, n-hexadecadiene, n-octadecene, n-octadecadiene, n-octadecatriene, n-octadecatetraene, n-eicosene, n-eicosadiene, n-eicosatriene, n-eicosatetraene, n-docosene, n-docosadiene, n-tetracosene and n-tetracosadiene). Examples of the group that contains a linear or branched and saturated or unsaturated aliphatic hydrocarbon group include a linear or branched alkyl group having from 1 to 24 carbon atoms (such as a methyl group, an ethyl group, a n-propyl group, a 2-methylpropyl group, a 2-hydroxypropyl group, a n-butyl group, a 2-methylbutyl group, a 2-hydroxybutyl group, a n-hexyl group, a n-octyl group, a n-decyl group, a n-dodecyl group, a n-tetradecyl group, a n-hexadecyl group and a n-octadecyl group), a linear or branched alkylene group having from 1 to 24 carbon atoms (such as a methylene group, an ethylene group, a n-propylene group, a 2-methylpropylene group, a 2-hydroxypropylene group, a 2-propanonyl group, a n-butylene group, a 2-methylbutylene group, a 2-hydroxybutylene group, a 2,3-dihydroxybutylene group, a n-hexylene group, a n-octylene group, a n-nonylene group, a n-decylene group and a n-dodecylene group), a linear or branched alkenyl group having from 2 to 24 carbon atoms (such as a n-butenyl group, a n-hexenyl group, a n-hexadienyl group, a n-octenyl group, a n-octadienyl group, a n-decenyl group, a n-decadienyl group, a n-dodecenyl group, a n-dodecadienyl group, a n-tetradecenyl group, a n-tetradecadienyl group, a n-hexadecenyl group, a n-hexadecadienyl group, a n-octadecenyl group, a n-octadecadienyl group, a n-octadecatrienyl group, a n-octadecatetraenyl group, a n-eicosenyl group, a n-eicosadienyl group, a n-eicosatrienyl group, a n-eicosatetraenyl group, a n-docosenyl group, a n-docosadienyl group, a n-tetracosenyl group and a n-tetracosadienyl group), and a linear or branched alkenylene group having from 2 to 24 carbon atoms (such as a n-butenylene group, a n-hexenylene group, a n-hexadienylene group, a n-octenylene group, a n-octadienylene group, a n-decenylene group, a n-decadienylene group, a n-dodecenylene group and a n-dodecadienylene group).

Examples of the mother compound that contains a heterocyclic group include a 5-membered or 6-membered heterocyclic compound, such as tetrahydrofuran, furan, thiophene and tetrahydropyran. Examples of the group that contains a heterocyclic group include a tetrahydrofuranyl group, a furanyl group, a thiophenyl group and a tetrahydropyranyl group.

m^{B} represents an integer of from 1 to 4, and n^{B} represents an integer of from 0 to 3. m^{B} + n^{B} represents the valency of Q^{B}, and represents an integer of from 1 to 4. Preferably, m^{B} represents an integer of from 2 to 4, and n^{B} is 0.

Preferred examples of the amide compound represented by the general formula (B-I) are shown below, but the present invention is not limited to these examples.

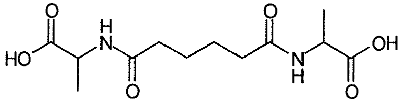

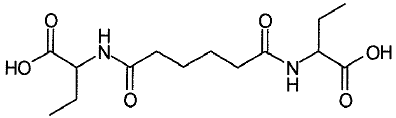

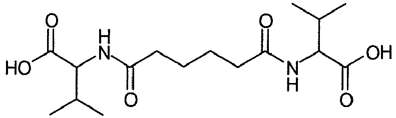

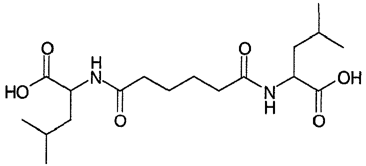

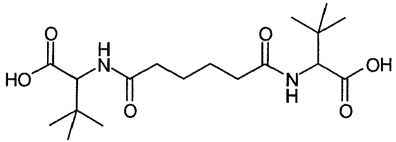

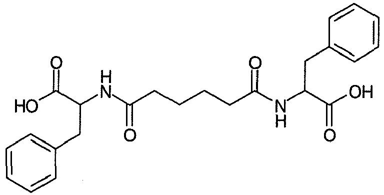

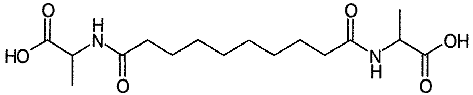

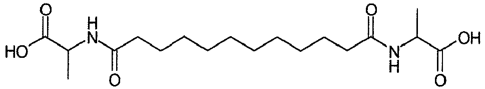

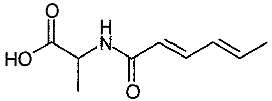

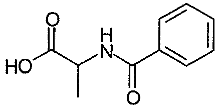

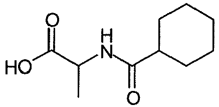

The production method of the amide compound represented by the general formula (B-I) will be described.

The production method of the amide compound represented by the general formula (B-I) is not particularly limited, and is preferably a method of producing the compound through dehydration condensation reaction of an α-amino acid represented by the following general formula (B-1) and a carboxylic acid compound represented by the following general formula (B-2).

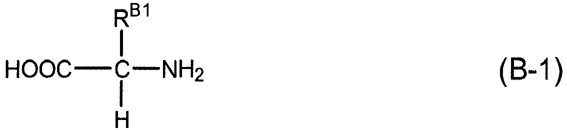

Q^{B}(̵COOH)_{m^{B}}+_{n^{B}} (B-2)

In the general formula (B-1), R^{B1} has the same meaning as R^{B1} in the general formula (B-I), and the preferred range thereof is also the same. In the general formula (B-2), m^{B} + n^{B} and Q^{B} have the same meanings as m^{B} + n^{B} and Q^{B} in the general formula (B-I), and the preferred ranges thereof are also the same.

Examples of the α-amino acid having tertiary hydrogen on the α-carbon represented by the general formula (B-1) include alanine, 2-aminobutyric acid, valine, norvaline, leucine, norleucine, tert-leucine, isoleucine, serine, threonine, cysteine, methionine, 2-phenylglycine, phenylalanine, tyrosine, histidine, tryptophan and proline, but the α-amino acid is not limited to these examples. These compounds may be used solely or as a combination of two or more thereof.

The α-amino acid represented by the general formula (B-1) may be any of a D-isomer, an L-isomer and a racemic body, and may be an alloisomer.

Among these, alanine is most preferred from the standpoint of the availability of the raw material, the enhancement of the oxygen absorbability, and the like.

Preferred examples of the carboxylic acid compound represented by the general formula (B-2) include a carboxylic acid compound containing an aromatic hydrocarbon group, a carboxylic acid compound containing a saturated or unsaturated alicyclic hydrocarbon group, a carboxylic acid compound containing a linear or branched and saturated or unsaturated aliphatic hydrocarbon group, and a carboxylic acid compound containing a heterocyclic group.

Examples of the carboxylic acid compound containing an aromatic hydrocarbon group include benzoic acid, terephthalic acid, isophthalic acid and orthophthalic acid. Examples of the carboxylic acid compound containing a saturated or unsaturated alicyclic hydrocarbon group include cyclohexanecarboxylic acid, 1,4-cyclohexanedicarboxylic acid and 1,4-cyclohexenedicarboxylic acid. Examples of the carboxylic acid compound containing a linear or branched and saturated or unsaturated aliphatic hydrocarbon group include malonic acid, methylmalonic acid, hydroxymalonic acid, succinic acid, methyl succinic acid, malic acid, tartaric acid, crotonic acid, maleic acid, glutaric acid, adipic acid, sorbic acid, hexadiendioic acid, pimelic acid, suberic acid, azelaic acid, sebacic acid and dodecanedioic acid. Examples of the carboxylic acid compound containing a heterocyclic group include tetrahydrofuran-2-carboxylic acid and 2-furancarboxylic acid. Among these, adipic acid is preferred from the standpoint of the availability of the raw material and the oxygen absorbability.

The reaction condition in the dehydration condensation reaction of the α-amino acid represented by the general formula (B-1) and the carboxylic acid compound represented by the general formula (B-2) is not particularly limited and may be determined appropriately. The reaction temperature is generally from 160 to 250°C, and preferably from 180 to 220°C. For accelerating the dehydration condensation reaction, a phosphorus atom-containing compound, such as sodium hypophosphite, potassium hypophosphite and lithium hypophosphite, may be used as a catalyst.

The oxygen absorber (B) contains at least one of an amide compound represented by the general formula (B-I). That is, the oxygen absorber (B) may be a mixture of two or more of the amide compounds represented by the general formula (B-I). For example, in the case where the carboxylic acid compound represented by the general formula (B-2) is a dicarboxylic acid, the dehydration condensation reaction of the α-amino acid represented by the general formula (B-1) and the carboxylic acid compound represented by the general formula (B-2) may result in an amide compound in the form of a dimer formed through reaction of one molecule of the α-amino acid represented by the general formula (B-1) and one molecule of the carboxylic acid compound represented by the general formula (B-2), and an amide compound in the form of a trimer formed through reaction of two molecules of the α-amino acid represented by the general formula (B-1) and one molecule of the carboxylic acid compound represented by the general formula (B-2). The oxygen absorber (B) may be the mixture of these compounds.

The amide compound constituting the oxygen absorber (B) has excellent oxygen absorbability. The oxygen absorption amount per 1 g of the amide compound constituting the oxygen absorber (B) is preferably 3 cc/g or more, and more preferably 5 cc/g or more. The upper limit of the oxygen absorption amount is not limited and is preferably as high as possible, but the upper limit is preferably 20 cc/g or less for providing a favorable oxygen absorber. The oxygen absorption amount may be measured according to the method shown in the examples described later.

The mechanism that the amide compound constituting the oxygen absorber (B) exhibits an oxygen absorption capability has not yet been clear, but is presumed as follows. The amide compound constituting the oxygen absorber (B) forms a radical through dissociation of the tertiary hydrogen, which is bonded to the carbon atom adjacent to the amide bond, as a proton. Specifically, it is considered that the carboxyl group as an electron attracting group and the amino group as an electron donating group are bonded to the carbon atom bonded to the tertiary hydrogen, and therefore, a considerably stable radical is formed through the phenomenon referred to as a captodative effect, in which the unpaired electron present on the carbon atom is energetically stabilized on the dissociation of the tertiary hydrogen as a proton. It is considered that when oxygen and water are present therein, oxygen is reacted with the radical to exhibit the oxygen absorption capability. It has been found that higher reactivity may be obtained under an environment with a higher humidity and a higher temperature.

The use form of the oxygen absorber (B) is preferably such a form that the amide compound represented by the general formula (B-I) is supported on a carrier, from the standpoint of the easiness on handling and the enhancement of the oxygen absorption rate. Examples of the carrier for supporting include diatom earth, activated carbon, zeolite, alumina, silica, titania, zirconia and ceria.

The oxygen absorber (B) is preferably used after filling in a small bag or the like. By disposing a small bag or the like having the oxygen absorber (B) filled therein in a packaging material, the oxygen concentration in the packaging material may be decreased, and thus an article in the packaging material may be stored in a favorable condition.

The oxygen absorber (B) may also be mixed in a resin material. A packaging material and a packaging container, which are obtained by molding a resin composition containing the oxygen absorber (B) mixed with a resin material, may maintain a low oxygen concentration in the packaging material, and thus may store an article in the packaging material in a favorable condition.

In the case where the oxygen absorber (B) is mixed in a resin material, the content of the oxygen absorber in the resin composition is preferably from 1 to 30% by mass, more preferably from 3 to 20% by mass, and further preferably from 5 to 10% by mass, from the standpoint of the oxygen absorption capability and the moldability and the appearance of the resin.

### Oxygen Absorber (C)

The oxygen absorber (C) contains at least one of an imide compound represented by the following general formula (C-I): 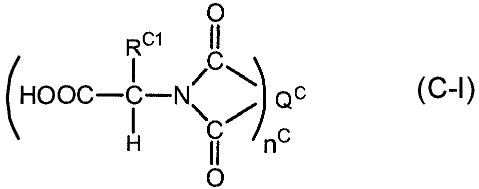 wherein R^{C1} represents a substituent; n^{C} represents an integer of 1 or 2; and Q^{C} represents a 2n^{C}-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group.

R^{C1} represents a substituent, and examples of the substituent include those exemplified in the substituent of R^{A1}. Preferred examples of R^{C1} are also the same as those of R^{A1}.

Q^{C} represents a group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, and is a 2n^{C}-valent group that is formed by removing 2n^{C} hydrogen atoms from a mother compound containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group. The aromatic hydrocarbon group, the saturated or unsaturated alicyclic hydrocarbon group, the linear or branched and saturated or unsaturated aliphatic hydrocarbon group and the heterocyclic group each may be substituted or unsubstituted. Q^{C} may contain a hetero atom, and may contain an ether group, a sulfide group, a carbonyl group, a hydroxy group, a carboxy group, a sulfoxide group, a sulfone group or the like.

Examples of the mother compound that contains an aromatic hydrocarbon group include benzene, naphthalene, anthracene, phenanthrene, pyrene, biphenyl, diphenyl ether, diphenyl sulfide, diphenyl sulfoxide, diphenyl sulfone, a diphenylalkane, (such as diphenylmethane, diphenylethane and diphenylpropane), diphenylmethanone and anthraquinone. Examples of the group that contains an aromatic hydrocarbon group include an o-phenylene group, a 4-carboxy-o-phenylene group, a benzene-1,2,4,5-tetrayl group, a 2,3-naphthylene group, a napthalene-2,3,6,7-tetrayl group, a 1,8-naphthylene group, a naphthalene-1,4,5,8-tetrayl group, a 2,3-anthracenylene group, a 2,2'-biphenylylene group, a biphenyl-2,3,3',4'-tetrayl group, a biphenyl-3,3',4,4'-tetrayl group, a diphenyl ether-2,3,3',4'-tetrayl group, a diphenyl ether-3,3',4,4'-tetrayl group, a diphenyl sulfone-3,3',4,4'-tetrayl group, a diphenylmethanone-3,3',4,4'-tetrayl group and a 2,3-anthraquinonylene group.

Examples of the mother compound that contains a saturated or unsaturated alicyclic hydrocarbon group include a compound containing a 3-membered to 6-membered ring, for example, cyclopropane, cyclobutane, cyclopentane, cyclohexane, a dicyclohexylalkane (such as dicyclohexylmethane, dicyclohexylethane and dicyclohexylpropane) and cyclohexene. Examples thereof also include a compound containing a condensed ring, such as decahydronaphthalene, and a compound containing a crosslinked structure, such as norbomane, norbornene, norbomadiene, bicyclo[2,2,2]oct-5-ene, bicyclo[2,2,2]oct-7-ene and adamantane. Examples of the group that contains a saturated or unsaturated alicyclic hydrocarbon group include a cyclopropylene group, a cyclobutane-1,2,3,4-tetrayl group, a 1,2-cyclopentylene group, a cyclopentane-1,2,3,4-tetrayl group, a 1,2-cyclohexylene group, a 4-methyl-1,2-cyclohexylene group, a 4-carboxy-1,2-cyclohexylene group, a cyclohexane-1,2,4,5-tetrayl group, a 4-cyclohexene-1,2-diyl group, a 3-methyl-4-cyclohexene-1,2-diyl group, a 4-methyl-4-cyclohexene-1,2-diyl group, a 2,3-decahydronaphthalenylene group, a decahydronaphthalene-2,3,6,7-tetrayl group, a 5-norbornene-2,3-diyl group, a bicyclo[2,2,2]oct-5-ene-2,3-diyl group and a bicyclo[2,2,2]oct-7-ene-2,3,5,6-tetrayl group.

Examples of the mother compound that contains a linear or branched and saturated or unsaturated aliphatic hydrocarbon group include a linear or branched alkane having from 2 to 24 carbon atoms (such as ethane, propane, n-butane, n-hexane, n-octane, n-nonane, n-decane, n-dodecane, n-tetradecane, n-hexadecane, n-octadecane, n-eicosane, n-docosane and n-tetracosane), and a linear or branched alkene having from 2 to 24 carbon atoms (such as ethylene, propylene, n-butene, n-heptene, n-hexene, n-octene, n-decene, n-dodecene, n-tetradecene, n-hexadecene, n-octadecene, n-eicosene, n-docosene and n-tetracosene). Examples of the group that contains a linear or branched and saturated or unsaturated aliphatic hydrocarbon group include a linear or branched alkylene group having from 2 to 24 carbon atoms (such as an ethylene group, a butane-1,2-diyl group, a hexane-1,2-diyl group, an octane-1,2-diyl group, a decane-1,2-diyl group, a dodecane-1,2-diyl group, a tetradecane-1,2-diyl group, a hexadecane-1,2-diyl group, an octadecane-1,2-diyl group and an eicosane-1,2-diyl group), and a linear or branched alkenylene group having from 2 to 24 carbon atoms (such as an ethenylene group, a 2-propylene-1,2-diyl group, a 2-butene-2,3-diyl group, a 4-penten-1,2-diyl group, a 4-methyl-4-pentene-1,2-diyl group, a 4-hexene-1,2-diyl group, a 4-octene-1,2-diyl group, a 4-decene-1,2-diyl group, a 4-dodecene-1,2-diyl group, a 4-tetradecene-1,2-diyl group, a 4-hexadecene-1,2-diyl group, a 4-octadecene-1,2-diyl group and a 4,9-eicosadiene-1,2-diyl group).

Examples of the mother compound that contains a heterocyclic group include a 5-membered or 6-membered heterocyclic compound, such as tetrahydrofuran, tetrahydrothiophene, tetrahydropyran, tetrahydrothiopyran and dithiin. Examples of the group that contains a heterocyclic group include a 5,6-dihydro-1,4-dithiin-2,3-diyl group.

n^{C} represents an integer of 1 or 2, and preferably 1.

Preferred examples of the imide compound represented by the general formula (C-I) are shown below, but the present invention is not limited to these examples.

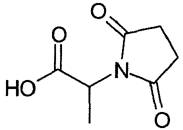

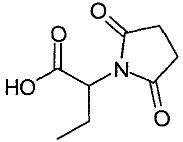

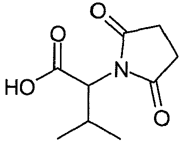

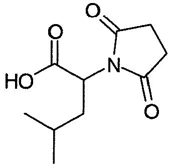

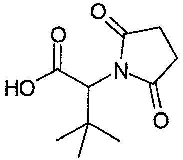

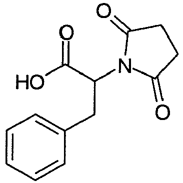

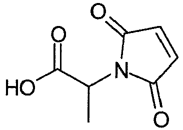

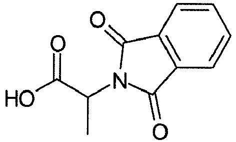

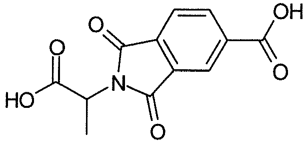

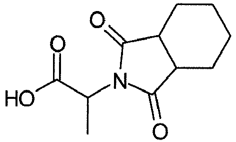

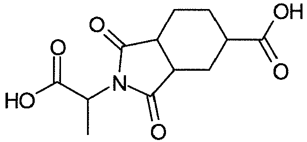

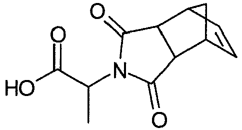

The production method of the imide compound represented by the general formula (C-I) will be described.

The production method of the imide compound represented by the general formula (C-I) is not particularly limited, and is preferably a method of producing the compound through dehydration condensation reaction of an α-amino acid represented by the following general formula (C-1) and a carboxylic anhydride compound represented by the following general formula (C-2).

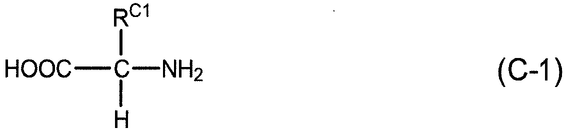

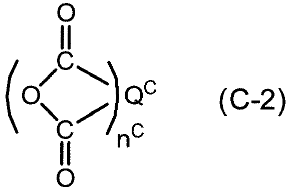

In the general formula (C-1), R^{C1} has the same meaning as R^{C1} in the general formula (C-I), and the preferred range thereof is also the same. In the general formula (C-2), n^{C} and Q^{C} have the same meanings as n^{C} and Q^{C} in the general formula (C-I), and the preferred ranges thereof are also the same.

Examples of the α-amino acid having tertiary hydrogen on the α-carbon represented by the general formula (C-1) include alanine, 2-aminobutyric acid, valine, norvaline, leucine, norleucine, tert-leucine, isoleucine, serine, threonine, cysteine, methionine, 2-phenylglycine, phenylalanine, tyrosine, histidine, tryptophan and proline, but the α-amino acid is not limited to these examples. These compounds may be used solely or as a combination of two or more thereof.

The α-amino acid represented by the general formula (C-1) may be any of a D-isomer, an L-isomer and a racemic body, and may be an alloisomer.

Among these, alanine is most preferred from the standpoint of the availability of the raw material, the enhancement of the oxygen absorbability, and the like.

Preferred examples of the carboxylic anhydride compound represented by the general formula (C-2) include a carboxylic anhydride compound containing an aromatic hydrocarbon group, a carboxylic anhydride compound containing a saturated or unsaturated alicyclic hydrocarbon group, a carboxylic anhydride compound containing a linear or branched and saturated or unsaturated aliphatic hydrocarbon group, and a carboxylic anhydride compound containing a heterocyclic group.

Examples of the carboxylic anhydride compound containing an aromatic hydrocarbon group include phthalic anhydride, trimellitic anhydride and pyromellitic anhydride. Examples of the carboxylic anhydride compound containing a saturated or unsaturated alicyclic hydrocarbon group include 1,2-cyclohexanedicarboxylic anhydride, 4-carboxy-1,2-cyclohexanedicarboxylic anhydride, 4-cyclohexene-1,2-dicarboxylic anhydride and 5-norbomene-2,3-dicarboxylic anhydride. Examples of the carboxylic acid compound containing a linear or branched and saturated or unsaturated aliphatic hydrocarbon group include succinic anhydride, maleic anhydride, itaconic anhydride and allylsuccinic anhydride. Examples of the carboxylic acid compound containing a heterocyclic group include 5,6-dihydro-1,4-dithiin-2,3-dicarboxylic anhydride. Among these, succinic anhydride is preferred from the standpoint of the availability of the raw material and the oxygen absorbability.

The reaction condition in the dehydration condensation reaction of the α-amino acid represented by the general formula (C-1) and the carboxylic anhydride compound represented by the general formula (C-2) is not particularly limited and may be determined appropriately. The reaction temperature is generally from 160 to 250°C, and preferably from 180 to 220°C. For accelerating the dehydration condensation reaction, a phosphorus atom-containing compound, such as sodium hypophosphite, potassium hypophosphite and lithium hypophosphite, may be used as a catalyst.

The oxygen absorber (C) contains at least one of an imide compound represented by the general formula (C-I). That is, the oxygen absorber (C) may be a mixture of two or more of the imide compounds represented by the general formula (C-I). For example, in the case where the carboxylic anhydride compound represented by the general formula (C-2) is a tetracarboxylic anhydride, the dehydration condensation reaction of the α-amino acid represented by the general formula (C-1) and the carboxylic anhydride compound represented by the general formula (C-2) may result in an imide compound in the form of a dimer formed through reaction of one molecule of the α-amino acid represented by the general formula (C-1) and one molecule of the carboxylic anhydride compound represented by the general formula (C-2), and an imide compound in the form of a trimer formed through reaction of two molecules of the α-aminoacid represented by the general formula (C-1) and one molecule of the carboxylic anhydride compound represented by the general formula (C-2). The oxygen absorber (C) may be the mixture of these compounds.

The imide compound constituting the oxygen absorber (C) has excellent oxygen absorbability. The oxygen absorption amount per 1 g of the imide compound constituting the oxygen absorber (C) is preferably 3 cc/g or more, and more preferably 5 cc/g or more. The upper limit of the oxygen absorption amount is not limited and is preferably as high as possible, but the upper limit is preferably 20 cc/g or less for providing a favorable oxygen absorber. The oxygen absorption amount may be measured according to the method shown in the examples described later.

The mechanism that the imide compound constituting the oxygen absorber (C) exhibits an oxygen absorption capability has not yet been clear, but is presumed as follows. The imide compound constituting the oxygen absorber (C) forms a radical through dissociation of the tertiary hydrogen, which is bonded to the carbon atom bonded to R^{C1}, as a proton. Specifically, it is considered that the carboxyl group as an electron attracting group and the amino group as an electron donating group are bonded to the carbon atom bonded to the tertiary hydrogen, and therefore, a considerably stable radical is formed through the phenomenon referred to as a captodative effect, in which the unpaired electron present on the carbon atom is energetically stabilized on the dissociation of the tertiary hydrogen as a proton. It is considered that when oxygen and water are present therein, oxygen is reacted with the radical to exhibit the oxygen absorption capability. It has been found that higher reactivity may be obtained under an environment with a higher humidity and a higher temperature.

The use form of the oxygen absorber (C) is preferably such a form that the imide compound represented by the general formula (C-I) is supported on a carrier, from the standpoint of the easiness on handling and the enhancement of the oxygen absorption rate. Examples of the carrier for supporting include diatom earth, activated carbon, zeolite, alumina, silica, titania, zirconia and ceria.

The oxygen absorber (C) is preferably used after filling in a small bag or the like. By disposing a small bag or the like having the oxygen absorber (C) filled therein in a packaging material, the oxygen concentration in the packaging material may be decreased, and thus an article in the packaging material may be stored in a favorable condition.

The oxygen absorber (C) may also be mixed in a resin material. A packaging material and a packaging container, which are obtained by molding a resin composition containing the oxygen absorber (C) mixed with a resin material, may maintain a low oxygen concentration in the packaging material, and thus may store an article in the packaging material in a favorable condition.

In the case where the oxygen absorber (C) is mixed in a resin material, the content of the oxygen absorber in the resin composition is preferably from 1 to 30% by mass, more preferably from 3 to 20% by mass, and further preferably from 5 to 10% by mass, from the standpoint of the oxygen absorption capability and the moldability and the appearance of the resin.

### Oxygen Absorber (D)

The oxygen absorber (D) contains at least one of an ester compound represented by the following general formula (D-I): 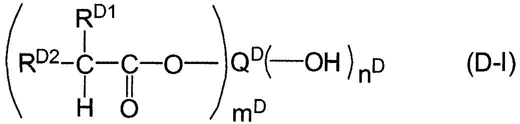 wherein R^{D1} represents a substituent; R^{D2} represents an electron donating group; m^{D} represents an integer of from 1 to 4; n^{D} represents an integer of from 0 to 3, provided that m^{D} + n^{D} is an integer of from 1 to 4; and Q^{D} represents an (m^{D} + n^{D})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group.

R^{D1} represents a substituent, and examples of the substituent include those exemplified in the substituent of R^{A1}. Preferred examples of R^{D1} are also the same as those of R^{A1}.

R^{D2} represents an electron donating group, and examples of the electron donating group include those exemplified in the electron donating group of R^{A2}. Preferred examples of R^{D2} are also the same as those of R^{A2}.

Q^{D} represents a group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, and is an (m^{D} + n^{D})-valent group that is formed by removing (m^{D} + n^{D}) hydrogen atoms from a mother compound containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group. The aromatic hydrocarbon group, the saturated or unsaturated alicyclic hydrocarbon group, the linear or branched and saturated or unsaturated aliphatic hydrocarbon group and the heterocyclic group each may be substituted or unsubstituted. Q^{D} may contain a hetero atom, and may contain an ether group, a sulfide group, a carbonyl group, an amino group, a sulfoxide group, a sulfone group or the like.

Examples of the mother compound that contains an aromatic hydrocarbon group include benzene, naphthalene, anthracene, phenanthrene, pyrene, biphenyl, diphenyl ether, diphenyl sulfide, diphenyl sulfoxide, diphenyl sulfone, a diphenylalkane, (such as diphenylmethane, diphenylethane and diphenylpropane), diphenylmethanone and anthraquinone. Examples of the group that contains an aromatic hydrocarbon group include a phenyl group, a methylphenyl group, a benzyl group, an o-phenylene group, a m-phenylene group, a p-phenylene group, a benzenetriyl group, a naphthyl group, a naphthylmethyl group, a naphthylene group, a naphthylenedimethyl group, an anthracenyl group, an anthracenylmethyl group, an anthracenylene group, an anthracenylenedimethyl group, an anthracenetriyl group, a phenanthrenyl group, a phenanthrenylmethyl group, a pyrenyl group, a pyrenylmethyl group, a biphenylyl group, a biphenylylene group, a biphenyltriyl group, a biphenyltetrayl group, a phenoxyphenyl group, an oxydiphenylene group, a phenylthiophenyl group, a thiodiphenylene group, a phenylsulfinylphenyl group, a sulfinyldiphenylene group, a phenylsulfonylphenyl group, a sulfonyldiphenylene group, an alkylenediphenyl group (such as a methylenediphenylene group, an ethylenediphenylene group and a propylenediphenylene group), a phenylcarbonylphenyl group, a carbonyldiphenylene group, an anthraquinonyl group, an anthraquinonylmethyl group, an anthraquinonylene group, an anthraquinonetriyl group and an anthraquinonetetrayl group.

Examples of the mother compound that contains a saturated or unsaturated alicyclic hydrocarbon group include a compound containing a 3-membered to 6-membered ring, for example, cyclopropane, cyclobutane, cyclopentane, cyclohexane, a dicyclohexylalkane (such as dicyclohexylmethane, dicyclohexylethane and dicyclohexylpropane), cyclopropene, cyclobutene, cyclopentene and cyclohexene. Examples thereof also include a compound containing a condensed ring, such as decahydronaphthalene, and a compound containing a crosslinked structure, such as norbomane, norbornene, norbomadiene and adamantane. Examples of the group that contains a saturated or unsaturated alicyclic hydrocarbon group include a cyclopropyl group, a cyclopropylene group, a cyclobutyl group, a cyclobutylene group, a cyclopentyl group, a cyclopentylene group, a cyclohexyl group, a cyclohexylene group, a cyclohexanetriyl group, a decahydronaphthalenyl group, a decahydronaphthalenylene group, a norbomyl group, a norbomylene group, a norbomenyl group, a norbomenylene group, an adamantanyl group and an adamantanylene group.

Examples of the mother compound that contains a linear or branched and saturated or unsaturated aliphatic hydrocarbon group include a linear or branched alkane having from 1 to 24 carbon atoms (such as methane, ethane, propane, 2-methylpropane, n-butane, 2-methylbutane, n-hexane, n-octane, n-nonane, n-decane, n-dodecane, n-tetradecane, n-hexadecane, n-octadecane, n-eicosane, n-docosane and n-tetracosane), and a linear or branched alkene having from 2 to 24 carbon atoms (such as ethylene, propylene, n-butene, n-hexene, n-octene, n-decene, n-dodecene, n-tetradecene, n-hexadecene, n-octadecene, n-eicosene, n-docosene and n-tetracosene). Examples of the group that contains a linear or branched and saturated or unsaturated aliphatic hydrocarbon group include a linear or branched alkyl group having from 1 to 24 carbon atoms (such as a methyl group, an ethyl group, a propyl group, a 2-methylpropyl group, a n-butyl group, a 2-methylbutyl group, a n-hexyl group, a n-octyl group, a n-decyl group, a n-dodecyl group, a n-tetradecyl group, a n-hexadecyl group, a n-octadecyl group, a n-eicosanyl group, a n-docosanyl group and a n-tetracosanyl group), a linear or branched alkylene group having from 1 to 24 carbon atoms (such as a methylene group, an ethylene group, a propylene group, a 2-methylpropylene group, a n-butylene group, a 2-methylbutylene group, a n-hexylene group, a n-octylene group, a n-nonylene group, a n-decylene group, a n-dodecylene group, a n-tetradecylene group, a n-hexadecylene group, a n-octadecylene group, a n-eicosanylene group, a n-docosanylene group and a n-tetracosanylene group), a linear or branched alkenyl group having from 2 to 24 carbon atoms (such as a n-propenyl group, a n-butenyl group, a n-hexenyl group, a n-octenyl group, a n-decenyl group, a n-dodecenyl group, a n-tetradecenyl group, a n-hexadecenyl group, a n-octadecenyl group, a n-eicosenyl group, a n-docosenyl group and a n-tetracosenyl group), a linear or branched alkenylene group having from 2 to 24 carbon atoms (such as a n-propenylene group, a n-butenylene group, a n-hexenylene group, a n-octenylene group, a n-decenylene group, a n-dodecenylene group, a n-tetradecenylene group, a n-hexadecenylene group, a n-octadecenylene group, a n-eicosenylene group, a n-docosenylene group and a n-tetracosenylene group), and an alkylene group having an ether group (such as an oxydiethylene group and an ethylenebis(oxyethylene) group).

Examples of the mother compound that contains a heterocyclic group include a 5-membered or 6-membered heterocyclic compound, such as pyrrolidine, tetrahydrofuran, tetrahydrothiophene, pyrrole, furan, thiophene, piperidine, tetrahydropyran and pyridine, and a condensed heterocyclic compound, such as indole, quinoline and chromene. Examples of the group that contains a heterocyclic group include a pyrrolidinyl group, a tetrahydrofuranyl group, a piperidinyl group, a pyridinyl group, an indolyl group and a quinolinyl group.

m^{D} represents an integer of from 1 to 4, and n^{D} represents an integer of from 0 to 3. m^{D} + n^{D} represents the valency of Q^{D}, and represents an integer of from 1 to 4. Preferably, m^{D} represents an integer of from 2 to 4, and n^{D} is 0.

Preferred examples of the ester compound represented by the general formula (D-I) are shown below, but the present invention is not limited to these examples.

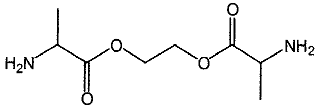

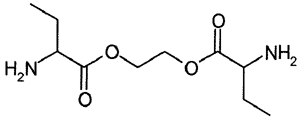

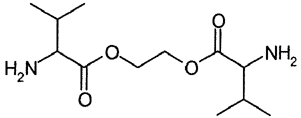

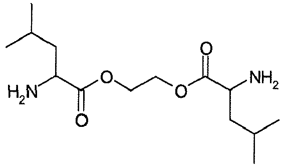

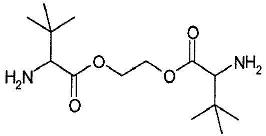

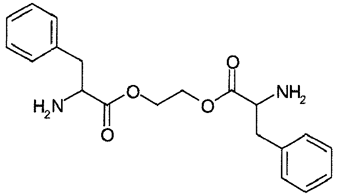

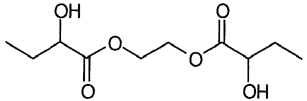

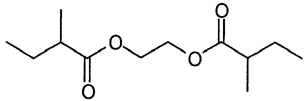

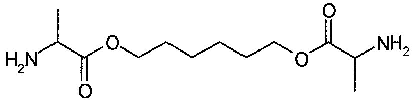

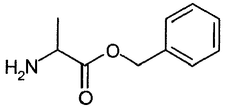

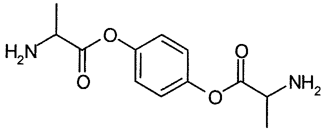

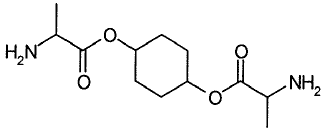

The production method of the ester compound represented by the general formula (D-I) will be described.

The production method of the ester compound represented by the general formula (D-I) is not particularly limited, and is preferably a method of producing the compound through dehydration condensation reaction of a compound represented by the following general formula (D-1) and an alcohol compound represented by the following general formula (D-2).

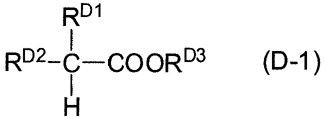

Q^{D} (-^{OH}) _{m^{D}+n^{D}} (D-2)

In the general formula (D-1), R^{D1} and R^{D2} have the same meanings as R^{D1} and R^{D2} in the general formula (D-I), and the preferred ranges thereof are also the same. R^{D3} represents a hydrogen atom or a substituted or unsubstituted alkyl group, preferably a hydrogen atom or a substituted or unsubstituted alkyl group having from 1 to 4 carbon atoms, more preferably a hydrogen atom or a substituted or unsubstituted alkyl group having 1 or 2 carbon atoms, and further preferably a hydrogen atom. In the general formula (D-2), m^{D} + n^{D} and Q^{D} have the same meanings as m^{D} + n^{D} and Q^{D} in the general formula (D-I), and the preferred ranges thereof are also the same.

Examples of the compound represented by the general formula (D-1) include an α-amino acid having tertiary hydrogen on the α-carbon, such as alanine, 2-aminobutxic acid, valine, norvaline, leucine, norleucine, tert-leucine, isoleucine, serine, threonine, cysteine, methionine, 2-phenylglycine, phenylalanine, tyrosine, histidine, tryptophan and proline; an alkyl ester of an α-aminoacid having tertiary hydrogen on the α-carbon, such as alanine methyl, methyl 2-aminobutyrate, valine methyl, norvaline methyl, leucine methyl, norleucine methyl, tert-leucine methyl, isoleucine methyl, serine methyl, threonine methyl, cysteine methyl, methionine methyl, 2-phenylglycine methyl, phenylalanine methyl, tyrosine methyl, histidine methyl, tryptophan methyl and proline methyl; an α-hydroxyacid, such as 2-hydroxybutyric acid, malic acid and tartaric acid; an alkyl ester of an α-hydroxyacid, such as ethyl 2-hydroxybutyrate, dimethyl malate and dimethyl tartarate; a carboxylic acid having an alkyl group on the α-carbon, such as 2-methylbutyric acid, methylmalonic acid and methylsuccinic acid; and an alkyl ester of a carboxylic acid having an alkyl group on the α-carbon, such as ethyl 2-methylbutyrate, dimethyl methylmalonate and dimethyl methylsuccinate, but the compound is not limited to these examples. These compounds may be used solely or as a combination of two or more thereof.

In the case where the compound represented by the general formula (D-1) has an asymmetric carbon atom, the compound may be any of a D-isomer, an L-isomer and a racemic body, and may be an alloisomer.

Among these, an α-amino acid having tertiary hydrogen on the α-carbon is preferred from the standpoint of the availability of the raw material, the enhancement of the oxygen absorbability, and the like. In the α-amino acid, alanine is most preferred from the standpoint of the availability and the inexpensiveness thereof.

Preferred examples of the alcohol compound represented by the general formula (D-2) include an alcohol compound containing an aromatic hydrocarbon group, an alcohol compound containing a saturated or unsaturated alicyclic hydrocarbon group, an alcohol compound containing a linear or branched and saturated or unsaturated aliphatic hydrocarbon group, and an alcohol compound containing a heterocyclic group.

Examples of the alcohol compound containing an aromatic hydrocarbon group include phenol, benzyl alcohol, 1,2-benzenediol, 1,3-benzenediol and 1,4-benzenediol. Examples of the alcohol compound containing a saturated or unsaturated alicyclic hydrocarbon group include cyclohexanol, 1,2-cyclohexanediol, 1,3-cyclohexanediol and 1,4-cyclohexanediol. Examples of the an alcohol compound containing a linear or branched and saturated or unsaturated aliphatic hydrocarbon group include ethylene glycol, 1,3-propanediol, 1,4-butanediol, 1,5-pentanediol and 1,6-hexanediol. Examples of the alcohol compound containing a heterocyclic group include 2-hydroxypyridine and 2-hydroxyquinoline. Among these, ethylene glycol is preferred from the standpoint of the availability of the raw material and the oxygen absorbability.

The reaction condition in the dehydration condensation reaction of the compound represented by the general formula (D-1) and the alcohol compound represented by the general formula (D-2) is not particularly limited and may be determined appropriately. The reaction temperature is generally from 100 to 250°C, and preferably from 120 to 220°C. For accelerating the dehydration condensation reaction, an inorganic acid, such as hydrochloric acid and sulfuric acid, may be used as a catalyst.

The oxygen absorber (D) contains at least one of an ester compound represented by the general formula (D-I). That is, the oxygen absorber (D) may be a mixture of two or more of the ester compounds represented by the general formula (D-I). For example, in the case where the alcohol compound represented by the general formula (D-2) is a diol compound, the dehydration condensation reaction of the compound represented by the general formula (D-1) and the alcohol compound represented by the general formula (D-2) may result in an ester compound in the form of a dimer formed through reaction of one molecule of the compound represented by the general formula (D-1) and one molecule of the alcohol compound represented by the general formula (D-2), and an ester compound in the form of a trimer formed through reaction of two molecules of the compound represented by the general formula (D-1) and one molecule of the alcohol compound represented by the general formula (D-2). The oxygen absorber (D) may be the mixture of these compounds.

The ester compound constituting the oxygen absorber (D) has excellent oxygen absorbability. The oxygen absorption amount per 1 g of the ester compound constituting the oxygen absorber (D) is preferably 3 cc/g or more, and more preferably 5 cc/g or more. The upper limit of the oxygen absorption amount is not limited and is preferably as high as possible, but the upper limit is preferably 20 cc/g or less for providing a favorable oxygen absorber. The oxygen absorption amount may be measured according to the method shown in the examples described later.

The mechanism that the ester compound constituting the oxygen absorber (D) exhibits an oxygen absorption capability has not yet been clear, but is presumed as follows. The ester compound constituting the oxygen absorber (D) forms a radical through dissociation of the tertiary hydrogen, which is bonded to the carbon atom bonded to R^{D1}, as a proton. Specifically, it is considered that the carbonyl group as an electron attracting group and R^{D2}, such as an amino group, as an electron donating group are bonded to the carbon atom bonded to the tertiary hydrogen, and therefore, a considerably stable radical is formed through the phenomenon referred to as a captodative effect, in which the unpaired electron present on the carbon atom is energetically stabilized on the dissociation of the tertiary hydrogen as a proton. It is considered that when oxygen and water are present therein, oxygen is reacted with the radical to exhibit the oxygen absorption capability. It has been found that higher reactivity may be obtained under an environment with a higher humidity and a higher temperature.

The use form of the oxygen absorber (D) is preferably such a form that the ester compound represented by the general formula (D-I) is supported on a carrier, from the standpoint of the easiness on handling and the enhancement of the oxygen absorption rate. Examples of the carrier for supporting include diatom earth, activated carbon, zeolite, alumina, silica, titania, zirconia and ceria.

The oxygen absorber (D) is preferably used after filling in a small bag or the like. By disposing a small bag or the like having the oxygen absorber (D) filled therein in a packaging material, the oxygen concentration in the packaging material may be decreased, and thus an article in the packaging material may be stored in a favorable condition.

The oxygen absorber (D) may also be mixed in a resin material. A packaging material and a packaging container, which are obtained by molding a resin composition containing the oxygen absorber (D) mixed with a resin material, may maintain a low oxygen concentration in the packaging material, and thus may store an article in the packaging material in a favorable condition.

In the case where the oxygen absorber (D) is mixed in a resin material, the content of the oxygen absorber in the resin composition is preferably from 1 to 30% by mass, more preferably from 3 to 20% by mass, and further preferably from 5 to 10% by mass, from the standpoint of the oxygen absorption capability and the moldability and the appearance of the resin.

### Oxygen Absorber (E)

The oxygen absorber (E) contains at least one of a compound represented by the following general formula (E-I): 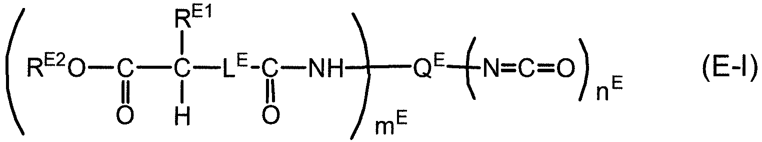 wherein R^{E1} represents a substituent; R^{E2} represents a hydrogen atom or a substituent; L^{E} represents an imino group, an ether group or a sulfide group; m^{E} represents an integer of from 1 to 4; n^{E} represents an integer of from 0 to 3, provided that m^{E} + n^{E} is from 1 to 4; and Q^{E} represents a hydrogen atom or an (m^{E} + n^{E})-valent group.

R^{E1} represents a substituent, and examples of the substituent include those exemplified in the substituent of R^{A1}. Preferred examples of R^{E1} are also the same as those of R^{A1}.

R^{E2} represents a hydrogen atom or a substituent, and examples of the substituent include those exemplified in the substituent of R^{E1}.

R^{E2} is preferably a hydrogen atom or a substituted or unsubstituted alkyl group, more preferably a hydrogen atom or a substituted or unsubstituted alkyl group having from 1 to 4 carbon atoms, and further preferably a hydrogen atom or a substituted or unsubstituted alkyl group having 1 or 2 carbon atoms.

Preferred examples of R^{E2} include a hydrogen atom, a methyl group, an ethyl group, a n-propyl group, an isopropyl group, a n-butyl group and a t-butyl group, but are not limited thereto. Among these, a methyl group and an ethyl group are more preferred.

L^{E} represents an imino group (-NH-), an ether group (-O-) or a sulfide group (-S-), and an imino group is preferred from the standpoint of the oxygen absorbability.

Q^{E} represents a hydrogen atom or an (m^{E} + n^{E})-valent group, and the (m^{E} + n^{E})-valent group may be a group containing at least one group selected from the group consisting of an aromatic hydrocarbon group, a saturated or unsaturated alicyclic hydrocarbon group and a linear or branched and saturated or unsaturated aliphatic hydrocarbon group, which may be a residual group that is formed by removing (m^{E} + n^{E}) hydrogen atoms from a mother compound containing at least one group selected from the group consisting of an aromatic hydrocarbon group, a saturated or unsaturated alicyclic hydrocarbon group and a linear or branched and saturated or unsaturated aliphatic hydrocarbon group. The aromatic hydrocarbon group, the saturated or unsaturated alicyclic hydrocarbon group and the linear or branched and saturated or unsaturated aliphatic hydrocarbon group each may be substituted or unsubstituted. Q^{E} may contain a hetero atom, and may contain an ether group, a sulfide group, a carbonyl group, a hydroxyl group, an amino group, a sulfoxide group, a sulfone group or the like. When Q^{E} represents a hydrogen atom, m^{E} = 1 and n^{E} = 0.

Examples of the mother compound that contains an aromatic hydrocarbon group include benzene, naphthalene, anthracene, phenanthrene, pyrene, biphenyl, diphenyl ether, diphenyl sulfide, diphenyl sulfoxide, diphenyl sulfone, a diphenylalkane, (such as diphenylmethane, diphenylethane and diphenylpropane), diphenylmethanone and anthraquinone. Examples of the group that contains an aromatic hydrocarbon group include a phenyl group, a benzyl group, a tolyl group, an o-phenylene group, a m-phenylene group, a p-phenylene group, a tolylene group, an o-xylylene group, a m-xylylene group, a p-xylylene group, a naphthyl group, a naphthylene group, an anthracenyl group, an anthracenylene group, a phenanthrenyl group, a phenanthrenylene group, a pyrenyl group, a pyrenylene group, a biphenylyl group, a biphenylylene group, a phenoxyphenyl group, an oxydiphenylene group, a phenylthiophenyl group, a thiodiphenylene group, a phenylsulfinylphenyl group, a sulfinyldiphenylene group, a phenylsulfonylphenyl group, a sulfonyldiphenylene group, an alkylenediphenylene group (such as a methylenediphenylene group, an ethylenediphenylene group and a propylenediphenylene group), a phenylcarbonylphenyl group, a carbonyldiphenylene group, an anthraquinonyl group and an anthraquinonylene group.

Examples of the mother compound that contains a saturated or unsaturated alicyclic hydrocarbon group include a compound containing a 3-membered to 6-membered ring, for example, cyclopropane, cyclobutane, cyclopentane, cyclohexane and a dicyclohexylalkane (such as dicyclohexylmethane, dicyclohexylethane and dicyclohexylpropane). Examples thereof also include a compound containing a condensed ring, such as decahydronaphthalene, and a compound containing a crosslinked structure, such as norbomane and adamantane. Examples of the group that contains a saturated or unsaturated alicyclic hydrocarbon group include a cyclopropyl group, a cyclobutyl group, a cyclopentyl group, a cyclohexyl group, a cyclohexylene group, a cyclohexylenedimethylene group, an alkylenedicyclohexylene group (such as a methylenedicyclohexylene group, an ethylenedicyclohexylene group and a propylenedicyclohexylene group), a decahydronaphthalenyl group, a decahydronaphthalenylene group, a norbomyl group and an adamantanyl group.

Examples of the mother compound that contains a linear or branched and saturated or unsaturated aliphatic hydrocarbon group include a linear or branched alkane having from 1 to 24 carbon atoms (such as methane, ethane, propane, n-butane, n-hexane, n-octane, n-nonane, n-decane, n-dodecane, n-octadecane, 2,2,4-trimethylhexane and 2,4,4-trimethylhexane). Examples of the group that contains a linear or branched and saturated or unsaturated aliphatic hydrocarbon group include a linear or branched alkyl group having from 1 to 24 carbon atoms (such as a methyl group, an ethyl group, a n-propyl group, a n-butyl group, a n-hexyl group, a n-octyl group, a n-dodecyl group and a n-octadecyl group), a linear or branched alkylene group having from 1 to 12 carbon atoms (such as a methylene group, an ethylene group, a n-propylene group, a n-butylene group, a n-hexylene group, a n-octylene group, a n-nonylene group, a n-decylene group, a n-dodecylene group, a 2,2,4-trimethylhexylene group and a 2,4,4-trimethylhexylene group).

m^{E} represents an integer of from 1 to 4, and n^{E} represents an integer of from 0 to 3, provided that m^{E} + n^{E} is from 1 to 4. m^{E} is preferably from 1 to 2, and more preferably 2. n^{E} is preferably 0. m^{E} + n^{E} is preferably from 1 to 2, and more preferably 2.

Preferred examples of the compound represented by the general formula (E-I) are shown below, but the present invention is not limited to these examples.

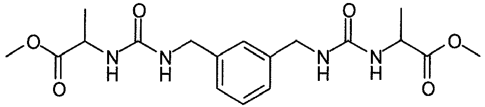

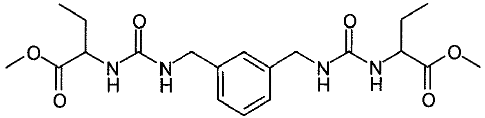

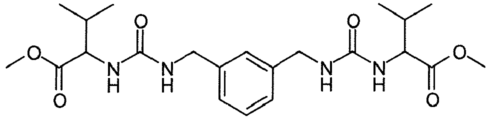

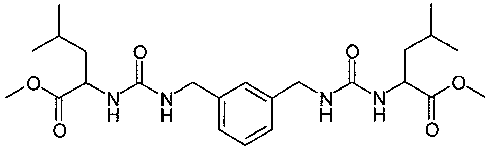

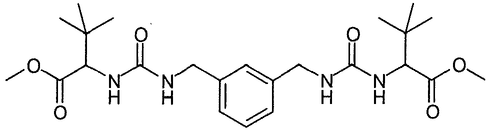

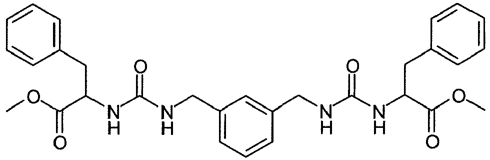

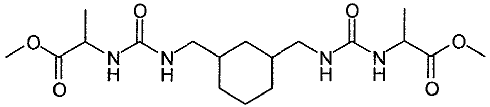

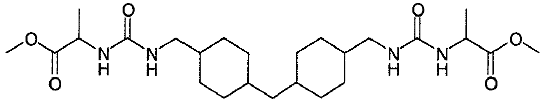

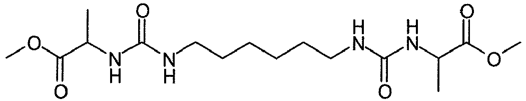

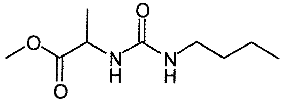

The production method of the compound represented by the general formula (E-I) will be described.

The production method of the compound represented by the general formula (E-I) is not particularly limited, and is preferably a method of producing the compound through reaction of a compound represented by the following general formula (E-1) and/or a hydrochloride salt thereof and a compound represented by the following general formula (E-2).

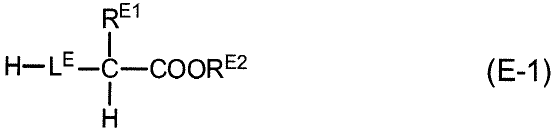

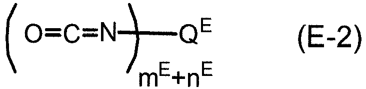

In the general formula (E-1), R^{E1}, R^{E2} and L^{E} have the same meanings as R^{E1}, R^{E2} and L^{E} in the general formula (E-I), and the preferred ranges thereof are also the same. In the general formula (E-2), m^{E}, n^{E} and Q^{E} have the same meanings as m^{E}, n^{E} and Q^{E} in the general formula (E-I), and the preferred ranges thereof are also the same.

Examples of the compound represented by the general formula (E-1) include an α-amino acid (such as alanine, 2-aminobutyric acid, valine, norvaline, leucine, norleucine, tert-leucine, isoleucine, serine, threonine, cysteine, methionine, 2-phenylglycine, phenylalanine, tyrosine, histidine and tryptophan), an alkyl ester of an α-amino acid (such as alanine methyl, methyl 2-aminobutyrate, valine methyl, norvaline methyl, leucine methyl, norleucine methyl, tert-leucine methyl, isoleucine methyl, serine methyl, threonine methyl, cysteine methyl, methionine methyl, 2-phenylglycine methyl, phenylalanine methyl, tyrosine methyl, histidine methyl and tryptophan methyl), an α-hydroxyacid (such as 2-hydroxybutyric acid, malic acid and tartaric acid), an alkyl ester of an α-hydroxyacid (such as ethyl 2-hydroxybutyrate, dimethyl malate and dimethyl tartarate), an α-mercaptoacid (such as 2-mercaptopropionic acid), and an alkyl ester of an α-mercaptoacid (such as ethyl 2-mercaptopropionate), but the compound is not limited to these examples. These compounds may be used solely or as a combination of two or more thereof.

In the case where the compound represented by the general formula (E-1) has an asymmetric carbon atom, the compound may be any of a D-isomer, an L-isomer and a racemic body, and may be an alloisomer.

Among these, an alkyl ester of an α-amino acid having tertiary hydrogen on the α-carbon is preferred from the standpoint of the easiness of synthesis, the enhancement of the oxygen absorbability, and the like. In the alkyl ester of an α-amino acid, alanine methyl is most preferred from the standpoint of the oxygen absorbability.

Preferred examples of the compound represented by the general formula (E-2) include isocyanic acid (where Q^{E} represents a hydrogen atom), a compound containing an aromatic hydrocarbon group, a compound containing a saturated or unsaturated alicyclic hydrocarbon group, and a compound containing a linear or branched and saturated or unsaturated aliphatic hydrocarbon group.

Examples of the compound containing an aromatic hydrocarbon group include phenyl isocyanate, tolyl isocyanate, benzyl isocyanate, 1-naphthyl isocyanate, 2-biphenyl isocyanate, 1,4-phenylene diisocyanate, tolylene 2,6-diisocyanate, m-xylylene diisocyanate, 3,3'-dimethyl-4,4'-diisocyanatobiphenyl and 4,4'-diphenylmethane diisocyanate. Examples of the compound containing a saturated or unsaturated alicyclic hydrocarbon group include cyclohexyl isocyanate, 1,3-bis(isocyanatomethyl)cyclohexane and 4,4'-dicyclohexylmethane diisocyanate. Examples of the compound containing a linear or branched and saturated or unsaturated aliphatic hydrocarbon group include methyl isocyanate, ethyl isocyanate, propyl isocyanate, butyl isocyanate, hexyl isocyanate, dodecyl isocyanate, octadecyl isocyanate, hexamethylene diisocyanate and trimethylhexamethylene diisocyanate. Among these, m-xylylene diisocyanate is preferred from the standpoint of the oxygen absorbability.

The reaction condition in the reaction of the compound represented by the general formula (E-1) and/or a hydrochloride salt thereof and the compound represented by the general formula (E-2) is not particularly limited and may be determined appropriately. The reaction temperature is generally from 30 to 150°C, and preferably from 40 to 100°C. For accelerating the reaction, a tertiary amine catalyst, such as triethylamine, tripropylamine, triethylenediamine and diazabicycloundecene, and the like may be used.

The oxygen absorber (E) contains at least one of a compound represented by the general formula (E-I). That is, the oxygen absorber (E) may be a mixture of two or more of the compounds represented by the general formula (E-I). For example, in the case where the compound represented by the general formula (E-2) is a diisocyanate (i.e., in the case where m^{E} + n^{E} = 2), the condensation reaction of the compound represented by the general formula (E-1) and the compound represented by the general formula (E-2) may result in a compound in the form of a dimer formed through reaction of one molecule of the compound represented by the general formula (E-1) and one molecule of the compound represented by the general formula (E-2), and a compound in the form of a trimer formed through reaction of two molecules of the compound represented by the general formula (E-1) and one molecule of the compound represented by the general formula (E-2). The oxygen absorber (E) may be the mixture of these compounds.

The compound constituting the oxygen absorber (E) has excellent oxygen absorbability. The oxygen absorption amount per 1 g of the compound constituting the oxygen absorber (E) is preferably 3 cc/g or more, and more preferably 5 cc/g or more. The upper limit of the oxygen absorption amount is not limited and is preferably as high as possible, but the upper limit is preferably 20 cc/g or less for providing a favorable oxygen absorber. The oxygen absorption amount may be measured according to the method shown in the examples described later.

The mechanism that the compound constituting the oxygen absorber (E) exhibits an oxygen absorption capability has not yet been clear, but is expected as follows. The compound constituting the oxygen absorber (E) forms a radical through dissociation of the tertiary hydrogen, which is bonded to the carbon atom positioned between the carbonyl group and L^{E}, as a proton. Specifically, it is considered that the carbonyl group as an electron attracting group and L^{E} as an electron donating group are bonded to the carbon atom bonded to the tertiary hydrogen, and therefore, a considerably stable radical is formed through the phenomenon referred to as a captodative effect, in which the unpaired electron present on the carbon atom is energetically stabilized on the dissociation of the tertiary hydrogen as a proton. It is considered that when oxygen and water are present therein, oxygen is reacted with the radical to exhibit the oxygen absorption capability. It has been found that higher reactivity may be obtained under an environment with a higher humidity and a higher temperature.

The use form of the oxygen absorber (E) is preferably such a form that the compound represented by the general formula (E-I) is supported on a carrier, from the standpoint of the easiness on handling and the enhancement of the oxygen absorption rate. Examples of the carrier for supporting include diatom earth, activated carbon, zeolite, alumina, silica, titania, zirconia and ceria.

The oxygen absorber (E) is preferably used after filling in a small bag or the like. By disposing a small bag or the like having the oxygen absorber (E) filled therein in a packaging material, the oxygen concentration in the packaging material may be decreased, and thus an article in the packaging material may be stored in a favorable condition.

The oxygen absorber (E) may also be mixed in a resin material. A packaging material and a packaging container, which are obtained by molding a resin composition containing the oxygen absorber (E) mixed with a resin material, may maintain a low oxygen concentration in the packaging material, and thus may store an article in the packaging material in a favorable condition.

In the case where the oxygen absorber (E) is mixed in a resin material, the content of the oxygen absorber in the resin composition is preferably from 1 to 30% by mass, more preferably from 3 to 20% by mass, and further preferably from 5 to 10% by mass, from the standpoint of the oxygen absorption capability and the moldability and the appearance of the resin.

### Oxygen Absorber (F)

The oxygen absorber (F) contains at least one of a compound represented by any one of the following general formulae (F-I) to (F-III): 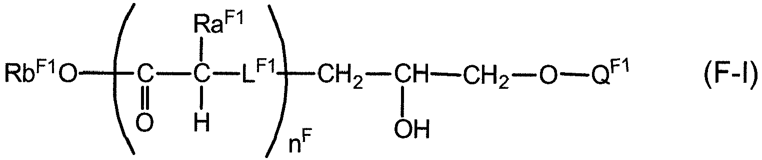 wherein Ra^{F1} represents a substituent; Rb^{F1} represents a hydrogen atom or a substituent; Q^{F1} represents a hydrogen atom or a substituent; L^{F1} represents an imino group, an ether group or a sulfide group; and n^{F} represents an integer of from 1 to 2, 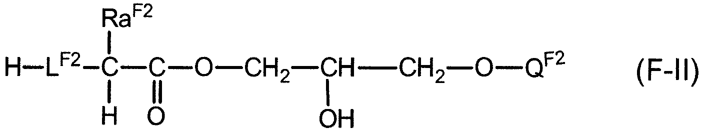 wherein Ra^{F2} represents a substituent; Q^{F2} represents a hydrogen atom or a substituent; and L^{F2} represents an imino group, an ether group, a sulfide group or a substituted or unsubstituted alkylene group, 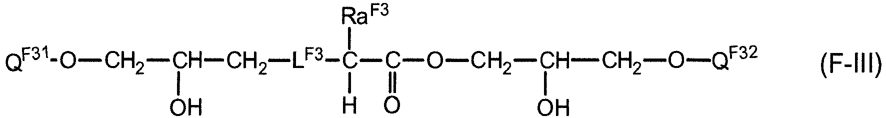 wherein Ra^{F3} represents a substituent; Q^{F31} and Q^{F32} each represent a hydrogen atom or a substituent; and L^{F3} represents an imino group, an ether group or a sulfide group.

Ra^{F1} in the general formula (F-I), Ra^{F2} in the general formula (F-II) and Ra^{F3} in the general formula (F-III) each represent a substituent, and examples of the substituent include those exemplified in the substituent of R^{A1}. Preferred examples of Ra^{F1}, Ra^{F2} and Ra^{F3} are also the same as those of R^{A1}.

Rb^{F1} in the general formula (F-I) represents a hydrogen atom or a substituent, and examples of the substituent include those exemplified in the substituents represented by Ra^{F1}, Ra^{F2} and Ra^{F3}.

Rb^{F1} is preferably a hydrogen atom or a substituted or unsubstituted alkyl group, more preferably a hydrogen atom or a substituted or unsubstituted alkyl group having from 1 to 4 carbon atoms, and further preferably a hydrogen atom or a substituted or unsubstituted alkyl group having 1 or 2 carbon atoms.

Preferred examples of Rb^{F1} include a hydrogen atom, a methyl group, an ethyl group, a n-propyl group, an isopropyl group, a n-butyl group and a t-butyl group, but are not limited thereto. Among these, a methyl group and an ethyl group are more preferred.

Q^{F1} in the general formula (F-I), Q^{F2} in the general formula (F-II) and Q^{F31} and Q^{F32} in the general formula (F-III) each represent a hydrogen atom or a substituent, and examples of the substituent include those exemplified in the substituents represented by Ra^{F1}, Ra^{F2} and Ra^{F3}. Q^{F31} and Q^{F32} may be the same as or different from each other.

Q^{F1} Q^{F2}, Q^{F31} and Q^{F32} each preferably represent a hydrogen atom, a substituted or unsubstituted alkyl group, a substituted or unsubstituted alkenyl group or a substituted or substituted aryl group, more preferably represent a hydrogen atom, a substituted or unsubstituted alkyl group having from 1 to 24 carbon atoms, a substituted or unsubstituted alkenyl group having from 1 to 6 carbon atoms or a substituted or substituted aryl group having from 6 to 10 carbon atoms, and more preferably represent a hydrogen atom, a substituted or unsubstituted alkyl group having from 1 to 12 carbon atoms or a substituted or unsubstituted alkenyl group having from 1 to 4 carbon atoms.

Preferred examples of Q^{F1}, preferred examples of Q^{F2}, preferred examples of Q^{F31} and preferred examples of Q^{F32} each include a hydrogen atom, a methyl group, an ethyl group, a n-propyl group, an isopropyl group, a n-butyl group, a t-butyl group, a 2-ethylhexyl group, a decyl group, a stearyl group, an allyl group, a phenyl group and a benzyl group, but are not limited to these examples. Among these, an allyl group is preferred from the standpoint of the oxygen absorbability.

L^{F1} in the general formula (F-I) represents an imino group (-NH-), an ether group (-O-) or a sulfide group (-S-). L^{F1} is preferably an imino group from the standpoint of the oxygen absorbability.

L^{F2} in the general formula (F-II) represents an imino group (-NH-), an ether group (-O-), a sulfide group (-S-) or a substituted or unsubstituted alkylene group. The carbon number of the alkylene group is preferably from 1 to 4. L^{F2} is preferably an imino group, an ether group, a sulfide group or a methylene group from the standpoint of the oxygen absorbability, and among these, an imino group is more preferred.

L^{F3} in the general formula (F-III) represents an imino group (-NH-), an ether group (-O-) or a sulfide group (-S-). L^{F3} is preferably an imino group from the standpoint of the oxygen absorbability.

n^{F} in the general formula (F-I) represents an integer of from 1 to 2. When n^{F} represents 2, plural groups represented by Ra^{F1} may be the same as or different from each other, and plural groups represented by L^{F1} may be the same as or different from each other.

Preferred examples of the compound represented by any one of the following general formulae (F-I) to (F-III) are shown below, but the present invention is not limited to these examples.

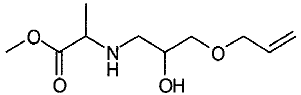

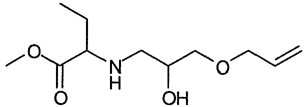

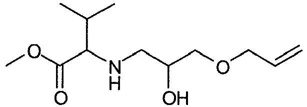

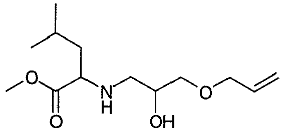

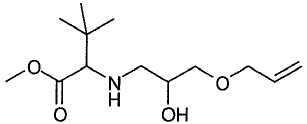

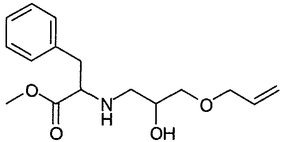

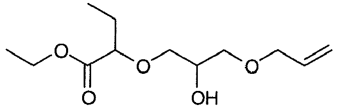

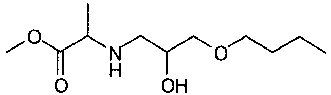

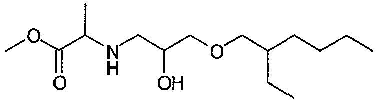

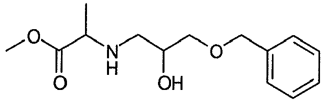

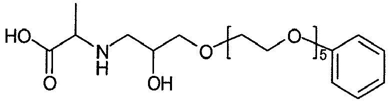

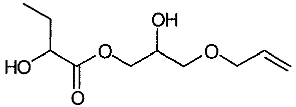

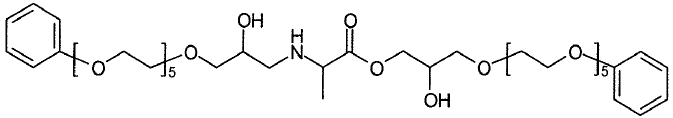

The production method of the compound represented by any one of the following general formulae (F-I) to (F-III) will be described.

The production method of the compound represented by any one of the following general formulae (F-I) to (F-III) is not particularly limited, and is preferably a method of producing the compound through epoxy ring-opening reaction of a compound represented by the following general formula (F-i) and/or a hydrochloride salt thereof and a compound represented by the following general formula (F-ii). 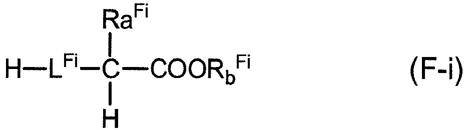 wherein Ra^{Fi} represents a substituent; Rb^{Fi} represents a hydrogen atom or a substituent;
and L^{Fi} represents an imino group, an ether group, a sulfide group or a substituted or unsubstituted alkylene group, provided that when L^{F1} is a substituted or unsubstituted alkylene group, Rb^{Fi} represents a hydrogen atom, 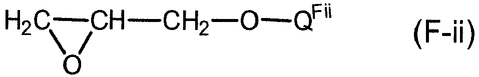 wherein Q^{Fii} represents a hydrogen atom or a substituent.

Ra^{Fi} in the general formula (F-i) is a moiety that corresponds, after the reaction, to Ra^{F1} in the general formula (F-I), Ra^{F2} in the general formula (F-II) and Ra^{F3} in the general formula (F-III). Accordingly, Ra^{Fi} has the same meaning as Ra^{F1}, Ra^{F2} and Ra^{F3}.

Rb^{Fi} in the general formula (F-i) is a moiety that corresponds, after the reaction, to Rb^{F1} in the general formula (F-I). Accordingly, Rb^{Fi} has the same meaning as Rb^{F1} provided that when L^{F1} is a substituted or unsubstituted alkylene group, Rb^{Fi} is a hydrogen atom.

L^{Fi} in the general formula (F-i) is a moiety that corresponds, after the reaction, to L^{F1} in the general formula (F-I), L^{F2} in the general formula (F-II) and L^{F3} in the general formula (F-III). Accordingly, L^{Fi} represents an imino group (-NH-), an ether group (-O-), a sulfide group (-S-) or a substituted or unsubstituted alkylene group, and an imino group is preferred.

Q^{Fii} in the general formula (F-ii) is a moiety that corresponds, after the reaction, to Q^{F1} in the general formula (F-I), Q^{F2} in the general formula (F-II) and Q^{F31} or Q^{F32} in the general formula (F- III). Accordingly, Q^{Fii} has the same meaning as Q^{F1}, Q^{F2} Q^{F31}, and Q^{F32}.

Examples of the compound represented by the general formula (F-i) include an α-amino acid (such as alanine, 2-aminobutyric acid, valine, norvaline, leucine, norleucine, tert-leucine, isoleucine, serine, threonine, cysteine, methionine, 2-phenylglycine, phenylalanine, tyrosine, histidine and tryptophan), an alkyl ester of an α-amino acid (such as alanine methyl, methyl 2-aminobutyrate, valine methyl, norvaline methyl, leucine methyl, norleucine methyl, tert-leucine methyl, isoleucine methyl, serine methyl, threonine methyl, cysteine methyl, methionine methyl, 2-phenylglycine methyl, phenylalanine methyl, tyrosine methyl, histidine methyl and tryptophan methyl), an α-hydroxyacid (such as 2-hydroxybutyric acid, malic acid and tartaric acid), an alkyl ester of an α-hydroxyacid (such as ethyl 2-hydroxybutyrate, dimethyl malate and dimethyl tartarate), an α-mercaptoacid (such as 2-mercaptopropionic acid), an alkyl ester of an α-mercaptoacid (such as ethyl 2-mercaptopropionate), and a carboxylic acid having an alkyl group at the α-position, such as 2-methylbutyric acid, methylmalonic acid and methylsuccinic acid), but the compound is not limited to these examples. These compounds may be used solely or as a combination of two or more thereof.

In the case where the compound represented by the general formula (F-i) has an asymmetric carbon atom, the compound may be any of a D-isomer, an L-isomer and a racemic body, and may be an alloisomer.

Among these, an alkyl ester of an α-amino acid having tertiary hydrogen on the α-carbon is preferred from the standpoint of the easiness of synthesis, the enhancement of the oxygen absorbability, and the like. In the alkyl ester of an α-amino acid, alanine methyl is most preferred from the standpoint of the oxygen absorbability.

Examples of the compound represented by the general formula (F-ii) include glycidol, methyl glycidyl ether, ethyl glycidyl ether, allyl glycidyl ether, butyl glycidyl ether, tert-butyl glycidyl ether, 2-ethylhexyl glycidyl ether, decyl glycidyl ether, stearyl glycidyl ether, phenyl glycidyl ether and benzyl glycidyl ether, but the compound is not limited to these examples. These compounds may be used solely or as a combination of two or more thereof.

Among these, allyl glycidyl ether is preferred from the standpoint of the availability of the raw material, the enhancement of the oxygen absorption capability, and the like.

The reaction condition in the epoxy ring-opening reaction of the compound represented by the general formula (F-i) and/or a hydrochloride salt thereof and the compound represented by the general formula (F-ii) is not particularly limited and may be determined appropriately. The reaction temperature is generally from 30 to 150°C, and preferably from 40 to 100°C.

The oxygen absorber (F) contains at least one of a compound represented by any one of the general formulae (F-I) to (F-III). That is, the oxygen absorber (F) may contain a compound represented by any one of the general formulae (F-I) to (F-III) or a mixture of the compounds (i.e., a mixture of two or more of the compounds of the general formula (F-I), a mixture of two or more of the compounds of the general formula (F-II), a mixture of two or more of the compounds of the general formula (F-III), a mixture of at least one of the compound of the general formula (F-I) and at least one of the compound of the general formula (F-II), a mixture of at least one of the compound of the general formula (F-I) and at least one of the compound of the general formula (F-III), a mixture of at least one of the compound of the general formula (F-II) and at least one of the compound of the general formula (F-III), and a mixture of at least one of the compound of the general formula (F-I), at least one of the compound of the general formula (F-II) and at least one of the compound of the general formula (F-III)).

For example, the epoxy ring-opening reaction of the compound represented by the general formula (F-i) and the compound represented by the general formula (F-ii) may result in a compound in the form of a dimer formed through reaction of one molecule of the compound represented by the general formula (F-i) and one molecule of the compound represented by the general formula (F-ii), and a compound in the form of a trimer formed through reaction of two molecules of the compound represented by the general formula (F-i) and one molecule of the compound represented by the general formula (F-ii).

The oxygen absorber (F) preferably contains at least one of the compound of the general formula (F-I) from the standpoint of the easiness of synthesis.

The compound constituting the oxygen absorber (F) has excellent oxygen absorbability. The oxygen absorption amount per 1 g of the compound constituting the oxygen absorber (F) is preferably 5 cc/g or more, and more preferably 10 cc/g or more. The upper limit of the oxygen absorption amount is not limited and is preferably as high as possible, but the upper limit is preferably 30 cc/g or less for providing a favorable oxygen absorber. The oxygen absorption amount may be measured according to the method shown in the examples described later.

The mechanism that the compound constituting the oxygen absorber (F) exhibits an oxygen absorption capability has not yet been clear, but is presumed as follows. The compound constituting the oxygen absorber (F) forms a radical through dissociation of the tertiary hydrogen, which is bonded to the carbon atom positioned between the carbonyl group and L^{F1} (or L^{F2} or L^{F3}), as a proton. Specifically, it is considered that the carbonyl group as an electron attracting group and L^{F1} (or L^{F2} or L^{F3}) as an electron donating group are bonded to the carbon atom bonded to the tertiary hydrogen, and therefore, a considerably stable radical is formed through the phenomenon referred to as a captodative effect, in which the unpaired electron present on the carbon atom is energetically stabilized on the dissociation of the tertiary hydrogen as a proton. It is considered that when oxygen and water are present therein, oxygen is reacted with the radical to exhibit the oxygen absorption capability. It has been found that higher reactivity may be obtained under an environment with a higher humidity and a higher temperature.

The use form of the oxygen absorber (F) is preferably such a form that the compound represented by any one of the general formulae (F-I) to (F-III) is supported on a carrier, from the standpoint of the easiness on handling and the enhancement of the oxygen absorption rate. Examples of the carrier for supporting include diatom earth, activated carbon, zeolite, alumina, silica, titania, zirconia and ceria.

The oxygen absorber (F) is preferably used after filling in a small bag or the like. By disposing a small bag or the like having the oxygen absorber (F) filled therein in a packaging material, the oxygen concentration in the packaging material may be decreased, and thus an article in the packaging material may be stored in a favorable condition.

The oxygen absorber (F) may also be mixed in a resin material. A packaging material and a packaging container, which are obtained by molding a resin composition containing the oxygen absorber (F) mixed with a resin material, may maintain a low oxygen concentration in the packaging material, and thus may store an article in the packaging material in a favorable condition.

In the case where the oxygen absorber (F) is mixed in a resin material, the content of the oxygen absorber in the resin composition is preferably from 1 to 30% by mass, more preferably from 3 to 20% by mass, and further preferably from 5 to 10% by mass, from the standpoint of the oxygen absorption capability and the moldability and the appearance of the resin.

### EXAMPLES

The present invention will be described in more detail with reference to examples below, but the present invention is not limited to the examples. The evaluation methods employed in Examples and Comparative Examples are as follows.

### (1) Compositional Analysis

The compounds synthesized in Examples and Comparative Examples were subjected to compositional analysis with gas chromatography and a mass spectrometer (Model 6890N, 5975, produced by Agilent Technologies, Inc., column: CP-Sil 8CB for amines, 30 m × 0.25 mm in diameter × 0.25 µm). The measurement conditions were that He was fed as a carrier gas at 1 mL/min, the injection temperature was 300°C, and the oven temperature was increased from 50°C to 300°C at 10°C per minute.

In Examples A-1 to A-13, Comparative Examples A-1 to A-3, Examples D-1 to D-13 and Comparative Examples D-1 and D-2, 10 mg of the compound synthesized was dissolved in 10 mL of methanol and then subjected to the measurement. In Examples B-1 to B-11, Comparative Examples B-1 to B-3, Examples C-1 to C-12 and Comparative Examples C-1 to C-3, 10 mg of the compound synthesized was dissolved in 10 mL of methanol, to which 100 µL of 10N HCl was added thereto for esterifying the carboxylic acid terminal, and then subjected to the measurement.

### (2) Oxygen Absorption Amount

The specimen shown below was charged in a bag formed of an aluminum foil-laminated films having a dimension of 25 cm x 18 cm with three edges thereof sealed, along with cotton having 10 mL of water contained, and the bag was sealed to make the air amount in the bag of 400 mL. The humidity in the bag was 100%RH (relative humidity). After storing the bag at 40°C for 28 days, the oxygen concentration in the bag was measured with an oxygen content meter (LC-700F, a trade name, produced by Toray Engineering Co., Ltd.), and the oxygen absorption amount (cc/g) was calculated from the oxygen concentration. A larger value is preferred due to the excellent oxygen absorption capability.

### Specimen

In Examples A-1 to A-13 and Comparative Examples A-1 and A-2, cotton containing 2 g of the amide compound synthesized was used as a specimen.

In Comparative Example A-3, 2 g of a powder matter of the phthalimide compound synthesized was wrapped in medical paper and used as a specimen.

In Examples B-1 to B-11, Comparative Examples B-1 to B-3, Examples C-1 to C-12, Comparative Examples C-1 to C-3, Examples D-1 to D-13 and Comparative Examples D-1 and D-2, 2 g of the compound synthesized was wrapped in medical paper and used as a specimen.

In Examples E-1 to E-9, Comparative Examples E-1 and E-2, Examples F-1 to F-10 and Comparative Examples F-1 to F-3, cotton containing 4 g of a solution containing the compound synthesized was used as a specimen.

In Examples A-14 to A-19, Comparative Examples A-4 to A-6, Examples B-12 to B-17, Comparative Examples B-4 to B-6, Examples C-13 to C-18, Comparative Examples C-4 to C-6, Examples D-14 to D-19 and Comparative Examples D-3 and D-4, a film having a thickness of approximately 100 µm produced by mixing the compound synthesized was cut into 400 cm² and used as a specimen.

### Example A-1

Precisely weighed 98.00 g (1.1 mol) of DL-alanine (produced by Musashino Chemical Laboratory, Ltd.) and 74.91 g (0.55 mol) of m-xylylenediamine (produced by Mitsubishi Gas Chemical Co., Inc.) were charged in a reaction vessel having an internal capacity of 300 mL equipped with a stirrer, a partial condenser, a total condenser, a thermometer and a nitrogen introduction tube, and after the system was sufficiently replaced with nitrogen, the content was heated under stirring in a small amount of a nitrogen stream, and heated to 220°C while removing condensation water produced outside the system. The content was continuously heated to 220°C until the formation of condensation water was completed, and then cooled to room temperature, thereby providing an amide compound A-1.

The GC chart of the amide compound A-1 synthesized is shown in Fig. 1. The resulting amide compound A-1 was identified from Fig. 1 as a mixture of 2-amino-N-(3-aminomethylbenzyl)-propionamide (i.e., an amide compound in the form of a dimer of one molecule of DL-alanine and one molecule of m-xylylenediamine) and N,N'-m-xylylenebis(2-aminopropionamide) (i.e., an amide compound in the form of a trimer of two molecules of DL-alanine and one molecule of m-xylylenediamine).

In Examples A-2 to A-13 and Comparative Examples A-1 to A-3 below, the synthesized amide compounds and phthalimide compounds were also identified in the same manner.

### Example A-2

An amide compound A-2 was obtained in the same manner as in Example A-1 except that DL-alanine was changed to DL-2-aminobutyric acid (purified product, produced by Japan Finechem Co., Inc.).

### Example A-3

An amide compound A-3 was obtained in the same manner as in Example A-1 except that DL-alanine was changed to DL-valine (produced by Sinogel Amino Acid Co., Ltd.).

### Example A-4

An amide compound A-4 was obtained in the same manner as in Example A-1 except that DL-alanine was changed to DL-leucine (produced by Ningbo Haishuo Biotechnology Co., Ltd.).

### Example A-5

An amide compound A-5 was obtained in the same manner as in Example A-1 except that DL-alanine was changed to DL-tert-leucine (produced by Japan Finechem Co., Inc.).

### Example A-6

An amide compound A-6 was obtained in the same manner as in Example A-1 except that DL-alanine was changed to DL-phenylalanine (produced by Sinogel Amino Acid Co., Ltd.).

### Example A-7

An amide compound A-7 was obtained in the same manner as in Example A-1 except that DL-alanine was changed to DL-2-hydroxybutyric acid (produced by Tokyo Chemical Industry Co., Ltd.).

### Example A-8

An amide compound A-8 was obtained in the same manner as in Example A-1 except that DL-alanine was changed to DL-2-methylbutyric acid (produced by Tokyo Chemical Industry Co., Ltd.).

### Example A-9

An amide compound A-9 was obtained in the same manner as in Example A-1 except that m-xylylenediamine was changed to 4,4'-diaminodiphenyl ether (produced by Tokyo Chemical Industry Co., Ltd.).

### Example A-10

An amide compound A-10 was obtained in the same manner as in Example A-1 except that m-xylylenediamine was changed to 1,3-bis(aminomethyl)cyclohexane (produced by Mitsubishi Gas Chemical Co., Inc.).

### Example A-11

An amide compound A-11 was obtained in the same manner as in Example A-1 except that m-xylylenediamine was changed to hexamethylenediamine (produced by Wako Pure Chemical Industries, Ltd.), and the final reaction temperature was changed to 200°C.

### Example A-12

An amide compound A-12 was obtained in the same manner as in Example A-1 except that m-xylylenediamine was changed to 1,4-butanediol bis(3-aminopropyl) ether (produced by Tokyo Chemical Industry Co., Ltd.).

### Example A-13

An amide compound A-13 was obtained in the same manner as in Example A-1 except that m-xylylenediamine was changed to benzylamine (produced by Wako Pure Chemical Industries, Ltd.).

### Comparative Example A-1

An amide compound A-14 was obtained in the same manner as in Example A-1 except that DL-alanine was changed to glycine having secondary hydrogen at the α-position (produced by Kanto Chemical Co., Inc.).

### Comparative Example A-2

An amide compound A-15 was obtained in the same manner as in Example A-1 except that DL-alanine was changed to 2-aminoisobutyric acid having no hydrogen at the α-position (purified product, 2-amino-2-methylpropanoic acid, produced by Japan Finechem Co., Inc.).

### Comparative Example A-3

Precisely weighed 118.50 g (0.80 mol) of phthalic anhydride (produced by Kanto Chemical Co., Inc.) was charged in a reaction vessel having an internal capacity of 300 mL equipped with a stirrer, a partial condenser, a total condenser, a thermometer, dropping funnel and a nitrogen introduction tube, and after the system was sufficiently replaced with nitrogen, the content was heated under stirring in a small amount of a nitrogen stream, and heated to 140°C. 54.48 g (0.40 mol) of m-xylylenediamine (produced by Mitsubishi Gas Chemical Co., Inc.) was added dropwise to molten phthalic anhydride, and the content was heated to 260°C while removing condensation water produced outside the system. The content was continuously heated to 260°C until the formation of condensation water was completed, and then cooled to room temperature, thereby providing a phthalimide compound.

**Table 1**

| | Amide compound No. | Raw material monomers | Product | Oxygen absorption amount * (cc/g) |
|---|---|---|---|---|
| Example A-1 | A-1 | DL-alanine | 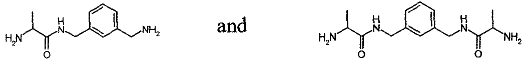 | 12.9 |
| | | m-xylylenediamine | | |
| Example A-2 | A-2 | DL-2-aminobutyric acid | 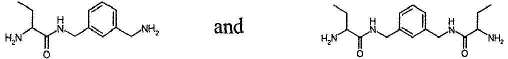 | 11.8 |
| | | m-xylylenediamine | | |
| Example A-3 | A-3 | DL-valine | 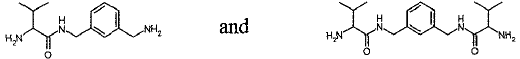 | 11.1 |
| | | m-xylylenediamine | | |
| Example A-4 | A-4 | DL-leucine | 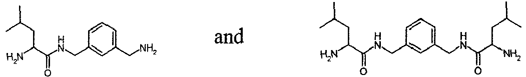 | 10.5 |
| | | m-xylylenediamine | | |
| Example A-5 | A-5 | DL-tert-leucine | 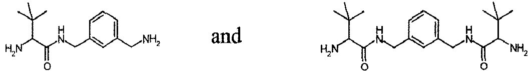 | 10.3 |
| | | m-xylylenediamine | | |
| Example A-6 | A-6 | DL-phenylalanine | 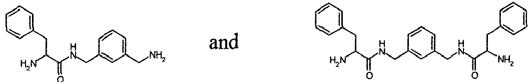 | 11.6 |
| | | m-xylylenediamine | | |
| Example A-7 | A-7 | DL-2-hydroxybutyric acid | 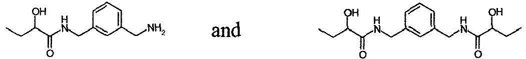 | 7.8 |
| | | m-xylylenediamine | | |
| Example A-8 | A-8 | DL-2-methylbutyric acid | 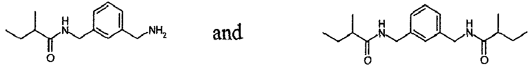 | 5.2 |
| | | m-xylylenediamine | | |
| Example A-9 | A-9 | DL-alanine | 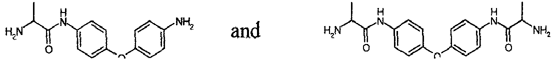 | 4.7 |
| | | 4,4'-diaminodiphenyl ether | | |
| Example A-10 | A-10 | DL-alanine | 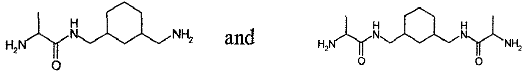 | 6.8 |
| | | 1,3-bis(aminomethyl)-cyclohexane | | |
| Example A-11 | A-11 | DL-alanine | 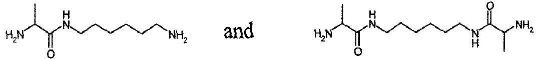 | 4.8 |
| | | hexamethylenediamine | | |
| Example A-12 | A-12 | DL-alanine | 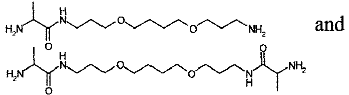 | 3.9 |
| | | 1,4-butanediol bis(3-aminopropyl) ether | | |
| Example A-13 | A-13 | DL-alanine | 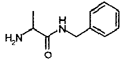 | 9.3 |
| | | benzylamine | | |
| Comparative Example A-1 | A-14 | glycine | 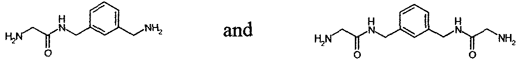 | 0.3 |
| | | m-xylylenediamine | | |
| Comparative Example A-2 | A-15 | 2-aminoisobutyric acid | 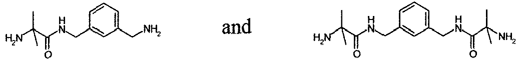 | 0.4 |
| | | m-xylylenediamine | | |
| Comparative Example A-3 | phthalimide compound | phthalic anhydride | 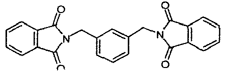 | 0.4 |
| | | m-xylylenediamine | | |

| | | | | |
|---|---|---|---|---|
| * Oxygen absorption amount (40°C, 100%RH, after 28 days) | | | | |

The amide compounds that were obtained by using glycine and 2-aminoisobutyric acid, which each were an α-amino acid having no tertiary hydrogen at the α-position, exhibited substantially no oxygen absorption capability (Comparative Example A-1 and Comparative Example A-2). The phthalimide compound had been used as an oxygen scavenger in combination with a transition metal catalyst, such as cobalt, but exhibited substantially no oxygen absorption capability in the system containing no transition metal added (Comparative Example A-3). On the other hand, the amide compound represented by the general formula (A-I) obtained by using an α-amino acid that has tertiary hydrogen at the α-position exhibits an oxygen absorption capability without the use of a transition metal (Examples A-1 to A-13).

### Example A-14

90 g of the amide compound A-1 obtained in Example A-1 and 500 g of methanol were charged in an eggplant flask having an inner capacity of 1,000 mL, and stirred for dissolving the amide compound A-1, to which 30 g of diatom earth (Microcel E, a trade name, produced by Tokyo Diatom Earth Co., Ltd.) was then added. Methanol was removed from the mixture with a rotary evaporator while the mixture was heated to 40°C over an oil, thereby providing a supported amide compound.

The supported amide compound was added to linear low density polyethylene (LLDPE, Novatec LL UF240, a trade name, produced by Japan Polyethylene Corporation) in an amount of 10% by mass, and then dry-mixed. The resulting mixture was formed into a film with a twin screw extruder having two screws having a diameter of 30 mm at an extrusion temperature of 180°C, a screw rotation number of 40 rpm, a feed screw rotation number of 18 rpm and a dragging speed of 2.6 m/min, thereby producing an amide compound mixture film A-1 having a width of 200 mm and a thickness of from 95 to 105 µm.

### Example A-15

An amide compound mixture film A-2 was produced in the same manner as in Example A-14 except that the amide compound A-1 was replaced by the amide compound A-2 obtained in Example A-2.

### Example A-16

An amide compound mixture film A-3 was produced in the same manner as in Example A-14 except that the amide compound A-1 was replaced by the amide compound A-3 obtained in Example A-3.

### Example A-17

An amide compound mixture film A-4 was produced in the same manner as in Example A-14 except that the amide compound A-1 was replaced by the amide compound A-4 obtained in Example A-4.

### Example A-18

An amide compound mixture film A-5 was produced in the same manner as in Example A-14 except that the amide compound A-1 was replaced by the amide compound A-5 obtained in Example A-5.

### Example A-19

An amide compound mixture film A-6 was produced in the same manner as in Example A-14 except that the amide compound A-1 was replaced by the amide compound A-6 obtained in Example A-6.

### Comparative Example A-4

An amide compound mixture film A-7 was produced in the same manner as in Example A-14 except that the amide compound A-1 was replaced by the amide compound A-14 obtained in Comparative Example A-1.

### Comparative Example A-5

An amide compound mixture film A-8 was produced in the same manner as in Example A-14 except that the amide compound A-1 was replaced by the amide compound A-15 obtained in Comparative Example A-2.

### Comparative Example A-6

An amide compound mixture film A-9 was produced in the same manner as in Example A-14 except that the amide compound A-1 was replaced by the phthalimide compound obtained in Comparative Example A-3, and the phthalimide compound was not supported on diatom earth and was added to LLDPE.

**Table 2**

| | Film No. | Composition of film | Content of supported amide compound or phthalimide compound (% by mass) | Oxygen absorption amount (cc/g) 40°C, 100%RH, after 28 days |
|---|---|---|---|---|
| Example A-14 | A-1 | LLDPE / amide compound A-1 | 10 | 5.7 |
| Example A-15 | A-2 | LLDPE / amide compound A-2 | 10 | 5.4 |
| Example A-16 | A-3 | LLDPE / amide compound A-3 | 10 | 5.3 |
| Example A-17 | A-4 | LLDPE / amide compound A-4 | 10 | 5.1 |
| Example A-18 | A-5 | LLDPE / amide compound A-5 | 10 | 5.1 |
| Example A-19 | A-6 | LLDPE / amide compound A-6 | 10 | 5.4 |
| Comparative Example A-4 | A-7 | LLDPE / amide compound A-14 | 10 | 0.2 |
| Comparative Example A-5 | A-8 | LLDPE / amide compound A-15 | 10 | 0.2 |
| Comparative Example A-6 | A-9 | LLDPE / phthalimide compound | 10 | 0.3 |

As apparent from Table 2, the oxygen absorber (A) may be mixed in a resin material, and a film formed of a resin composition containing the oxygen absorber (A) exhibits an oxygen absorption capability without the use of a transition metal (Examples A-14 to A-19).

### Example B-1

Precisely weighed 106.91 g (1.2 mol) of DL-alanine (produced by Musashino Chemical Laboratory, Ltd.) and 58.46 g (0.40 mol) of adipic acid (produced by Asahi Kasei Chemicals Corporation) were charged in a reaction vessel having an internal capacity of 300 mL equipped with a stirrer, a partial condenser, a total condenser, a thermometer and a nitrogen introduction tube, and after the system was sufficiently replaced with nitrogen, the content was heated under stirring in a small amount of a nitrogen stream, and heated to 200°C while removing condensation water produced outside the system. The content was continuously heated to 200°C until the formation of condensation water was completed, and then cooled to room temperature, thereby providing an amide compound B-1.

The GC chart of the amide compound B-1 synthesized is shown in Fig. 2. The resulting amide compound B-1 was identified from Fig. 2 as a mixture of N-(5-carboxypentanoyl)-DL-alanine (i.e., an amide compound in the form of a dimer of one molecule of DL-alanine and one molecule of adipic acid) and N,N'-adipoylbis(DL-alanine) (i.e., an amide compound in the form of a trimer of two molecules of DL-alanine and one molecule of adipic acid).

In Examples B-2 to B-11 and Comparative Examples B-1 to B-3 below, the synthesized amide compounds were also identified in the same manner.

### Example B-2

An amide compound B-2 was obtained in the same manner as in Example B-1 except that DL-alanine was changed to DL-2-aminobutyric acid (purified product, produced by Japan Finechem Co., Inc.).

### Example B-3

An amide compound B-3 was obtained in the same manner as in Example B-1 except that DL-alanine was changed to DL-valine (produced by Sinogel Amino Acid Co., Ltd.).

### Example B-4

An amide compound B-4 was obtained in the same manner as in Example B-1 except that DL-alanine was changed to DL-leucine (produced by Ningbo Haishuo Biotechnology Co., Ltd.).

### Example B-5

An amide compound B-5 was obtained in the same manner as in Example B-1 except that DL-alanine was changed to DL-tert-leucine (produced by Japan Finechem Co., Inc.).

### Example B-6

An amide compound B-6 was obtained in the same manner as in Example B-1 except that DL-alanine was changed to DL-phenylalanine (produced by Sinogel Amino Acid Co., Ltd.).

### Example B-7

An amide compound B-7 was obtained in the same manner as in Example B-1 except that adipic acid was changed to sebacic acid (produced by Itoh Oil Chemicals Co., Ltd.), and the final reaction temperature was changed to 215°C.

### Example B-8

An amide compound B-8 was obtained in the same manner as in Example B-1 except that adipic acid was changed to dodecanedioic acid (produced by Tokyo Chemical Industry Co., Ltd.), and the final reaction temperature was changed to 220°C.

### Example B-9

An amide compound B-9 was obtained in the same manner as in Example B-1 except that adipic acid was changed to sorbic acid (produced by Tokyo Chemical Industry Co., Ltd.).

### Example B-10

An amide compound B-10 was obtained in the same manner as in Example B-1 except that adipic acid was changed to benzoic acid (produced by Kanto Chemical Co., Inc.).

### Example B-11

An amide compound B-11 was obtained in the same manner as in Example B-1 except that adipic acid was changed to cyclohexanecarboxylic acid (produced by Tokyo Chemical Industry Co., Ltd.).

### Comparative Example B-1

An amide compound B-12 was obtained in the same manner as in Example B-1 except that DL-alanine was changed to glycine having secondary hydrogen at the α-position (produced by Kanto Chemical Co., Inc.), and the final reaction temperature was changed to 165°C.

### Comparative Example B-2

An amide compound B-13 was obtained in the same manner as in Example B-1 except that DL-alanine was changed to 2-aminoisobutyric acid having no hydrogen at the α-position (purified product, 2-amino-2-methylpropanoic acid, produced by Japan Finechem Co., Inc.).

### Comparative Example B-3

Precisely weighed 65.76 g (0.45 mol) of adipic acid (produced by Asahi Kasei Chemicals Corporation) was charged in a reaction vessel having an internal capacity of 300 mL equipped with a stirrer, a partial condenser, a total condenser, a thermometer, a dropping funnel and a nitrogen introduction tube, and after the system was sufficiently replaced with nitrogen, the content was heated under stirring in a small amount of a nitrogen stream, and heated to 160°C. 96.44 g (0.90 mol) of benzylamine (produced by Kanto Chemical Co., Inc.) was added dropwise to molten adipic acid, and the content was heated to 200°C while removing condensation water produced outside the system. The content was continuously heated to 200°C until the formation of condensation water was completed, and then cooled to room temperature, thereby providing a an amide compound B-14.

**Table 3**

| | Amide compound No. | Raw material monomers | Product | Oxygen absorption amount * (cc/g) |
|---|---|---|---|---|
| Example B-1 | B-1 | DL-alanine | 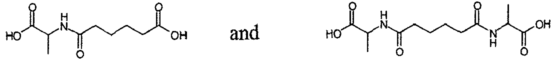 | 7.6 |
| | | adipic acid | | |
| Example B-2 | B-2 | DL-2-aminobutyric acid | 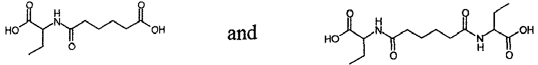 | 5.6 |
| | | adipic acid | | |
| Example B-3 | B-3 | DL-valine | 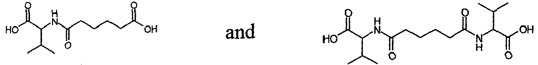 | 5.3 |
| | | adipic acid | | |
| Example B-4 | B-4 | DL-leucine | 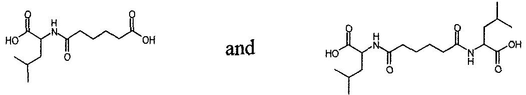 | 5.0 |
| | | adipic acid | | |
| Example B-5 | B-5 | DL-tert-leucine | 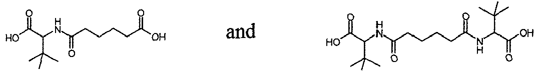 | 5.1 |
| | | adipic acid | | |
| Example B-6 | B-6 | DL-phenylalanine | 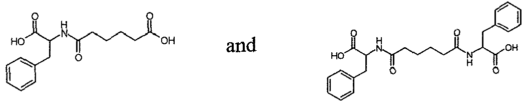 | 5.5 |
| | | adipic acid | | |
| Example B-7 | B-7 | DL-alanine | 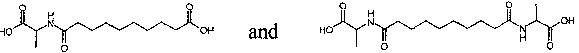 | 4.7 |
| | | sebacic acid | | |
| Example B-8 | B-8 | DL-alanine | 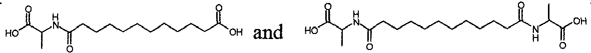 | 5.0 |
| | | dodecanedioic acid | | |
| Example B-9 | B-9 | DL-alanine | 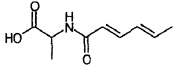 | 7.0 |
| | | sorbic acid | | |
| Example B-10 | B-10 | DL-alanine | 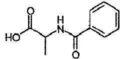 | 3.4 |
| | | benzoic acid | | |
| Example B-11 | B-11 | DL-alanine | 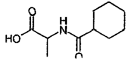 | 3.8 |
| | | cyclohexanecarboxylic acid | | |
| Comparative Example B-1 | B-12 | glycine | 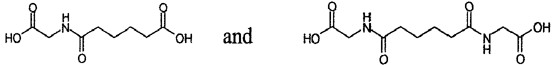 | 0.2 |
| | | adipic acid | | |
| Comparative Example B-2 | B-13 | 2-aminoisobutyric acid | 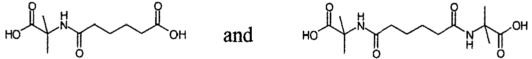 | 0.3 |
| | | adipic acid | | |
| Comparative Example B-3 | B-14 | benzylamine | 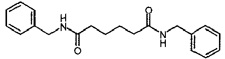 | 0.3 |
| | | adipic acid | | |

| | | | | |
|---|---|---|---|---|
| * Oxygen absorption amount (40°C, 100%RH, after 28 days) | | | | |

The amide compounds that were obtained by using glycine and 2-aminoisobutyric acid, which each were an α-amino acid having no tertiary hydrogen at the α-position, exhibited substantially no oxygen absorption capability (Comparative Examples B-1 and B-2). The hexamethylenebisbenzylamide compound had been used as an oxygen scavenger in combination with a transition metal catalyst, such as cobalt, but exhibited substantially no oxygen absorption capability in the system containing no transition metal added (Comparative Example B-3). On the other hand, the amide compound represented by the general formula (B-I) obtained by using an α-amino acid that has tertiary hydrogen at the α-position exhibits an oxygen absorption capability without the use of a transition metal (Examples B-1 to B-11).

### Example B-12

60 g of the amide compound B-1 obtained in Example B-1 and 500 g of methanol were charged in an eggplant flask having an inner capacity of 1,000 mL, and stirred for dissolving the amide compound B-1, to which 30 g of diatom earth (Microcel E, a trade name, produced by Tokyo Diatom Earth Co., Ltd.) was then added. Methanol was removed from the mixture with a rotary evaporator while the mixture was heated to 40°C over an oil, thereby providing a supported amide compound.

The supported amide compound was added to linear low density polyethylene (LLDPE, Novatec LL UF240, a trade name, produced by Japan Polyethylene Corporation) in an amount of 10% by mass, and then dry-mixed. The resulting mixture was formed into a film with a twin screw extruder having two screws having a diameter of 30 mm at an extrusion temperature of 180°C, a screw rotation number of 40 rpm, a feed screw rotation number of 18 rpm and a dragging speed of 2.6 m/min, thereby producing an amide compound mixture film B-1 having a width of 200 mm and a thickness of from 95 to 105 µm.

### Example B-13

An amide compound mixture film B-2 was produced in the same manner as in Example B-12 except that the amide compound B-1 was replaced by the amide compound B-2 obtained in Example B-2.

### Example B-14

An amide compound mixture film B-3 was produced in the same manner as in Example B-12 except that the amide compound B-1 was replaced by the amide compound B-3 obtained in Example B-3.

### Example B-15

An amide compound mixture film B-4 was produced in the same manner as in Example B-12 except that the amide compound B-1 was replaced by the amide compound B-4 obtained in Example B-4.

### Example B-16

An amide compound mixture film B-5 was produced in the same manner as in Example B-12 except that the amide compound B-1 was replaced by the amide compound B-5 obtained in Example B-5.

### Example B-17

An amide compound mixture film B-6 was produced in the same manner as in Example B-12 except that the amide compound B-1 was replaced by the amide compound B-6 obtained in Example B-6.

### Comparative Example B-4

An amide compound mixture film B-7 was produced in the same manner as in Example B-12 except that the amide compound B-1 was replaced by the amide compound B-12 obtained in Comparative Example B-1.

### Comparative Example B-5

An amide compound mixture film B-8 was produced in the same manner as in Example B-12 except that the amide compound B-1 was replaced by the amide compound B-13 obtained in Comparative Example B-2.

### Comparative Example B-6

An amide compound mixture film B-9 was produced in the same manner as in Example B-12 except that the amide compound B-1 was replaced by the amide compound B-14 obtained in Comparative Example B-3, and the amide compound B-14 was not supported on diatom earth and was added to LLDPE.

**Table 4**

| | Film No. | Composition of film | Content of amide compound or supported amide compound (% by mass) | Oxygen absorption amount (cc/g) 40°C, 100%RH, after 28 days |
|---|---|---|---|---|
| Example B-12 | B-1 | LLDPE / amide compound B-1 | 10 | 4.6 |
| Example B-13 | B-2 | LLDPE / amide compound B-2 | 10 | 4.2 |
| Example B-14 | B-3 | LLDPE / amide compound B-3 | 10 | 4.0 |
| Example B-15 | B-4 | LLDPE / amide compound B-4 | 10 | 3.8 |
| Example B-16 | B-5 | LLDPE / amide compound B-5 | 10 | 3.8 |
| Example B-17 | B-6 | LLDPE / amide compound B-6 | 10 | 4.1 |
| Comparative Example B-4 | B-7 | LLDPE / amide compound B-12 | 10 | 0.2 |
| Comparative Example B-5 | B-8 | LLDPE / amide compound B-13 | 10 | 0.2 |
| Comparative Example B-6 | B-9 | LLDPE / amide compound B-14 | 10 ** | 0.3 |

| | | | | |
|---|---|---|---|---|
| ** The amide compound was used without supporting on diatom earth. | | | | |

As apparent from Table 4, the oxygen absorber (B) may be mixed in a resin material, and a film formed of a resin composition containing the oxygen absorber (B) exhibits an oxygen absorption capability without the use of a transition metal (Examples B-12 to B-17).

### Example C-1

Precisely weighed 80.18 g (0.90 mol) of DL-alanine (produced by Musashino Chemical Laboratory, Ltd.) and 90.06 g (0.90 mol) of succinic anhydride (produced by Tokyo Chemical Industry Co., Ltd.) were charged in a reaction vessel having an internal capacity of 300 mL equipped with a stirrer, a partial condenser, a total condenser, a thermometer and a nitrogen introduction tube, and after the system was sufficiently replaced with nitrogen, the content was heated under stirring in a small amount of a nitrogen stream, and heated to 200°C while removing condensation water produced outside the system. The content was continuously heated to 200°C until the formation of condensation water was completed, and then cooled to room temperature, thereby providing an imide compound C-1.

The GC chart of the imide compound C-1 synthesized is shown in Fig. 3. The resulting imide compound C-1 was identified from Fig. 3 as 2-succinimidepropionic acid (i.e., an imide compound in the form of a dimer of one molecule of DL-alanine and one molecule of succinic anhydride).

In Examples C-2 to C-12 and Comparative Examples C-1 to C-3 below, the synthesized imide compounds were also identified in the same manner.

### Example C-2

An imide compound C-2 was obtained in the same manner as in Example C-1 except that DL-alanine was changed to DL-2-aminobutyric acid (purified product, produced by Japan Finechem Co., Inc.).

### Example C-3

An imide compound C-3 was obtained in the same manner as in Example C-1 except that DL-alanine was changed to DL-valine (produced by Sinogel Amino Acid Co., Ltd.).

### Example C-4

An imide compound C-4 was obtained in the same manner as in Example C-1 except that DL-alanine was changed to DL-leucine (produced by Ningbo Haishuo Biotechnology Co., Ltd.).

### Example C-5

An imide compound C-5 was obtained in the same manner as in Example C-1 except that DL-alanine was changed to DL-tert-leucine (produced by Japan Finechem Co., Inc.).

### Example C-6

An imide compound C-6 was obtained in the same manner as in Example C-1 except that DL-alanine was changed to DL-phenylalanine (produced by Sinogel Amino Acid Co., Ltd.).

### Example C-7

An imide compound C-7 was obtained in the same manner as in Example C-1 except that succinic anhydride was changed to maleic anhydride (produced by Tokyo Chemical Industry Co., Ltd.).

### Example C-8

An imide compound C-8 was obtained in the same manner as in Example C-1 except that succinic anhydride was changed to phthalic anhydride (produced by Tokyo Chemical Industry Co., Ltd.).

### Example C-9

An imide compound C-9 was obtained in the same manner as in Example C-1 except that succinic anhydride was changed to trimellitic anhydride (produced by Mitsubishi Gas Chemical Co., Inc.).

### Example C-10

An imide compound C-10 was obtained in the same manner as in Example C-1 except that succinic anhydride was changed to cis-1,2-cyclohexanedicarboxylic anhydride (produced by Tokyo Chemical Industry Co., Ltd.).

### Example C-11

An imide compound C-11 was obtained in the same manner as in Example C-1 except that succinic anhydride was changed to 4-carboxy-1,2-cyclohexanedicarboxylic anhydride (produced by Mitsubishi Gas Chemical Co., Inc.).

### Example C-12

An imide compound C-12 was obtained in the same manner as in Example C-1 except that succinic anhydride was changed to 5-norbornene-2,3-dicarboxylic anhydride (produced by Tokyo Chemical Industry Co., Ltd.).

### Comparative Example C-1

An imide compound C-13 was obtained in the same manner as in Example C-1 except that DL-alanine was changed to glycine having secondary hydrogen at the α-position (produced by Kanto Chemical Co., Inc.), and the final reaction temperature was changed to 165°C.

### Comparative Example C-2

An imide compound C-14 was obtained in the same manner as in Example C-1 except that DL-alanine was changed to 2-aminoisobutyric acid having no hydrogen at the α-position (purified product, 2-amino-2-methylpropanoic acid, produced by Japan Finechem Co., Inc.).

### Comparative Example C-3

Precisely weighed 118.50 g (0.80 mol) of phthalic anhydride (produced by Kanto Chemical Co., Inc.) was charged in a reaction vessel having an internal capacity of 300 mL equipped with a stirrer, a partial condenser, a total condenser, a thermometer, a dropping funnel and a nitrogen introduction tube, and after the system was sufficiently replaced with nitrogen, the content was heated under stirring in a small amount of a nitrogen stream, and heated to 140°C. 54.48 g (0.40 mol) of m-xylylenediamine (produced by Mitsubishi Gas Chemical Co., Inc.) was added dropwise to molten phthalic anhydride, and the content was heated to 200°C while removing condensation water produced outside the system. The content was continuously heated to 200°C until the formation of condensation water was completed, and then cooled to room temperature, thereby providing a an imide compound C-15.

**Table 5**

| | Imide compound No. | Raw material monomers | Product | Oxygen absorption amount * (cc/g) |
|---|---|---|---|---|
| Example C-1 | C-1 | DL-alanine | 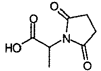 | 14.5 |
| | | succinic anhydride | | |
| Example C-2 | C-2 | DL-2-aminobutyric acid | 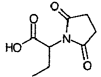 | 13.6 |
| | | succinic anhydride | | |
| Example C-3 | C-3 | DL-valine | 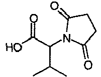 | 13.3 |
| | | succinic anhydride | | |
| Example C-4 | C-4 | DL-leucine | 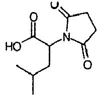 | 12.0 |
| | | succinic anhydride | | |
| Example C-5 | C-5 | DL-tert-leucine | 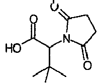 | 12.1 |
| | | succinic anhydride | | |
| Example C-6 | C-6 | DL-phenylalanine | 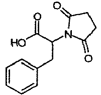 | 13.5 |
| | | succinic anhydride | | |
| Example C-7 | C-7 | DL-alanine | 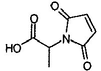 | 7.8 |
| | | maleic anhydride | | |
| Example C-8 | C-8 | DL-alanine | 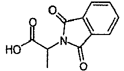 | 4.0 |
| | | phthalic anhydride | | |
| Example C-9 | C-9 | DL-alanine | 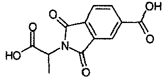 | 4.4 |
| | | trimellitic anhydride | | |
| Example C-10 | C-10 | DL-alanine | 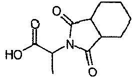 | 6.2 |
| | | cis-1,2-cyclohexane-dicarboxylic anhydride | | |
| Example C-11 | C-11 | DL-alanine | 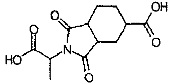 | 4.4 |
| | | 4-carboxy-1,2-cyclohexane-dicarboxylic anhydride | | |
| Example C-12 | C-12 | DL-alanine | 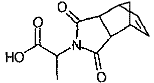 | 3.4 |
| | | 5-norbomane-2,3-dicarboxylic anhydride | | |
| Comparative Example C-1 | C-13 | glycine | 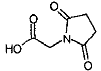 | 0.2 |
| | | succinic anhydride | | |
| Comparative Example C-2 | C-14 | 2-aminoisobutyric acid | 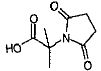 | 0.2 |
| | | succinic anhydride | | |
| Comparative Example C-3 | C-15 | m-xylylenediamine | 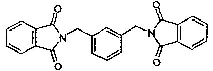 | 0.4 |
| | | phthalic anhydride | | |

| | | | | |
|---|---|---|---|---|
| * Oxygen absorption amount (40°C, 100%RH, after 28 days) | | | | |

The imide compounds that were obtained by using glycine and 2-aminoisobutyric acid, which each were an α-amino acid having no tertiary hydrogen at the α-position, exhibited substantially no oxygen absorption capability (Comparative Examples C-1 and C-2). The m-xylylenebisphthalimide compound had been used as an oxygen scavenger in combination with a transition metal catalyst, such as cobalt, but exhibited substantially no oxygen absorption capability in the system containing no transition metal added (Comparative Example C-3). On the other hand, the imide compound represented by the general formula (C-I) obtained by using an α-amino acid that has tertiary hydrogen at the α-position exhibits an oxygen absorption capability without the use of a transition metal (Examples C-1 to C-12).

### Example C-13

60 g of the imide compound C-1 obtained in Example C-1 and 500 g of methanol were charged in an eggplant flask having an inner capacity of 1,000 mL, and stirred for dissolving the imide compound C-1, to which 30 g of diatom earth (Microcel E, a trade name, produced by Tokyo Diatom Earth Co., Ltd.) was then added. Methanol was removed from the mixture with a rotary evaporator while the mixture was heated to 40°C over an oil, thereby providing a supported imide compound.

The supported imide compound was added to linear low density polyethylene (LLDPE, Novatec LL UF240, a trade name, produced by Japan Polyethylene Corporation) in an amount of 10% by mass, and then dry-mixed. The resulting mixture was formed into a film with a twin screw extruder having two screws having a diameter of 30 mm at an extrusion temperature of 180°C, a screw rotation number of 40 rpm, a feed screw rotation number of 18 rpm and a dragging speed of 2.6 m/min, thereby producing an imide compound mixture film C-1 having a width of 200 mm and a thickness of from 95 to 105 µm.

### Example C-14

An imide compound mixture film C-2 was produced in the same manner as in Example C-13 except that the imide compound C-1 was replaced by the imide compound C-2 obtained in Example C-2.

### Example C-15

An imide compound mixture film C-3 was produced in the same manner as in Example C-13 except that the imide compound C-1 was replaced by the imide compound C-3 obtained in Example C-3.

### Example C-16

An imide compound mixture film C-4 was produced in the same manner as in Example C-13 except that the imide compound C-1 was replaced by the imide compound C-4 obtained in Example C-4.

### Example C-17

An imide compound mixture film C-5 was produced in the same manner as in Example C-13 except that the imide compound C-1 was replaced by the imide compound C-5 obtained in Example C-5.

### Example C-18

An imide compound mixture film C-6 was produced in the same manner as in Example C-13 except that the imide compound C-1 was replaced by the imide compound C-6 obtained in Example C-6.

### Comparative Example C-4

An imide compound mixture film C-7 was produced in the same manner as in Example C-13 except that the imide compound C-1 was replaced by the imide compound C-13 obtained in Comparative Example C-1.

### Comparative Example C-5

An imide compound mixture film C-8 was produced in the same manner as in Example C-13 except that the imide compound C-1 was replaced by the imide compound C-14 obtained in Comparative Example C-2.

### Comparative Example C-6

An imide compound mixture film C-9 was produced in the same manner as in Example C-13 except that the imide compound C-1 was replaced by the imide compound C-15 obtained in Comparative Example C-3, and the imide compound C-15 was not supported on diatom earth and was added to LLDPE.

**Table 6**

| | Film No. | Composition of film | Content of imide compound or supported imide compound (% by mass) | Oxygen absorption amount (cc/g) 40°C, 100%RH, after 28 days |
|---|---|---|---|---|
| Example C-13 | C-1 | LLDPE / imide compound C-1 | 10 | 5.1 |
| Example C-14 | C-2 | LLDPE / imide compound C-2 | 10 | 4.8 |
| Example C-15 | C-3 | LLDPE / imide compound C-3 | 10 | 4.7 |
| Example C-16 | C-4 | LLDPE / imide compound C-4 | 10 | 4.4 |
| Example C-17 | C-5 | LLDPE / imide compound C-5 | 10 | 4.4 |
| Example C-18 | C-6 | LLDPE / imide compound C-6 | 10 | 4.7 |
| Comparative Example C-4 | C-7 | LLDPE / imide compound C-13 | 10 | 0.2 |
| Comparative Example C-5 | C-8 | LLDPE / imide compound C-14 | 10 | 0.2 |
| Comparative Example C-6 | C-9 | LLDPE / imide compound C-15 | 10 | 0.3 |

As apparent from Table 6, the oxygen absorber (C) may be mixed in a resin material, and a film formed of a resin composition containing the oxygen absorber (C) exhibits an oxygen absorption capability without the use of a transition metal (Examples C-13 to C-18).

### Example D-1

Precisely weighed 89.09 g (1.00 mol) of DL-alanine (produced by Musashino Chemical Laboratory, Ltd.), 31.03 g (0.50 mol) of ethylene glycol (produced by Kanto Chemical Co., Inc.) and 90.00 g (0.86 to 0.91 mol) of hydrochloric acid (35 to 37%, produced by Kanto Chemical Co., Inc.) were charged in a reaction vessel having an internal capacity of 300 mL equipped with a stirrer, a partial condenser, a total condenser, a thermometer and a nitrogen introduction tube, and after the system was sufficiently replaced with nitrogen, the content was heated under stirring in a small amount of a nitrogen stream, and heated to 150°C while removing condensation water produced outside the system. The content was continuously heated to 150°C until the formation of condensation water was completed, and then cooled to room temperature, thereby providing an ester compound D-1.

The GC chart of the ester compound D-1 synthesized is shown in Fig. 4. The resulting ester compound D-1 was identified from Fig. 4 as ethylene glycol mono(2-aminopropanoyl) ether (i.e., an ester compound in the form of a dimer of one molecule of DL-alanine and one molecule of ethylene glycol) and ethylene glycol bis(2-aminopropanoyl) ether (i.e., an ester compound in the form of a trimer of two molecules of DL-alanine and one molecule of ethylene glycol).

In Examples D-2 to D-13 and Comparative Examples D-1 and D-2 below, the synthesized ester compounds were also identified in the same manner.

### Example D-2

An ester compound D-2 was obtained in the same manner as in Example D-1 except that DL-alanine was changed to DL-2-aminobutyric acid (purified product, produced by Japan Finechem Co., Inc.).

### Example D-3

An ester compound D-3 was obtained in the same manner as in Example D-1 except that DL-alanine was changed to DL-valine (produced by Sinogel Amino Acid Co., Ltd.).

### Example D-4

An ester compound D-4 was obtained in the same manner as in Example D-1 except that DL-alanine was changed to DL-leucine (produced by Ningbo Haishuo Biotechnology Co., Ltd.).

### Example D-5

An ester compound D-5 was obtained in the same manner as in Example D-1 except that DL-alanine was changed to DL-tert-leucine (produced by Japan Finechem Co., Inc.).

### Example D-6

An ester compound D-6 was obtained in the same manner as in Example D-1 except that DL-alanine was changed to DL-phenylalanine (produced by Sinogel Amino Acid Co., Ltd.).

### Example D-7

An ester compound D-7 was obtained in the same manner as in Example D-1 except that DL-alanine was changed to L-alanine methyl hydrochloride (produced by Tokyo Chemical Industry Co., Ltd.), and hydrochloric acid was not added.

### Example D-8

An ester compound D-8 was obtained in the same manner as in Example D-1 except that DL-alanine was changed to DL-2-hydroxybutyric acid (produced by Tokyo Chemical Industry Co., Ltd.).

### Example D-9

An ester compound D-9 was obtained in the same manner as in Example D-1 except that DL-alanine was changed to DL-2-methylbutyric acid (produced by Tokyo Chemical Industry Co., Ltd.).

### Example D-10

An ester compound D-10 was obtained in the same manner as in Example D-1 except that ethylene glycol was changed to 1,6-hexanediol (produced by Tokyo Chemical Industry Co., Ltd.).

### Example D-11

An ester compound D-11 was obtained in the same manner as in Example D-1 except that DL-alanine was changed to L-alanine methyl hydrochloride (produced by Tokyo Chemical Industry Co., Ltd.), ethylene glycol was changed to benzyl alcohol (produced by Kanto Chemical Co., Inc.), and hydrochloric acid was not added.

### Example D-12

An ester compound D-12 was obtained in the same manner as in Example D-1 except that ethylene glycol was changed to 1,4-benzenediol (produced by Tokyo Chemical Industry Co., Ltd.).

### Example D-13

An ester compound D-13 was obtained in the same manner as in Example D-1 except that ethylene glycol was changed to 1,4-cyclohexanediol (cis/trans mixture, produced by Tokyo Chemical Industry Co., Ltd.).

### Comparative Example D-1

An ester compound D-14 was obtained in the same manner as in Example D-1 except that DL-alanine was changed to glycine having secondary hydrogen at the α-position (produced by Kanto Chemical Co., Inc.).

### Comparative Example D-2

An ester compound D-15 was obtained in the same manner as in Example D-1 except that DL-alanine was changed to 2-aminoisobutyric acid having no hydrogen at the α-position (purified product, 2-amino-2-methylpropanoic acid, produced by Japan Finechem Co., Inc.).

**Table 7**

| | Ester compound No. | Raw material monomers | Product | Oxygen absorption amount * (cc/g) |
|---|---|---|---|---|
| Example D-1 | D-1 | DL-alanine | 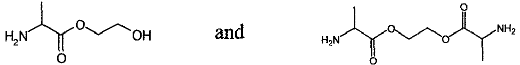 | 11.1 |
| | | ethylene glycol | | |
| Example D-2 | D-2 | DL-2-aminobutyric acid | 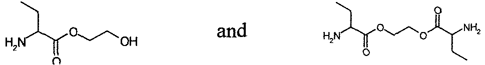 | 10.3 |
| | | ethylene glycol | | |
| Example D-3 | D-3 | DL-valine | 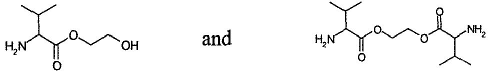 | 9.9 |
| | | ethylene glycol | | |
| Example D-4 | D-4 | DL-leucine | 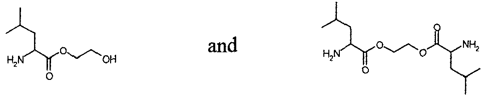 | 9.8 |
| | | ethylene glycol | | |
| Example D-5 | D-5 | DL-tert-leucine | 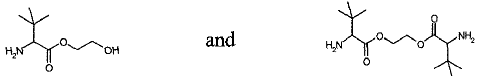 | 9.7 |
| | | ethylene glycol | | |
| Example D-6 | D-6 | DL-phenylalanine | 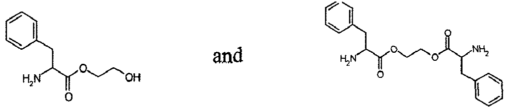 | 10.1 |
| | | ethylene glycol | | |
| Example D-7 | D-7 | L-alanine methyl hydrochloride | 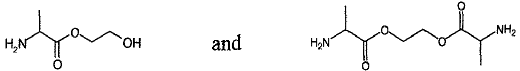 | 10.7 |
| | | ethylene glycol | | |
| Example D-8 | D-8 | DL-2-hydroxybutyric acid | 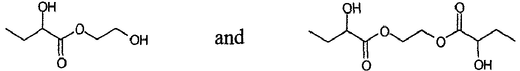 | 5.1 |
| | | ethylene glycol | | |
| Example D-9 | D-9 | DL-2-methylbutyric acid | 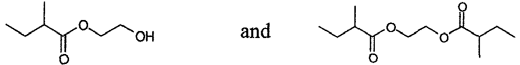 | 4.2 |
| | | ethylene glycol | | |
| Example D-10 | D-10 | DL-alanine | 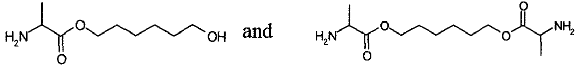 | 6.9 |
| | | 1,6-hexanediol | | |
| Example D-11 | D-11 | L-alanine methyl hydrochloride | 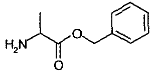 | 9.9 |
| | | benzyl alcohol | | |
| Example D-12 | D-12 | DL-alanine | 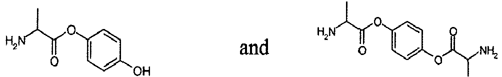 | 7.1 |
| | | 1,4-benzenediol | | |
| Example D-13 | D-13 | DL-alanine | 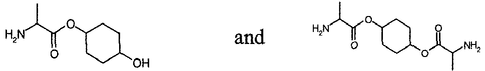 | 6.7 |
| | | 1,4-cyclohexanediol | | |
| Comparative Example D-1 | D-14 | glycine | 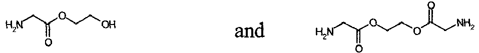 | 0.3 |
| | | ethylene glycol | | |
| Comparative Example D-2 | D-15 | 2-aminoisobutyric acid | 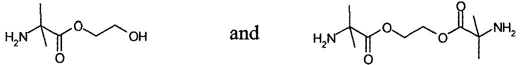 | 0.2 |
| | | ethylene glycol | | |

| | | | | |
|---|---|---|---|---|
| * Oxygen absorption amount (40°C, 100%RH, after 28 days) | | | | |

The ester compounds that were obtained by using glycine and 2-aminoisobutyric acid, which each were an α-amino acid having no tertiary hydrogen at the α-position, exhibited substantially no oxygen absorption capability (Comparative Examples D-1 and D-2). On the other hand, the ester compound represented by the general formula (D-I) obtained by using an α-amino acid that has tertiary hydrogen at the α-position exhibits an oxygen absorption capability without the use of a transition metal (Examples D-1 to D-13).

### Example D-14

60 g of the ester compound D-1 obtained in Example D-1 and 500 g of methanol were charged in an eggplant flask having an inner capacity of 1,000 mL, and stirred for dissolving the ester compound D-1, to which 30 g of diatom earth (Microcel E, a trade name, produced by Tokyo Diatom Earth Co., Ltd.) was then added. Methanol was removed from the mixture with a rotary evaporator while the mixture was heated to 40°C over an oil, thereby providing a supported ester compound.

The supported ester compound was added to linear low density polyethylene (LLDPE, Novatec LL UF240, a trade name, produced by Japan Polyethylene Corporation) in an amount of 10% by mass, and then dry-mixed. The resulting mixture was formed into a film with a twin screw extruder having two screws having a diameter of 30 mm at an extrusion temperature of 180°C, a screw rotation number of 40 rpm, a feed screw rotation number of 18 rpm and a dragging speed of 2.6 m/min, thereby producing an ester compound mixture film D-1 having a width of 200 mm and a thickness of from 95 to 105 µm.

### Example D-15

An ester compound mixture film D-2 was produced in the same manner as in Example D-14 except that the ester compound D-1 was replaced by the ester compound D-2 obtained in Example D-2.

### Example D-16

An ester compound mixture film D-3 was produced in the same manner as in Example D-14 except that the ester compound D-1 was replaced by the ester compound D-3 obtained in Example D-3.

### Example D-17

An ester compound mixture film D-4 was produced in the same manner as in Example D-14 except that the ester compound D-1 was replaced by the ester compound D-4 obtained in Example D-4.

### Example D-18

An ester compound mixture film D-5 was produced in the same manner as in Example D-14 except that the ester compound D-1 was replaced by the ester compound D-5 obtained in Example D-5.

### Example D-19

An ester compound mixture film D-6 was produced in the same manner as in Example D-14 except that the ester compound D-1 was replaced by the ester compound D-6 obtained in Example D-6.

### Comparative Example D-3

An ester compound mixture film D-7 was produced in the same manner as in Example D-14 except that the ester compound D-1 was replaced by the ester compound D-14 obtained in Comparative Example D-1.

### Comparative Example D-4

An ester compound mixture film D-8 was produced in the same manner as in Example D-14 except that the ester compound D-1 was replaced by the ester compound D-15 obtained in Comparative Example D-2.

**Table 8**

| | Film No. | Composition of film | Content of supported ester compound (% by mass) | Oxygen absorption amount (cc/g) 40°C, 100%RH, after 28 days |
|---|---|---|---|---|
| Example D-14 | D-1 | LLDPE / ester compound D-1 | 10 | 4.9 |
| Example D-15 | D-2 | LLDPE / ester compound D-2 | 10 | 4.7 |
| Example D-16 | D-3 | LLDPE / ester compound D-3 | 10 | 4.6 |
| Example D-17 | D-4 | LLDPE / ester compound D-4 | 10 | 4.6 |
| Example D-18 | D-5 | LLDPE / ester compound D-5 | 10 | 4.6 |
| Example D-19 | D-6 | LLDPE / ester compound D-6 | 10 | 4.7 |
| Comparative Example D-3 | D-7 | LLDPE / ester compound D-14 | 10 | 0.2 |
| Comparative Example D-4 | D-8 | LLDPE / ester compound D-15 | 10 | 0.2 |

As apparent from Table 8, the oxygen absorber (D) may be mixed in a resin material, and a film formed of a resin composition containing the oxygen absorber (D) exhibits an oxygen absorption capability without the use of a transition metal (Examples D-14 to D-19).

### Example E-1

41.87 g (0.30 mol) of L-alanine methyl hydrochloride (produced by Tokyo Chemical Industry Co., Ltd.) and 70.10 g (which was the same amount as the total weight of the raw materials) of N,N-dimethylformamide (produced by Kanto Chemical Co., Inc.) were charged in a reaction vessel having an internal capacity of 300 mL equipped with a stirrer, a thermometer, a dropping funnel, a nitrogen introduction tube and a nitrogen exhaust tube, and after the system was sufficiently replaced with nitrogen, the content was heated to 60°C under stirring in a small amount of a nitrogen stream. After L-alanine methyl hydrochloride was dissolved, 28.23 g (0.15 mol) of m-xylylene diisocyanate (produced by Tokyo Chemical Industry Co., Ltd.) was added dropwise thereto, and the content was heated and maintained at 60°C for 1 hour and then cooled to room temperature, thereby providing a compound E-1.

The GC chart of the compound E-1 synthesized is shown in Fig. 5. The resulting compound E-1 was identified from Fig. 5 as N-(6-isocyanatohexylcarbamoyl)-L-alanine methyl (i.e., a compound in the form of a dimer of one molecule of L-alanine methyl and one molecule of m-xylylene diisocyanate) and N,N'-m-xylylenebis(carbamoyl-L-alanine methyl) (i.e., a compound in the form of a trimer of two molecules of L-alanine methyl and one molecule of m-xylylene diisocyanate).

In Examples E-2 to E-9 and Comparative Examples E-1 and E-2 below, the synthesized compounds were also identified in the same manner.

### Example E-2

A compound E-2 was obtained in the same manner as in Example E-1 except that L-alanine methyl hydrochloride was changed to methyl DL-2-aminobutyrate hydrochloride (produced by Tokyo Chemical Industry Co., Ltd.).

### Example E-3

A compound E-3 was obtained in the same manner as in Example E-1 except that L-alanine methyl hydrochloride was changed to L-valine methyl hydrochloride (produced by Tokyo Chemical Industry Co., Ltd.).

### Example E-4

A compound E-4 was obtained in the same manner as in Example E-1 except that L-alanine methyl hydrochloride was changed to L-leucine methyl hydrochloride (produced by Tokyo Chemical Industry Co., Ltd.).

### Example E-5

A compound E-5 was obtained in the same manner as in Example E-1 except that L-alanine methyl hydrochloride was changed to L-tert-leucine methyl hydrochloride (produced by Tokyo Chemical Industry Co., Ltd.).

### Example E-6

A compound E-6 was obtained in the same manner as in Example E-1 except that L-alanine methyl hydrochloride was changed to L-phenylalanine methyl hydrochloride (produced by Tokyo Chemical Industry Co., Ltd.).

### Example E-7

A compound E-7 was obtained in the same manner as in Example E-1 except that m-xylylene diisocyanate was changed to 4,4'-dicyclohexylmethane diisocyanate (produced by Tokyo Chemical Industry Co., Ltd.).

### Example E-8

A compound E-8 was obtained in the same manner as in Example E-1 except that m-xylylene diisocyanate was changed to hexamethylene diisocyanate (produced by Tokyo Chemical Industry Co., Ltd.).

### Example E-9

A compound E-9 was obtained in the same manner as in Example E-1 except that m-xylylene diisocyanate was changed to butyl isocyanate (produced by Tokyo Chemical Industry Co., Ltd.).

### Comparative Example E-1

A compound E-10 was obtained in the same manner as in Example E-1 except that L-alanine methyl hydrochloride was changed to glycine methyl hydrochloride having secondary hydrogen at the α-position (produced by Tokyo Chemical Industry Co., Ltd.).

### Comparative Example E-2

A compound E-11 was obtained in the same manner as in Example E-1 except that L-alanine methyl hydrochloride was changed to methyl α-aminoisobutyrate hydrochloride having no hydrogen at the α-position (produced by Sigma-Aldrich Corporation).

**Table 9**

| | Compound No. | Raw material monomers | Product | Oxygen absorption amount * (cc/g) |
|---|---|---|---|---|
| Example E-1 | E-1 | L-alanine methyl hydrochloride | 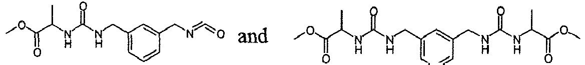 | 7.7 |
| | | m-xylylene diisocyanate | | |
| Example E-2 | E-2 | methyl DL-2-aminobutyrate hydrochloride | 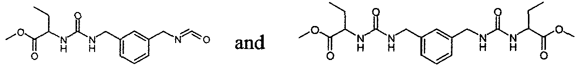 | 6.9 |
| | | m-xylylene diisocyanate | | |
| Example E-3 | E-3 | L-valine methyl hydrochloride | 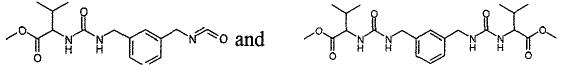 | 6.4 |
| | | m-xylylene diisocyanate | | |
| Example E-4 | E-4 | L-leucine methyl hydrochloride | 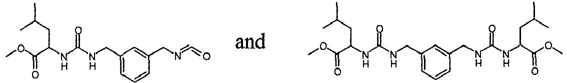 | 5.9 |
| | | m-xylylene diisocyanate | | |
| Example E-5 | E-5 | L-tert-leucine methyl hydrochloride | 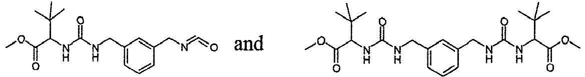 | 5.9 |
| | | m-xylylene diisocyanate | | |
| Example E-6 | E-6 | L-phenylalanine methyl hydrochloride | 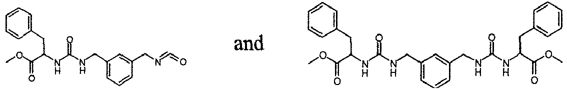 | 6.5 |
| | | m-xylylene diisocyanate | | |
| Example E-7 | E-7 | L-alanine methyl hydrochloride | 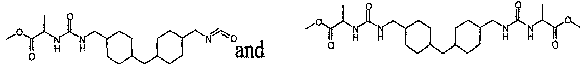 | 4.2 |
| | | 4,4'-dicyclohexylmethane diisocyanate | | |
| Example E-8 | E-8 | L-alanine methyl hydrochloride | 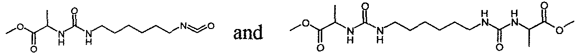 | 4.9 |
| | | hexamethylene diisocyanate | | |
| Example E-9 | E-9 | L-alanine methyl hydrochloride | 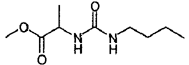 | 4.7 |
| | | butyl isocyanate | | |
| Comparative Example E-1 | E-10 | glycine methyl hydrochloride | 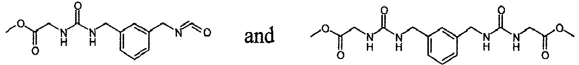 | 0.3 |
| | | m-xylylene diisocyanate | | |
| Comparative Example E-2 | E-11 | methyl α-aminoisobutyrate hydrochloride | 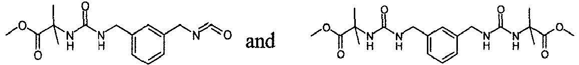 | 0.4 |
| | | m-xylylene diisocyanate | | |

| | | | | |
|---|---|---|---|---|
| * Oxygen absorption amount (40°C, 100%RH, after 28 days) | | | | |

The compounds that were obtained by using glycine methyl and methyl α-aminoisobutyrate, which each were an alkyl ester of an α-amino acid having no tertiary hydrogen at the α-position, exhibited substantially no oxygen absorption capability (Comparative Examples E-1 and E-2). On the other hand, the compound represented by the general formula (E-1) obtained by using an alkyl ester of an α-amino acid that has tertiary hydrogen at the α-position exhibits an oxygen absorption capability without the use of a transition metal (Examples E-1 to E-9).

### Example F-1

41.87 g (0.30 mol) of L-alanine methyl hydrochloride (produced by Tokyo Chemical Industry Co., Ltd.) and 76.11 g (which was the same amount as the total weight of the raw materials) of N,N-dimethylformamide (produced by Kanto Chemical Co., Inc.) were charged in a reaction vessel having an internal capacity of 300 mL equipped with a stirrer, a thermometer, a dropping funnel, a nitrogen introduction tube and a nitrogen exhaust tube, and after the system was sufficiently replaced with nitrogen, the content was heated to 60°C under stirring in a small amount of a nitrogen stream. After L-alanine methyl hydrochloride was dissolved, 34.24 g (0.30 mol) of allyl glycidyl ether (produced by Tokyo Chemical Industry Co., Ltd.) was added dropwise thereto, and the content was heated and maintained at 60°C for 1 hour and then cooled to room temperature, thereby providing a compound F-1.

The GC chart of the compound F-1 synthesized is shown in Fig. 6. The resulting compound F-1 was identified from Fig. 6 as N-(2-hydroxy-3-allyloxypropyl)-L-alanine methyl (i.e., a compound in the form of a dimer of one molecule of L-alanine methyl and one molecule of allyl glycidyl ether) and N-[N-(2-hydroxy-3-allyloxypropyl)-L-alanyl]-L-alanine methyl (i.e., a compound in the form of a trimer of two molecules of L-alanine methyl and one molecule of allyl glycidyl ether).

In Examples F-2 to F-10 and Comparative Examples F-1 to F-3 below, the synthesized compounds were also identified in the same manner.

### Example F-2

A compound F-2 was obtained in the same manner as in Example F-1 except that L-alanine methyl hydrochloride was changed to methyl DL-2-aminobutyrate hydrochloride (produced by Tokyo Chemical Industry Co., Ltd.).

### Example F-3

A compound F-3 was obtained in the same manner as in Example F-1 except that L-alanine methyl hydrochloride was changed to L-valine methyl hydrochloride (produced by Tokyo Chemical Industry Co., Ltd.).

### Example F-4

A compound F-4 was obtained in the same manner as in Example F-1 except that L-alanine methyl hydrochloride was changed to L-leucine methyl hydrochloride (produced by Tokyo Chemical Industry Co., Ltd.).

### Example F-5

A compound F-5 was obtained in the same manner as in Example F-1 except that L-alanine methyl hydrochloride was changed to L-tert-leucine methyl hydrochloride (produced by Tokyo Chemical Industry Co., Ltd.).

### Example F-6

A compound F-6 was obtained in the same manner as in Example F-1 except that L-alanine methyl hydrochloride was changed to L-phenylalanine methyl hydrochloride (produced by Tokyo Chemical Industry Co., Ltd.).

### Example F-7

A compound F-7 was obtained in the same manner as in Example F-1 except that allyl glycidyl ether was changed to butyl glycidyl ether (produced by Tokyo Chemical Industry Co., Ltd.).

### Example F-8

A compound F-8 was obtained in the same manner as in Example F-1 except that allyl glycidyl ether was changed to 2-ethylhexyl glycidyl ether (produced by Tokyo Chemical Industry Co., Ltd.).

### Example F-9

A compound F-9 was obtained in the same manner as in Example F-1 except that allyl glycidyl ether was changed to benzyl glycidyl ether (produced by Tokyo Chemical Industry Co., Ltd.).

### Example F-10

A compound F-10 was obtained in the same manner as in Example F-1 except that L-alanine methyl hydrochloride was changed to DL-alanine, N,N-dimethylformamide was changed to water, and allyl glycidyl ether was changed to phenol pentaethylene oxide glycidyl ether (Denacol EX145, produced by Nagase Chemtex Corporation).

### Comparative Example F-1

A compound F-11 was obtained in the same manner as in Example F-1 except that L-alanine methyl hydrochloride was not charged.

### Comparative Example F-2

A compound F-12 was obtained in the same manner as in Example F-1 except that L-alanine methyl hydrochloride was changed to glycine methyl hydrochloride having secondary hydrogen at the α-position (produced by Tokyo Chemical Industry Co., Ltd.).

### Comparative Example F-3

A compound F-13 was obtained in the same manner as in Example F-1 except that DL-alanine methyl hydrochloride was changed to methyl α-aminoisobutyrate hydrochloride having no hydrogen at the α-position (produced by Sigma-Aldrich Corporation).

**Table 10**

| | Compound No. | Raw material monomers | Product | Oxygen absorption amount * (cc/g) |
|---|---|---|---|---|
| Example F-1 | F-1 | L-alanine methyl hydrochloride | 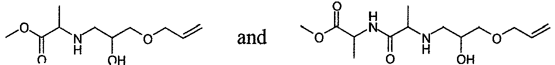 | 19.7 |
| | | allyl glycidyl ether | | |
| Example F-2 | F-2 | methyl DL-2-aminobutyrate hydrochloride | 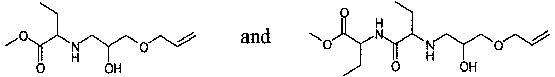 | 19.1 |
| | | allyl glycidyl ether | | |
| Example F-3 | F-3 | L-valine methyl hydrochloride | 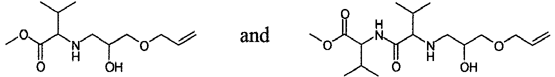 | 18.9 |
| | | allyl glycidyl ether | | |
| Example F-4 | F-4 | L-leucine methyl hydrochloride | 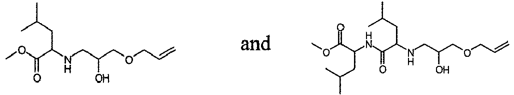 | 18.5 |
| | | allyl glycidyl ether | | |
| Example F-5 | F-5 | L-tert-leucine methyl hydrochloride | 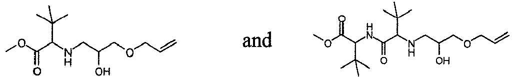 | 18.3 |
| | | allyl glycidyl ether | | |
| Example F-6 | F-6 | L-phenylalanine methyl hydrochloride | 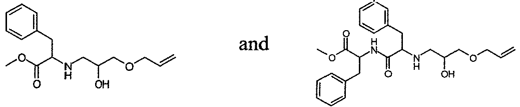 | 18.7 |
| | | allyl glycidyl ether | | |
| Example F-7 | F-7 | L-alanine methyl hydrochloride | 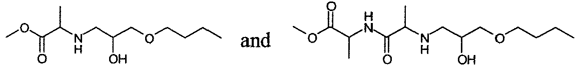 | 15.2 |
| | | butyl glycidyl ether | | |
| Example F-8 | F-8 | L-alanine methyl hydrochloride | 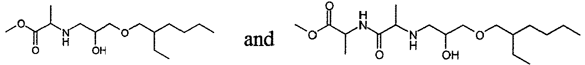 | 14.7 |
| | | 2-ethylhexyl glycidyl ether | | |
| Example F-9 | F-9 | L-alanine methyl hydrochloride | 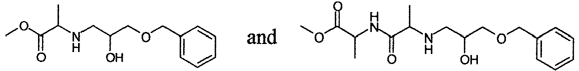 | 17.2 |
| | | benzyl glycidyl ether | | |
| Example F-10 | F-10 | DL-alanine | 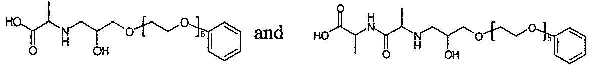 | 10.1 |
| | | phenol pentaethylene oxide glycidyl ether | | |
| Comparative Example F-1 | F-11 | allyl glycidyl ether | 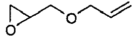 | 3.6 |
| Comparative Example F-2 | F-12 | glycine methyl hydrochloride | 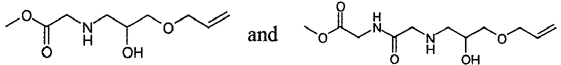 | 3.7 |
| | | allyl glycidyl ether | | |
| Comparative Example F-3 | F-13 | methyl α-aminoisobutyrate hydrochloride | 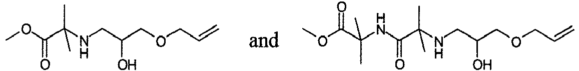 | 3.9 |
| | | allyl glycidyl ether | | |

| | | | | |
|---|---|---|---|---|
| * Oxygen absorption amount (40°C, 100%RH, after 28 days) | | | | |

The compounds that were obtained by using glycine methyl and methyl α-aminoisobutyrate, which each were an alkyl ester of an α-amino acid having no tertiary hydrogen at the α-position, slightly exhibited a oxygen absorption capability, which however was derived from the double bond of allyl glycidyl ether, and exhibited substantially no oxygen absorption at the α-position of the alkyl ester of an α-amino acid (Comparative Examples F-2 and F-3). On the other hand, the compound obtained by using an α-amino acid that has tertiary hydrogen at the α-position or an alkyl ester of an α-amino acid that has tertiary hydrogen at the α-position exhibits an oxygen absorption capability without the use of a transition metal (Examples F-1 to F-10).

### INDUSTRIAL APPLICABILITY

The oxygen absorber of the present invention exhibits a sufficient oxygen absorption capability without a metal contained. A stored article in a packaging material may be kept in a favorable state by mixing the oxygen absorber of the present invention in the packaging material or by placing the oxygen absorber, which has been filled in a small bag or the like, inside the packaging material.

## Claims

1. An oxygen absorber comprising: at least one of an amide compound represented by the following general formula (A-I); at least one of an amide compound represented by the following general formula (B-I); at least one of an imide compound represented by the following general formula (C-I); at least one of an ester compound represented by the following general formula (D-I); at least one of a compound represented by the following general formula (E-I); or at least one of a compound represented by any one of the following general formulae (F-I) to (F-III): 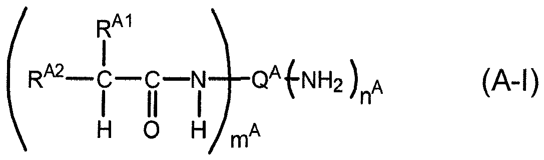 wherein R^{A1} represents a substituent; R^{A2} represents an electron donating group; m^{A} represents an integer of from 1 to 4; n^{A} represents an integer of from 0 to 3, provided that m^{A} + n^{A} is an integer of from 1 to 4; and Q^{A} represents an (m^{A} + n^{A})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, provided that Q^{A} does not contain a carboxyl group, 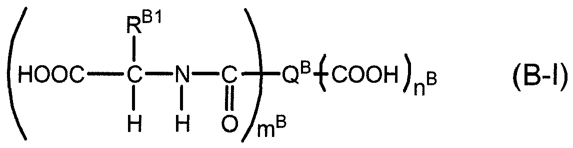 wherein R^{B1} represents a substituent; m^{B} represents an integer of from 1 to 4; n^{B} represents an integer of from 0 to 3, provided that m^{B} + n^{B} is an integer of from 1 to 4; and Q^{B} represents an (m^{B} + n^{B})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, provided that Q^{B} does not contain an amino group, 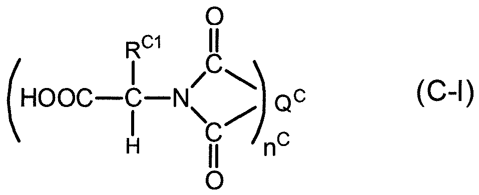 wherein R^{C1} represents a substituent; n^{C} represents an integer of 1 or 2; and Q^{C} represents a 2n^{C}-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, 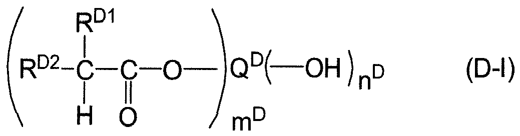 wherein R^{D1} represents a substituent; R^{D2} represents an electron donating group; m^{D} represents an integer of from 1 to 4; n^{D} represents an integer of from 0 to 3, provided that m^{D} + n^{D} is an integer of from 1 to 4; and Q^{D} represents an (m^{D} + n^{D})-valent group containing at least one group selected from the group consisting of an aromatic hydrocarbon group, a saturated or unsaturated alicyclic hydrocarbon group, a linear or branched and saturated or unsaturated aliphatic hydrocarbon group and a heterocyclic group, 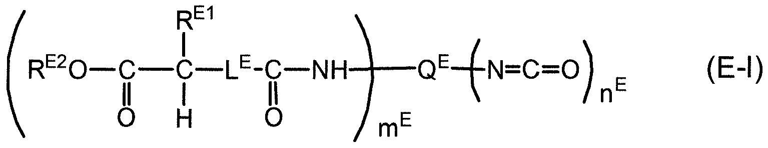 wherein R^{E1} represents a substituent; R^{E2} represents a hydrogen atom or a substituent; L^{E} represents an imino group, an ether group or a sulfide group; m^{E} represents an integer of from 1 to 4; n^{E} represents an integer of from 0 to 3, provided that m^{E} + n^{E} is from 1 to 4; and Q^{E} represents a hydrogen atom or an (m^{E} + n^{E})-valent group, 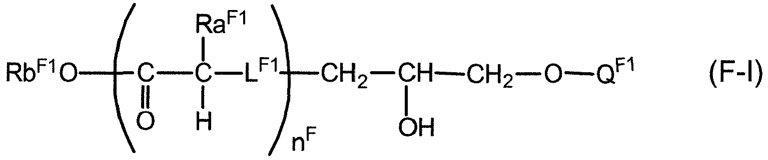 wherein Ra^{F1} represents a substituent; Rb^{F1} represents a hydrogen atom or a substituent; Q^{F1} represents a hydrogen atom or a substituent; L^{F1} represents an imino group, an ether group or a sulfide group; and n^{F} represents an integer of from 1 to 2, 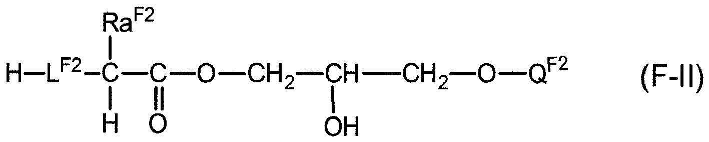 wherein Ra^{F2} represents a substituent; Q^{F2} represents a hydrogen atom or a substituent; and L^{F2} represents an imino group, an ether group, a sulfide group or a substituted or unsubstituted alkylene group, 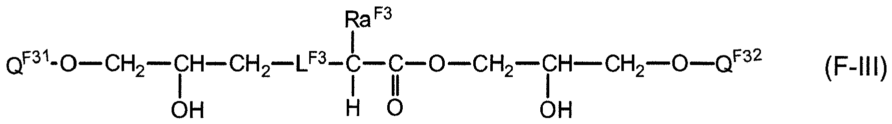 wherein Ra^{F3} represents a substituent; Q^{F31} and Q^{F32} each represent a hydrogen atom or a substituent; and L^{F3} represents an imino group, an ether group or a sulfide group.

2. The oxygen absorber according to claim 1, wherein the oxygen absorber contains at least one of an amide compound represented by the general formula (A-I).

3. The oxygen absorber according to claim 2, wherein in the general formula (A-I), R^{A1} represents a substituted or unsubstituted alkyl group having from 1 to 6 carbon atoms or a substituted or unsubstituted aryl group having from 6 to 10 carbon atoms; and R^{A2} represents an amino group, a hydroxyl group or a substituted or unsubstituted alkyl group having from 1 to 6 carbon atoms.

4. The oxygen absorber according to claim 1, wherein the oxygen absorber contains at least one of an amide compound represented by the general formula (B-I).

5. The oxygen absorber according to claim 4, wherein in the general formula (B-I), R^{B1} represents a substituted or unsubstituted alkyl group having from 1 to 6 carbon atoms or a substituted or unsubstituted aryl group having from 6 to 10 carbon atoms.

6. The oxygen absorber according to claim 1, wherein the oxygen absorber contains at least one of an imide compound represented by the general formula (C-I).

7. The oxygen absorber according to claim 6, wherein in the general formula (C-I), R^{C1} represents a substituted or unsubstituted alkyl group having from 1 to 6 carbon atoms or a substituted or unsubstituted aryl group having from 6 to 10 carbon atoms.

8. The oxygen absorber according to claim 1, wherein the oxygen absorber contains at least one of an ester compound represented by the general formula (D-I).

9. The oxygen absorber according to claim 8, wherein in the general formula (D-I), R^{D1} represents a substituted or unsubstituted alkyl group having from 1 to 6 carbon atoms or a substituted or unsubstituted aryl group having from 6 to 10 carbon atoms.

10. The oxygen absorber according to claim 1, wherein the oxygen absorber contains at least one of a compound represented by the general formula (E-I).

11. The oxygen absorber according to claim 10, wherein L^{E} represents an imino group.

12. The oxygen absorber according to claim 1, wherein the oxygen absorber contains at least one of a compound represented by any one of the general formulae (F-I) to (F-III).

13. The oxygen absorber according to claim 12, wherein L^{F1}, L^{F2} and L^{F3} each represent an imino group.

14. A resin composition comprising the oxygen absorber according to any one of claims 1 to 13 in an amount of from 1 to 30% by mass.
